# EUROPÄISCHE PATENTSCHRIFT

(11) **EP 3 373 769 B1**
(45) Veröffentlichungstag und Bekanntmachung des Hinweises auf die Patenterteilung: **10.07.2019**
(21) Anmeldenummer: 16717159.4
(22) Anmeldetag: 19.04.2016
(51) Int. Cl.: B68G 7/052, A47C 7/02, A47C 31/02, D03D 15/04, A47C 7/28

(54) **VERFAHREN ZUR HERSTELLUNG EINES TEXTILEN VERBUNDMATERIALS SOWIE AUF DIESE WEISE HERGESTELLTES TEXTILES VERBUNDMATERIAL**
METHOD FOR PRODUCING A TEXTILE COMPOSITE MATERIAL AND TEXTILE COMPOSITE MATERIAL PRODUCED ACCORDING TO SAID METHOD
PROCÉDÉ DE FABRICATION D'UN MATÉRIAU COMPOSITE TEXTILE AINSI QUE MATÉRIAU COMPOSITE TEXTILE FABRIQUÉ SELON CE PROCÉDÉ

(30) Priorität: 23.03.2016 DE 102016003418; 24.03.2016 DE 102016003494; 08.04.2016 DE 102016106446
(43) Veröffentlichungstag der Anmeldung: 19.09.2018
(73) Patentinhaber: k&r Textil GmbH & Co. KG, 41066 Mönchengladbach (DE)
(72) Erfinder: SALZMANN, Oliver, 47877 Willich (DE)
(74) Vertreter: Von Rohr Patentanwälte Partnerschaft mbB
(86) Internationale Anmeldenummer: PCT/EP2016/058644
(87) Internationale Veröffentlichungsnummer: WO 2017/162310

(56) Entgegenhaltungen:
- WO-A1-2015/114874
- JP-A- H0 615 070
- US-A1- 2006 080 817

## Beschreibung

Die vorliegende Erfindung betrifft das technische Gebiet der funktionalen Textilmaterialien, welche insbesondere im Bereich der Möbelindustrie vorzugsweise für Sitzmöbel, wie Stühle oder dergleichen, zur Ausbildung von insbesondere unterlage- bzw. unterbaufreien Bespannungen vorzugsweise für Rückenlehnen bzw. Sitzteilen oder dergleichen eingesetzt werden. In diesem Zusammenhang betrifft die vorliegende Erfindung insbesondere das Gebiet textiler Flächenmaterialien mit Schrumpfeigenschaften, insbesondere Wärmeschrumpfeigenschaften.

Insbesondere betrifft die vorliegende Erfindung ein Verfahren zur Herstellung eines textilen Verbundmaterials mit Wärmeschrumpfeigenschaften, vorzugsweise in Form eines wärmeschrumpfbaren textilen Polster- bzw. Bespannungsmaterials, vorzugsweise für Sitzmöbel.

Die vorliegende Erfindung betrifft zudem ein textiles Verbundmaterial mit Wärmeschrumpfeigenschaften als solches, welches durch das erfindungsgemäße Verfahren erhältlich ist, bzw. ein textiles Verbundmaterial mit Wärmeschrumpfeigenschaften, welches vorzugsweise in Form eines wärmeschrumpfbaren textilen Polster- bzw. Bespannungsmaterials, vorzugsweise für Sitzmöbel, vorliegt. In diesem Zusammenhang betrifft die vorliegende Erfindung auch ein wärmegeschrumpftes textiles Verbundmaterial, welches auf Basis des erfindungsgemäßen textilen Verbundmaterials mit Wärmeschrumpfeigenschaften erhalten werden kann.

Darüber hinaus betrifft die vorliegende Erfindung auch die Verwendung des textilen Verbundmaterials nach der Erfindung mit Wärmeschrumpfeigenschaften zur Erzeugung bzw. Bereitstellung eines entsprechend wärmegeschrumpften textilen Verbundmaterials. In diesem Zusammenhang betrifft die vorliegende Erfindung zudem ein entsprechendes Verfahren zur Herstellung des erfindungsgemäßen wärmegeschrumpften textilen Verbundmaterials als solches.

Die vorliegende Erfindung betrifft weiterhin die Verwendung des textilen Verbundmaterials nach der Erfindung mit Wärmeschrumpfeigenschaften bzw. des wärmegeschrumpften textilen Verbundmaterials nach der Erfindung im Bereich der Möbelindustrie, Automobilindustrie oder dergleichen sowie zur Herstellung von Möbelelementen, insbesondere Sitzmöbelelementen, und dergleichen.

Schließlich betrifft die vorliegende Erfindung auch ein Verfahren zur Herstellung von Möbelelementen, insbesondere Sitzmöbelelementen, wie Rückenlehnen bzw. Sitzelementen, sowie entsprechende Möbelelemente als solche.

Insbesondere im Bereich der Möbelindustrie werden an textile Flächenmaterialien, welche beispielsweise als Bezugsstoffe bzw. Bespannungen von Träger- bzw. Rahmenvorrichtungen insbesondere zur Bereitstellung von Rückenlehnen oder Sitzelementen bzw. Sitzflächen für Sitzmöbel oder dergleichen eingesetzt werden, hohe Anforderungen gestellt:
So ist es im Allgemeinen erforderlich, dass die als Bezugsstoffe bzw. Bespannungen eingesetzten textilen Flächenmaterialien über eine hohe mechanische Stabilität verfügen, um insbesondere bei der Verwendung als Rückenlehnen bzw. Sitzflächen die bei entsprechender Benutzung ("Hinsetzen") auftretenden Lasten bzw. Krafteinwirkungen aufnehmen zu können, wobei in diesem Zusammenhang die eingesetzten textilen Flächenmaterialien auch über entsprechende (Dehn-)Erholungseigenschaften verfügen sollen, um ein unerwünschtes dauerhaftes Ausbeulen der Bespannung bzw. einen entsprechenden Spannungsverlust auch nach intensiver bzw. langfristiger Nutzung des zugrundeliegenden Sitzmöbels zu vermeiden. Hierbei ist es insbesondere auch erforderlich, dass insbesondere im Bereich der Möbelindustrie, vorzugsweise für Sitzmöbel oder dergleichen, eingesetzte textile Flächenmaterialien eine hohe reversible Dehnbarkeit aufweisen. In diesem Zusammenhang kommt auch der dem textilen Flächenmaterial zugrundeliegenden Verschiebefestigkeit der eingesetzten Garne eine hohe Bedeutung zu, da eine entsprechend hohe Schiebefestigkeit (Schiebewiderstand) eine hohe mechanische Stabilität auch unter dauerhafter Aufrechterhaltung der Spannkraft im Anwendungsfall von Bespannungen insbesondere für Sitzmöbel ermöglicht. Die im Stand der Technik diesbezüglich bereitgestellten Flächenmaterialien sind jedoch nicht immer in der Lage, die vorgenannten Anforderungen in befriedigender Weise zu erfüllen.

Darüber hinaus ist es im Stand der Technik oftmals problematisch, faltenfreie Bezüge bzw. Bespannungen beispielsweise von Träger- bzw. (Spann-)Rahmenvorrichtungen für Sitzmöbel oder dergleichen herzustellen, insbesondere da es sich oftmals im Bereich der Befestigung des textilen Flächenmaterials auf bzw. an dem Träger bzw. (Spann-)Rahmen unerwünschte Falten oder dergleichen ausbilden. Im Hinblick auf die Bereitstellung möglichst faltenfreier Bezüge bzw. Bespannungen ist es in diesem Zusammenhang im Stand der Technik versucht worden, entsprechend exakte Zuschnitte bzw. Nähereien der eingesetzten textilen Flächenmaterialien bereitzustellen bzw. entsprechende Bezüge bzw. Bespannungen mehrteilig auszubilden, um eine entsprechende geometrische Anpassung an die Träger- bzw. (Spann-)Rahmenvorrichtung zu ermöglichen.

Ein derartiges Vorgehen ist jedoch produktionstechnisch aufwendig und zudem kostenintensiv, wobei darüber hinaus die Formgebung bzw. Gestaltungsfreiheit diesbezüglicher Bezüge bzw. Bespannungen reduziert ist. Zudem stellen entsprechende Nahtverbindungen, wie sie insbesondere bei mehrteiligen Ausbildungen der Bezüge bzw. Bespannungen erforderlich sind, um eine entsprechende Formanpassung zu ermöglichen, mitunter Schwachstellen hinsichtlich der Belastbarkeit und Dauerhaftigkeit der eingesetzten Materialien dar. Bei entsprechend aufwendigen bzw. komplexen Formgebungen der zu beziehenden bzw. zu bespannenden Möbel, wie Sitzmöbel, tritt zudem häufig eine unerwünschte Faltenbildung bzw. Ausbeulung im Bereich der zugrundeliegenden Geometrien, Formgebungen, Konturen, Verjüngungen, Bögen oder dergleichen der Träger- bzw. Rahmenvorrichtung auf.

Neben den hohen mechanischen Anforderungen ist es darüber hinaus gleichermaßen erforderlich, dass die als Bezugsstoffe bzw. Bespannungen eingesetzten textilen Flächenmaterialien einen entsprechenden Sitzkomfort bzw. eine hohe Ergonomie ermöglichen, einhergehend mit der Bereitstellung einer hohen Bequemlichkeit im Nutzungszustand, insbesondere im Zusammenhang mit Sitzmöbeln und dem diesbezüglichen Anwendungs- bzw. Einsatzbereich.

Im Rahmen der Herstellung insbesondere von Bespannungen für entsprechende Rückenlehnen bzw. Sitzelementen von Sitzmöbeln ist es im Stand der Technik oftmals vorgesehen, dass die entsprechenden Bezüge bzw. Bespannungen bereits unter (Vor-)Spannung auf eine Träger- bzw. Rahmenvorrichtung aufgebracht bzw. hieran fixiert werden, was jedoch gleichermaßen mit produktionstechnischen Nachteilen einhergeht.

Um hierbei insbesondere die Faltenbildung zu verringern, kann es im Stand der Technik im Allgemeinen vorgesehen sein, entsprechend elastisch ausgebildete Textilmaterialien einzusetzen. Derartige Materialien als solche eignen sich aber grundsätzlich nicht als Bezüge bzw. Bespannungen, welche insbesondere randseitig an einer Träger- bzw. Rahmenvorrichtung befestigt sind, da die in Rede stehenden Textilmaterialien mitunter nicht die für eine funktionale und dauerhafte Bespannung erforderliche (Eigen-)Spannkraft aufweisen.

In diesem Zusammenhang betrifft die WO 03/047395 A1 bzw. die zu derselben Patentfamilie gehörende EP 1 450 649 A1 bzw. die US 2003/122411 A1 einen dehnbaren Überzug für ein elastisches Kissen, wobei der in Rede stehende Überzug ein Gewebe mit einer gewissen elastischen Rückstellkraft aufweist.

Die US 2006/080817 A1 betrifft ein Verfahren zur Herstellung eines Artikels für Möbel, Beleuchtungsprodukte, architektonische Anwendungen, wonach eine wärmeschrumpfbare Vliesfaserhülle auf einen dreidimensionalen Drahtrahmen aufgebracht wird, so dass sich der Drahtrahmen innerhalb der Hülle befindet und die Hülle mindestens einen Teil des Drahtrahmens umgibt und wobei die Anordnung zudem erwärmt wird. Die Vliesfaserhülle verbindet sich mit dem Drahtrahmen, schrumpft und härtet unter Kühlung aus.

Darüber hinaus weisen die im Stand der Technik vorliegenden Bezugs- bzw. Bespannungssysteme oftmals keine reversibel komprimierbaren Strukturen auf, was den Sitzkomfort im Anwendungsfall von auf dieser Basis hergestellten Sitzmöbeln jedoch verringert, insbesondere was eine ergonomische Anpassung des Sitzmöbels bzw. der diesbezüglichen Bezüge bzw. Bespannungen an die Körperkonturen anbelangt.

Gleichzeitig besteht im Stand der Technik ein großer Bedarf nach effizienten Verfahren zur Bereitstellung entsprechender textiler Bezugs- bzw. Bespannungsmaterialien, wobei die zugrundeliegenden Verfahren zu leistungsfähigen Produkten führen sollen, welche anschließend einer Endverarbeitung (insbesondere Bespannung entsprechender Trägerstrukturen, wie Träger- bzw. Rahmenvorrichtungen von Sitzmöbeln oder dergleichen, zur Bereitstellung insbesondere von Sitzmöbeln oder dergleichen) zugeführt werden können, wobei gleichzeitig eine hohe Flexibilität und Variabilität hinsichtlich der konkreten Ausbildung der zugrundeliegenden Produkte bei gleichzeitig hoher Verfahrensökonomie und Kosteneffizienz gefordert ist, was im Stand der Technik so mitunter nicht hinreichend gegeben ist.

Vor diesem Hintergrund besteht somit eine Aufgabe der vorliegenden Erfindung darin, ein spezielles textilbasiertes Material sowie ein Verfahren zur Herstellung des textilbasierten Materials bereitzustellen, wobei die zuvor geschilderten Nachteile des Standes der Technik vermieden oder aber zumindest abgeschwächt werden sollen. Insbesondere soll im Rahmen der vorliegenden Erfindung ein textilbasiertes Material bereitgestellt werden, welches sich insbesondere als Polster- bzw. Bespannungsmaterial für Sitzmöbel und diesbezüglich insbesondere zur Ausbildung bzw. Bereitstellung von Rückenlehnen sowie von Sitzelementen bzw. -flächen eignet.

In diesem Zusammenhang besteht eine weitere Aufgabe der vorliegenden Erfindung darin, ein textilbasiertes Material bzw. ein diesbezügliches Verfahren zu dessen Herstellung bereitzustellen, wobei das Material insbesondere im Rahmen der Verwendung als Polster- bzw. Bespannungsmaterial einen faltenfreien Bezug bzw. eine entsprechend faltenfreie Bespannung von zugrundeliegenden Träger- bzw. Rahmenvorrichtungen bzw. -konstruktionen, insbesondere für Sitzmöbel, wie Stühle oder dergleichen, ermöglichen soll. Zudem soll das erfindungsgemäß bereitgestellte textilbasierte Material gleichzeitig über gute reversible Dehnbarkeitseigenschaften bzw. eine hohe Dehnerholung auch nach hoher kraftmäßiger Beanspruchung verfügen.

Eine wiederum weitere Aufgabe der vorliegenden Erfindung ist zudem darin zu sehen, ein spezielles textilbasiertes Material bereitzustellen, welches bei gleichzeitig hoher Belastungsfähigkeit bzw. Stabilität insbesondere im Rahmen der Verwendung als Polster- bzw. Bespannungsmaterial, vorzugsweise für Sitzmöbel oder dergleichen, eine hohe Bequemlichkeit bzw. verbesserte (sitz-)ergonomische Eigenschaften aufweist.

Zudem soll im Rahmen der vorliegenden Erfindung gemäß einer nochmals weiterführenden Aufgabe der vorliegenden Erfindung ein insgesamt produktionstechnisch vereinfachtes und weniger kostenintensives Verfahren zur Herstellung des in Rede stehenden textilbasierten Materials bereitgestellt werden, anhand dessen eine hohe Flexibilität und Variabilität hinsichtlich der Ausbildung konkreter Produkte gewährleistet ist.

Die der vorliegenden Erfindung zugrundeliegende Aufgabe wird vorliegend - gemäß einem **ersten** Aspekt der vorliegenden Erfindung - durch ein Verfahren zur Herstellung eines textilen Verbundmaterials mit Wärmeschrumpfeigenschaften, vorzugsweise in Form eines wärmeschrumpfbaren textilen Polster- bzw. Bespannungsmaterials, vorzugsweise für Sitzmöbel, gemäß Anspruch 1 gelöst. Weitere, vorteilhafte Ausgestaltungen des erfindungsgemäßen Verfahrens sind Gegenstand der diesbezüglichen Unteransprüche.

Weiterer Gegenstand der vorliegenden Erfindung - gemäß einem **zweiten** Erfindungsaspekt - ist das gemäß dem Verfahren nach der vorliegenden Erfindung erhältliche textile Verbundmaterial gemäß Anspruch 6 bzw. das textile Verbundmaterial mit Wärmeschrumpfeigenschaften als solches gemäß Anspruch 7. Weitere, vorteilhafte Ausgestaltungen des erfindungsgemäßen textilen Verbundmaterials mit Wärmeschrumpfeigenschaften sind Gegenstand des diesbezüglichen Unteranspruchs.

Weiterer Gegenstand der vorliegenden Erfindung - gemäß einem **dritten** Erfindungsaspekt - ist das wärmegeschrumpfte textile Verbundmaterial gemäß Anspruch 9. Weitere, vorteilhafte Ausgestaltungen des wärmegeschrumpften textilen Verbundmaterials sind Gegenstand des diesbezüglichen Unteranspruchs.

Wiederum weiterer Gegenstand der vorliegenden Erfindung - gemäß einem **vierten** Aspekt der vorliegenden Erfindung - ist die Verwendung des textilen Verbundmaterials nach der Erfindung mit Wärmeschrumpfeigenschaften zur Erzeugung bzw. Herstellung des wärmegeschrumpften textilen Verbundmaterials nach der Erfindung gemäß Anspruch 11.

Nochmals weiterer Gegenstand der vorliegenden Erfindung - gemäß einem **fünften** Aspekt der vorliegenden Erfindung - ist das Verfahren zur Herstellung des wärmegeschrumpften textilen Verbundmaterials nach der Erfindung gemäß Anspruch 12.

Zudem ist weiterer Gegenstand der vorliegenden Erfindung - gemäß einem **sechsten** Aspekt der vorliegenden Erfindung - die Verwendung des textilen Verbundmaterials mit Wärmeschrumpfeigenschaften, bzw. des wärmegeschrumpften textilen Verbundmaterials nach der Erfindung im Bereich der Möbelindustrie, Automobilindustrie oder dergleichen gemäß Anspruch 13.

In diesem Zusammenhang ist auch Gegenstand der vorliegenden Erfindung - gemäß einem **siebten** Aspekt der vorliegenden Erfindung - die Verwendung der in Rede stehenden textilen Verbundmaterialien zur Herstellung von Möbelelementen, insbesondere Sitzmöbelelementen, gemäß Anspruch 13.

Gegenstand der vorliegenden Erfindung - gemäß einem **achten** Aspekt der vorliegenden Erfindung - ist zudem das Verfahren zur Herstellung von Möbelelementen, insbesondere Sitzmöbelelementen, gemäß Anspruch 14.

Schließlich sind Gegenstand der vorliegenden Erfindung - gemäß einem **neunten** Aspekt der vorliegenden Erfindung - Möbelelemente als solche, insbesondere Sitzmöbelelemente, gemäß Anspruch 15.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten bzw. standardisierten oder explizit angegebenen Bestimmungsverfahren oder aber anderenfalls mit dem Fachmann auf diesem Gebiet an sich geläufigen Bestimmungs- bzw. Messmethoden ermittelt bzw. bestimmt werden können. Sofern nicht anders angegeben, werden die zugrundeliegenden Werte bzw. Parameter unter Standardbedingungen (d. h. insbesondere bei einer Temperatur von 20 °C und/oder bei einem Druck von 1.013,25 hPa bzw. 1,01325 bar) ermittelt.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben und erläutert, und zwar auch anhand von erfindungsgemäße Ausführungsformen bzw. Ausführungsbeispiele darstellenden Zeichnungen bzw. Figurendarstellungen. Im Zusammenhang mit der Erläuterung dieser bevorzugten Ausführungsformen bzw. Ausführungsbeispiele der vorliegenden Erfindung, welche jedoch in Bezug auf die vorliegende Erfindung keinesfalls beschränkend sind, werden auch weitergehende Vorteile, Eigenschaften und Merkmale der vorliegenden Erfindung aufgezeigt.

Gegenstand der vorliegenden Erfindung - gemäß einem **ersten** Aspekt der vorliegenden Erfindung - ist somit ein Verfahren zur Herstellung eines textilen Verbundmaterials mit Wärmeschrumpfeigenschaften, vorzugsweise in Form eines wärmeschrumpfbaren textilen Polster- und/oder Bespannungsmaterials, vorzugsweise für Sitzmöbel,
wobei eine wärmeschrumpfbare textile Trägerschicht mit mindestens einem schaumstoffbasierten Flächenmaterial, insbesondere Schaumstoffschicht, unter Verwendung mindestens eines Bindemittels, insbesondere Klebstoffs, bei einer Temperatur unterhalb der Wärmeschrumpftemperatur der textilen Trägerschicht verbunden, vorzugsweise flächig verbunden, insbesondere verklebt, wird und
wobei das schaumstoffbasierte Flächenmaterial auf der der textilen Trägerschicht abgewandten Seite mit mindestens einem insbesondere flächigen textilen Gleit- und/oder Schutzmaterial versehen wird.

Durch das erfindungsgemäße Verfahren wird somit ein spezielles textiles Verbundmaterial mit Wärmeschrumpfeigenschaften bereitgestellt, welches mit dem zentralen Vorteil verbunden ist, dass das Material aufgrund der definierten Schrumpfeigenschaften beispielsweise unmittelbar auf eine Träger- bzw. Rahmenvorrichtung (d.h. insbesondere Träger- bzw. Rahmenvorrichtung zur Aufnahme textiler Bespannungen oder dergleichen) zur Bereitstellung beispielsweise von Rückenlehnen bzw. Sitzelementen für Sitzmöbel fixiert bzw. aufgespannt werden kann, wobei durch einen nachfolgend durchzuführenden Wärmeschrumpf des aufgespannten Verbundmaterials eine faltenfreie und kraftmäßig beanspruchbare Bespannung der entsprechenden Träger- bzw. Rahmenvorrichtung resultiert. Dabei ist ein weiterer zentraler Vorteil darin zu sehen, dass das durch das erfindungsgemäße Verfahren bereitgestellte textile Verbundmaterial insbesondere aufgrund der gezielten Bereitstellung eines (druck-)komprimierbaren schaumstoffbasierten Flächenmaterials bei gleichzeitig faltenfreiem Bezug bzw. faltenfreier Bespannung eine effiziente Polsterung und somit eine hohe Ergonomie bzw. im Fall der Anwendung für Sitzmöbel, wie Stühlen, einen hohen Sitzkomfort ermöglicht. Das erfindungsgemäße textile Verbundmaterial vereint somit die diametral entgegengesetzten Eigenschaften der Bereitstellung eines hohen Sitzkomforts einerseits und einer nach Durchführung des Wärmeschrumpfens infolge der resultierenden hohen (Eigen-)Spannung faltenfreien und kraftmäßig dauerhaft beanspruchbaren Bespannung der zugrundeliegenden Träger- bzw. Rahmenvorrichtung andererseits.

Auf Basis des erfindungsgemäßen Verfahrens wird somit ein textiles Verbundmaterial mit Schrumpfeigenschaften bereitgestellt, welches bereits als solches über entsprechende Polstereigenschaften verfügt, so dass ein nachträgliches Aufpolstern, welches verfahrenstechnisch aufwendig ist, entfallen kann. Insbesondere wird aufgrund des erfindungsgemäßen Verfahrens ein anwendungsfertiges Material bereitgestellt, welches im Hinblick auf den jeweiligen Anwendungseinsatz individuell zugeschnitten werden kann. Insbesondere kann im Rahmen der vorliegenden Erfindung auch das nachträgliche Aufbringen zusätzlich stabilisierender Strukturen sowie die Ergonomie verbessernder Elemente, wie Schaumstoffpolster oder dergleichen, entfallen, da das anwendungsfertige textile Verbundmaterial sozusagen direkt ohne weitere stabilisierende bzw. stützende Maßnahmen auf eine Träger- bzw. Rahmenvorrichtung insbesondere freitragend aufgespannt werden kann.

In diesem Zusammenhang ist ein Vorteil der vorliegenden Erfindung auch darin zu sehen, dass das textile Verbundmaterial mit Wärmeschrumpfeigenschaften dahingehend auf eine Träger- bzw. Rahmenvorrichtung bzw. -konstruktion aufgebracht bzw. hieran fixiert werden kann, dass diesbezüglich ein exakter bzw. aufwendiger Zuschnitt bzw. eine exakte Näherei grundsätzlich nicht erforderlich ist, insbesondere da das textile Verbundmaterial im Allgemeinen als einstückiges Material eingesetzt werden kann. Denn durch das vorzugsweise nach dem An- bzw. Aufbringen auf eine Träger- bzw. Rahmenvorrichtung durchzuführende Wärmeschrumpfen wird aufgrund der Wärmeschrumpfeigenschaften des textilen Verbundmaterials nach der Erfindung das textile Flächenmaterial nach der Erfindung auf dem Träger bzw. Rahmen gewissermaßen glattgezogen und aufgespannt bzw. unter (Eigen-) Spannung gesetzt, so dass ein zumindest im Wesentlichen faltenfreier Bezug bzw. eine faltenfreie Bespannung resultiert, welche gleichzeitig über die in Rede stehenden Polstereigenschaften verfügt. Durch den Wärmeschrumpfungsprozess wird auch eine definierte (Eigen-)Spannung des zuvor auf eine Träger- bzw. Rahmenstruktur aufgebrachten erfindungsgemäßen textilen Verbundmaterials aufgebaut, so dass aufgrund der Vorspannung eine hohe kraftmäßige Belastbarkeit resultiert, und zwar ohne dass das erfindungsgemäße textile Verbundmaterial übermäßig gedehnt wird bzw. sich übermäßig ausbeult und ohne dass eine Abtrennung bzw. Delaminierung der auf das Trägermaterial aufgebrachten Schichten vorliegt.

In diesem Zusammenhang wird zudem gewährleistet, dass das auf die wärmeschrumpfbare textile Trägerschicht aufgebrachte schaumstoffbasierte Flächenmaterial nicht delaminiert bzw. während des Wärmeschrumpfens sich nicht von der textilen Trägerschicht ablöst, was insbesondere durch den Einsatz eines sehr speziellen Bindemittels, insbesondere Klebstoffs, gewährleistet ist. Erfindungsgemäß wird somit eine fest verbundene Einheit der jeweiligen Schichten, insbesondere auf Basis der textilen Trägerschicht einerseits und des schaumstoffbasierten Flächenmaterials und des Gleit- bzw. Schutzmaterials andererseits bereitgestellt, was das insbesondere nach Aufbringen bzw. Anbringen des Verbundmaterials auf eine Träger- bzw. Rahmenvorrichtung durchzuführende Wärmeschrumpfen vereinfacht.

Wie nachfolgend noch angeführt, kann das durch das erfindungsgemäße Verfahren bereitgestellte textile Verbundmaterial weiterhin mit einem textilen Ober- bzw. Abdeckmaterial ausgerüstet werden, so dass das textile Verbundmaterial hinsichtlich seiner Oberflächeneigenschaften, insbesondere Optik sowie Haptik, und seiner textilen Eigenschaften individuell eingestellt bzw. maßgeschneidert werden kann.

In diesem Zusammenhang führt zudem die gezielte Verwendung des textilen Gleit- bzw. Schutzmaterials, welches im Allgemeinen zwischen dem schaumstoffbasierten Flächenmaterial einerseits und dem textilen Ober- bzw. Abdeckmaterial angeordnet ist, zu einer hohen bzw. verbesserten Kompatibilität der eingesetzten Flächenmaterialien insgesamt, insbesondere was einen weiterführenden Schutz des schaumstoffbasierten Flächenmaterials durch Bereitstellung bzw. Ermöglichung eines gezielten "Gleitens" des textilen Ober- bzw. Abdeckmaterials auf dem Gleit- bzw. Schutzmaterial bzw. dem textilen Verbundmaterial insgesamt anbelangt, was der Ausbildung von Falten bzw. Ausbeulungen und einem übermäßigen Verschleiß zusätzlich entgegenwirkt.

Wie nachfolgend noch im Detail angeführt, werden im Rahmen des erfindungsgemäßen Verfahrens die Wärmeschrumpfeigenschaften der textilen Trägerschicht des erfindungsgemäß bereitgestellten textilen Verbundmaterials durch den gezielten Einsatz eines wärmeschrumpfbaren Kunststoffgarns, welches Bestandteil der textilen Trägerschicht ist, bereitgestellt. Hierdurch können die Schrumpfeigenschaften gezielt vorgegeben bzw. eingestellt werden.

Darüber hinaus weist das mit dem erfindungsgemäßen Verfahren hergestellte textile Verbundmaterial optimierte reversible Dehneigenschaften auf, was dazu führt, dass das textile Verbundmaterial nach der Erfindung, welches in wärmegeschrumpfter Form auf einer Träger- bzw. Rahmenvorrichtung, beispielsweise zur Bereitstellung einer Rückenlehne- bzw. Sitzfläche eines Stuhls oder dergleichen, aufgebracht ist, sich weiterführend an die Körperkontur eines Nutzers anpassen kann, so dass auch auf dieser Basis und in Verbindung mit dem schaumstoffbasierten Flächenmaterial eine hohe (Sitz-)Ergonomie resultiert. In diesem Zusammenhang ist ein weiterer Vorteil darin zu sehen, dass nach einer kraftmäßigen Beanspruchung, welche mit einer Dehnung bzw. einem Ausbeulen des textilen Verbundmaterials nach der Erfindung einhergehen kann, das textile Verbundmaterial nach der Erfindung aufgrund der hohen Rückstellkraft der textilen Trägerschicht gewissermaßen wieder seine ursprüngliche Form annimmt, so dass erfindungsgemäß gleichermaßen hervorragende Dehnerholungseigenschaften bereitgestellt werden. Diese können, wie nachfolgend angeführt, durch den gezielten Einsatz von dehnbaren Garnen bzw. Fasern, wie Elastomer- bzw. Gummifäden bzw. -garne hervorgerufen bzw. weiterführend verbessert werden.

Das erfindungsgemäße Verfahren führt somit zu einem leistungsfähigen textilen Verbundmaterial mit definierten Schrumpfeigenschaften bei hoher Bequemlichkeit und hoher Stabilität des zugrundeliegenden Schichtverbundes. Das erfindungsgemäße Verfahren ermöglicht dabei gleichzeitig eine hohe Flexibilität bzw. Variabilität hinsichtlich der konkreten Ausbildung und Anpassung des textilen Verbundmaterials in Bezug auf den jeweiligen Einsatzzweck.

Insbesondere wird durch die sehr spezielle erfindungsgemäße Konzeption der Verwendung eines speziellen Bindemittels, insbesondere Klebstoffs, welcher nämlich unterhalb der für die Schrumpfung des Materials vorgesehenen Temperaturen verklebt bzw. Klebe(ver)bindungen ausbildet bzw. welcher bei den im Rahmen des Schrumpfens vorliegenden Temperaturen nicht unter Abbau der Klebeverbindungen schmilzt bzw. zerfällt, gewährleistet, dass ein auch bei der weiterführenden Verarbeitung in Form der Wärmeschrumpfung stabiler (Schicht-)Verbund des erfindungsgemäß bereitgestellten Materials vorliegt.

Dabei zeichnet sich das erfindungsgemäße Verfahren zudem durch eine hohe Verfahrensökonomie bzw. Kosteneffizienz aus.

Ein weiterer Vorteil des textilen Verbundmaterials nach der Erfindung, wie es durch das erfindungsgemäße Verfahren bereitgestellt wird, besteht darin, dass aufgrund der Wärmeschrumpfeigenschaften eine hohe Flexibilität in Bezug auf die zu beziehende bzw. zu bespannende Träger- bzw. Rahmenstruktur vorliegt, wobei auch stark ausgeprägte Geometrien bzw. Formgebungen und Konturen, wie Verjüngungen, Bögen, Biegungen und dergleichen in effektiver Weise unter Vermeidung einer übermäßigen Faltenbildung bedeckt bzw. bespannt werden können.

Erfindungsgemäß wird in diesem Zusammenhang unter dem Begriff "wärmeschrumpfbar" insbesondere eine durch Wärme- bzw. Temperatureinfluss hervorgerufene bzw. induzierte Größenänderung insbesondere in der Fläche und somit insbesondere in der Haupterstreckungsebene bzw. in mindestens eine Erstreckungsrichtung des textilen Verbundmaterials bzw. der textilen Trägerschicht des textilen Verbundmaterials verstanden, wobei dies insbesondere durch eine Verkürzung bzw. Längenverringerung des erfindungsgemäß eingesetzten wärmeschrumpfbaren Kunststoffgarns hervorgerufen wird, wobei in Bezug auf das wärmeschrumpfbare Kunststoffgarn im Rahmen des Schrumpfens gleichermaßen eine Verdickung, d. h. eine Erhöhung des Durchmessers, des Kunststoffgarns vorliegen kann. Bei dem Wärmeschrumpfen handelt es sich im Rahmen der vorliegenden Erfindung somit insbesondere um eine kontrollierte Größen- bzw. Längenverringerung des eingesetzten Kunststoffgarns und damit der textilen Trägerschicht des textilen Verbundmaterials. Insbesondere handelt es sich bei der erfindungsgemäß im Rahmen der nachfolgenden Verarbeitung des erfindungsgemäß bereitgestellten Verbundmaterials vorliegenden Wärmeschrumpfung um einen zumindest im Wesentlichen irreversiblen Schrumpfungsprozess.

In diesem Zusammenhang ist der Begriff "Schrumpftemperatur" bzw. "Wärmeschrumpftemperatur", wie er im Rahmen der vorliegenden Erfindung verwendet wird, insbesondere derart zu verstehen, dass bei der entsprechenden Temperatur ein effektiver Wärmeschrumpf insbesondere des dem erfindungsgemäßen Verbundmaterial zugrundeliegenden textilen Trägermaterials mit Wärmeschrumpfeigenschaften vorliegt.

Im Folgenden wird die vorliegende Erfindung anhand bevorzugter Ausführungsbeispiele darstellenden Zeichnungen bzw. Figurendarstellung näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung beschrieben.

In den Figurendarstellungen zeigt:
- Fig. 1A: eine schematische Darstellung der erfindungsgemäßen Verfahrensführung zum Erhalt des textilen Verbundmaterials mit Wärmeschrumpfeigenschaften gemäß einer ersten erfindungsgemäßen Ausführungsform, wonach zunächst das Gleit- bzw. Schutzmaterial auf das schaumstoffbasierte Flächenmaterial und das schaumstoffbasierte Flächenmaterial zusätzlich bzw. zeitgleich auf die textile Trägerschicht aufgebracht wird, gefolgt von einem Aufbringen des Ober- und Abdeckmaterials;
- Fig. 1B: eine weitere schematische Darstellung der erfindungsgemäßen Verfahrensführung gemäß einer weiteren Ausführungsform der vorliegenden Erfindung, wonach zunächst das schaumstoffbasierte Flächenmaterial mit einem textilen Gleit- bzw. Schutzmaterial versehen wird und anschließend der Verbund auf das textile Trägermaterial aufgebracht wird, gefolgt von einem Aufbringen des Ober- bzw. Abdeckmaterials;
- Fig. 1C: eine nochmals weitere schematische Darstellung der erfindungsgemäßen Verfahrensführung gemäß einer nochmals weiteren Ausführungsform, wonach zunächst das schaumstoffbasierte Flächenmaterial mit der textilen Trägerschicht verbunden wird, gefolgt von einem Aufbringen des textilen Gleit- bzw. Schutzmaterials mit anschließendem Aufbringen des Ober- bzw. Abdeckmaterials;
- Fig. 2A: eine schematische Schnittdarstellung eines erfindungsgemäßen textilen Verbundmaterials, wonach die wärmeschrumpfbare textile Trägerschicht, das schaumstoffbasierte Flächenmaterial und das textile Gleitbzw. Schutzmaterial eine Laminatstruktur ausbilden;
- Fig. 2B: eine schematische Schnittdarstellung eines weiteren erfindungsgemäßen textilen Verbundmaterials, wonach das in Fig. 2A beschriebene textile Verbundmaterial zusätzlich mit einem textilen Ober- bzw. Abdeckmaterial beaufschlagt ist;
- Fig. 3A: eine schematische Darstellung der wärmeschrumpfbaren textilen Trägerschicht in der Draufsicht, wonach die Trägerschicht in Form eines Gewebes ausgebildet ist;
- Fig. 3B: eine schematische Darstellung der wärmeschrumpfbaren textilen Trägerschicht gemäß einer weiteren erfindungsgemäßen Ausführungsform, wonach die Trägerschicht in Form eines Gewirkes ausgebildet ist;
- Fig. 4A: eine schematische Darstellung eines wärmegeschrumpften textilen Verbundmaterials nach der Erfindung mit der diesbezüglichen Schicht- bzw. Materialabfolge und der wärmegeschrumpften textilen Trägerschicht.

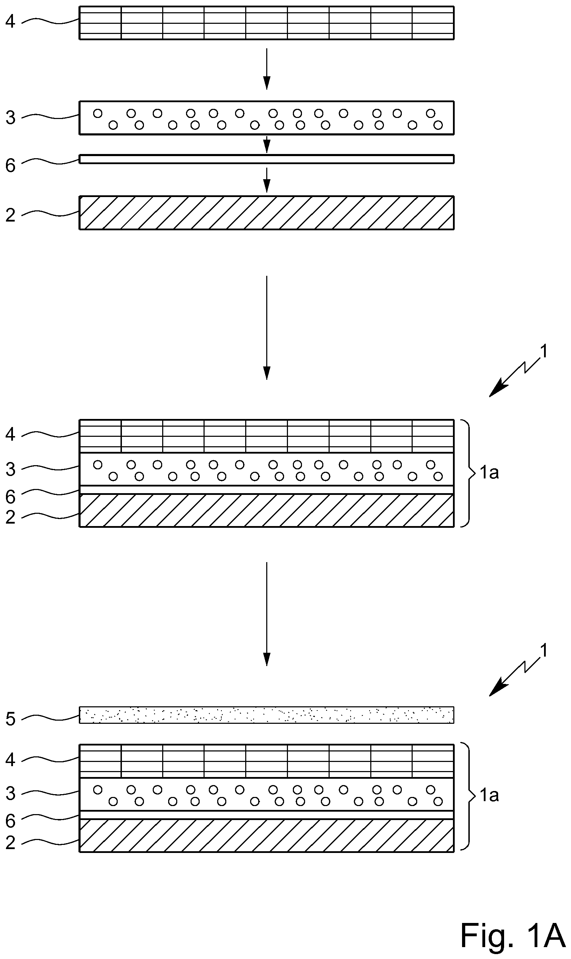

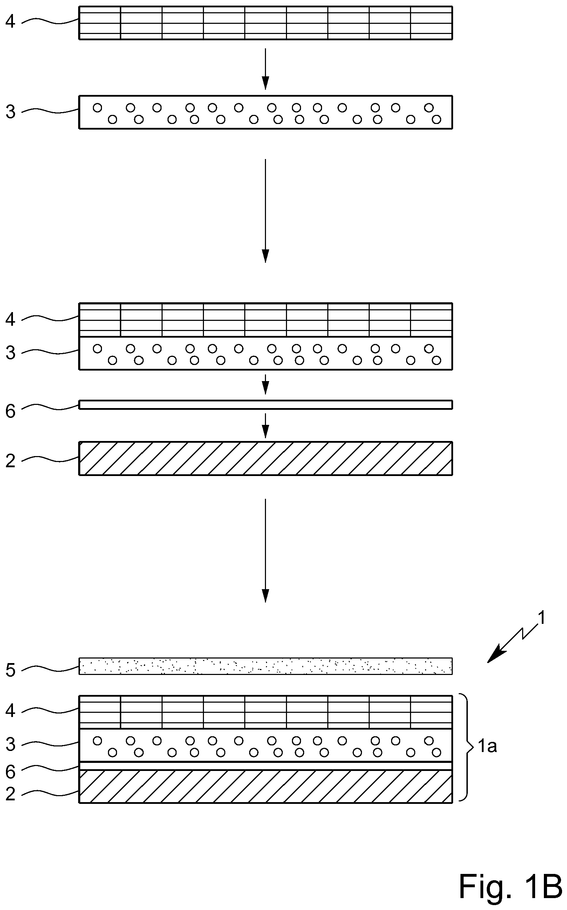

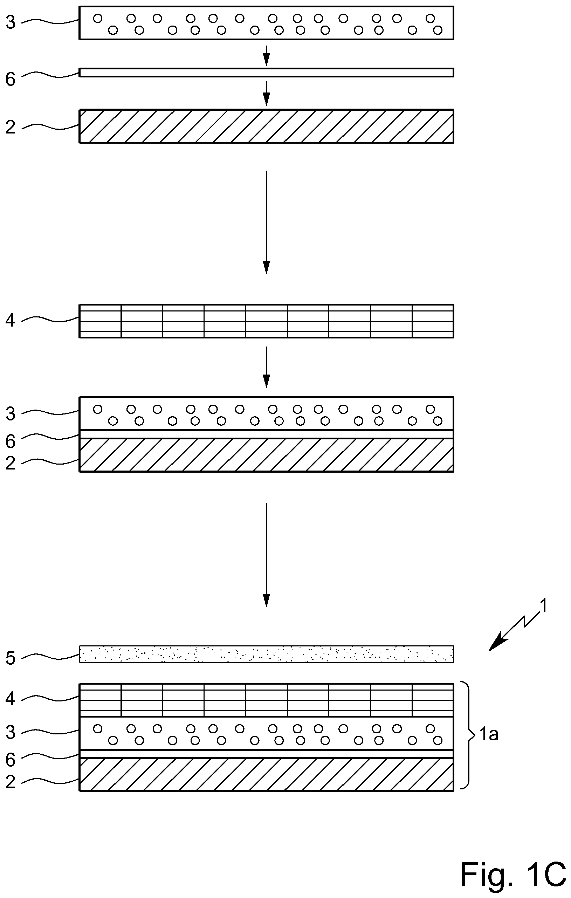

Fig. 1A, 1B und 1C zeigen somit die dem erfindungsgemäßen Verfahren zugrundeliegende Verfahrensführung: Insbesondere zeigen die Figuren das erfindungsgemäße Verfahren zur Herstellung eines textilen Verbundmaterials 1 mit Wärmeschrumpfeigenschaften vorzugsweise in Form eines wärmeschrumpfbaren textilen Polster- und/oder Bespannungsmaterials, vorzugsweise für Sitzmöbel,
wobei eine wärmeschrumpfbare textile Trägerschicht 2 mit mindestens einem schaumstoffbasierten Flächenmaterial 3, insbesondere Schaumstoffschicht, unter Verwendung mindestens eines Bindemittels 6, insbesondere Klebstoffs, bei einer Temperatur unterhalb der Wärmeschrumpftemperatur der textilen Trägerschicht 2 verbunden, vorzugsweise flächig verbunden, insbesondere verklebt, wird und wobei das schaumstoffbasierte Flächenmaterial 3 auf der der textilen Trägerschicht 2 abgewandten Seite mit mindestens einem insbesondere flächigen textilen Gleit- und/oder Schutzmaterial 4 versehen wird.

Insbesondere kann das textile Verbundmaterial 1, insbesondere das Gleit- bzw. Schutzmaterial 4, mit mindestens einem textilen Ober- und/oder Abdeckmaterial 5 ausgerüstet und/oder beaufschlagt werden bzw. dieses aufweisen. Insbesondere kann das textile Ober- bzw. Abdeckmaterial 5 auf der dem schaumstoffbasierten Flächenmaterial 3 abgewandten Seite des textilen Gleit- und/oder Schutzmaterials 4 aufgebracht werden, wie in Fig. 1A bis 1C dargestellt.

Fig. 1A, 1B und 1C zeigen zudem, dass gemäß dem erfindungsgemäßen Verfahren auf das Gleit- bzw. Schutzmaterial 4 mindestens ein textiles Ober- bzw. Abdeckmaterial 5 aufgebracht werden kann. Das Aufbringen des textilen Ober- bzw. Abdeckmaterials 5 kann insbesondere auf der dem schaumstoffbasierten Flächenmaterial 3 abgewandten Seite des textilen Gleit- und/oder Schutzmaterials 4 erfolgen.

Erfindungsgemäß kann es im Allgemeinen auch vorgesehen sein, dass das textile Verbundmaterial 1, insbesondere das Gleit- und/oder Schutzmaterial 4, mit mindestens einem textilen Ober- und/oder Abdeckmaterial 5 ausgerüstet und/oder beaufschlagt wird, wobei das Ober- und/oder Abdeckmaterial 5 auf der dem schaumstoffbasierten Flächenmaterial 3 zugewandten Seite mit dem Gleit- und/oder Schutzmaterial 4 ausgerüstet bzw. beaufschlagt, vorzugsweise verbunden, insbesondere verklebt und/oder kaschiert, ist. Demnach kann zunächst eine sozusagen vorgeschaltete Ausrüstung des Ober- und/oder Abdeckmaterials 5 mit dem Gleit- und/oder Schutzmaterial 4 erfolgen, insbesondere gefolgt von einem Aufbringen bzw. einer Befestigung des Verbundes aus Ober- und/oder Abdeckmaterial 5 und Gleit- und/oder Schutzmaterial 4 auf dem schaumstoffbasierten Flächenmaterial 3, welches wiederrum zuvor auf der textilen Trägerschicht 2 aufgebracht sein kann.

Erfindungsgemäß kann insbesondere derart vorgegangen werden, dass die nachfolgend angeführten Schichten bzw. Materialien ein Laminat bzw. ein Laminatmaterial 1a innerhalb des erfindungsgemäß bereitgestellten Verbundmaterials 1 ausbilden:
So kann erfindungsgemäß beispielsweise derart vorgegangen werden, wie in Fig. 1A gezeigt, dass zunächst die textile Trägerschicht 2, das schaumstoffbasierte Flächenmaterial 3 und das textile Gleit- bzw. Schutzmaterial 4 insbesondere zur Ausbildung bzw. Bereitstellung des Laminatmaterials 1a miteinander verbunden, vorzugsweise flächig verbunden, insbesondere verklebt, werden. Diesbezüglich kann gegebenenfalls nachfolgend eine Ausrüstung bzw. Beaufschlagung mit dem textilen Ober- bzw. Abdeckmaterial 5, insbesondere zum Erhalt des Verbundmaterials 1, erfolgen.

Erfindungsgemäß kann dabei derart vorgegangen werden, dass die Ausrüstung bzw. Beaufschlagung mit dem textilen Ober- bzw. Abdeckmaterial 5 nach dem Verbinden, vorzugsweise flächigen Verbinden, insbesondere Verkleben, der textilen Trägerschicht 2, des schaumstoffbasierten Flächenmaterials 3 und des textilen Gleit- bzw. Schutzmaterials 4 und/oder nach der Ausbildung bzw. Bereitstellung des Laminatmaterials 1a durchgeführt wird, wie insbesondere in Fig. 1A bis 1C dargestellt.

In diesem Zusammenhang kann somit insbesondere die Beaufschlagung bzw. Ausrüstung mit dem textilen Ober- bzw. Abdeckmaterial 5 zeitlich und/oder örtlich getrennt von der Herstellung des Laminatmaterials 1a erfolgen, was mit dem Vorteil verbunden ist, dass eine individuelle Konfektionierung des erfindungsgemäßen Verbundmaterials 1 erst im Rahmen der Weiterverarbeitung insbesondere zu Rücklehnen bzw. Sitzelementen für Sitzmöbel beim Hersteller entsprechender Möbelelemente erfolgen kann. Erfindungsgemäß kann somit insbesondere derart vorgegangen werden, dass zunächst das Laminatmaterial 1a, wie zuvor angeführt, ausgebildet bzw. bereitgestellt wird und anschließend das textile Ober- bzw. Abdeckmaterial 5 insbesondere zum Erhalt des Verbundmaterials 1 aufgebracht wird.

Gleichermaßen liegt es jedoch im Rahmen der vorliegenden Erfindung, wenn zunächst das textile Gleit- und/oder Schutzmaterial 4 und das textile Ober- und/oder Abdeckmaterial 5 miteinander zumindest abschnittsweise verbunden, insbesondere verklebt und/oder kaschiert, werden, und anschließend das mit dem Ober- und/oder Abdeckmaterial 5 versehene Gleit- und/oder Schutzmaterial 4, insbesondere auf der dem Ober- und/oder Abdeckmaterial 5 abgewandten Seite, mit dem schaumstoffbasierten Flächenmaterial 3 verbunden, vorzugsweise flächig verbunden, insbesondere verklebt und/oder kaschiert, wird. Dabei kann das schaumstoffbasierte Flächenmaterial 3 wiederum zuvor auf dem textilen Trägermaterial 2 aufgebracht sein.

Wie in Fig. 1B dargestellt, kann erfindungsgemäß auch derart vorgegangen werden, dass zunächst das schaumstoffbasierte Flächenmaterial 3 und das textile Gleit- und/oder Schutzmaterial 4 miteinander verbunden, vorzugsweise flächig verbunden, insbesondere verklebt und/oder insbesondere kaschiert, werden, und zwar insbesondere unter Verwendung eines Bindemittels 6. Anschließend kann das mit dem Gleit- bzw. Schutzmaterial 4 versehene schaumstoffbasierte Flächenmaterial 3 mit dem textilen Trägermaterial 2 verbunden, vorzugsweise flächig verbunden, insbesondere verklebt, werden, und zwar insbesondere auf der dem Gleit- bzw. Schutzmaterial 4 abgewandten Seite bzw. insbesondere zur Ausbildung bzw. Bereitstellung des Laminatmaterials 1a. Abschließend kann die Ausrüstung mit dem textilen Ober- bzw. Abdeckmaterial 5 erfolgen.

Wie in Fig. 1C dargestellt, kann erfindungsgemäß weiterhin derart vorgegangen werden, dass zunächst das textile Trägermaterial 2 und das schaumstoffbasierte Flächenmaterial 3 miteinander verbunden, vorzugsweise flächig verbunden, insbesondere verklebt, werden und anschließend das mit dem textilen Trägermaterial 2 versehene schaumstoffbasierte Flächenmaterial 3 mit dem Gleit- bzw. Schutzmaterial 4 verbunden, vorzugsweise flächig verbunden, insbesondere verklebt und/oder insbesondere kaschiert, wird, insbesondere auf der dem textilen Trägermaterial 2 abgewandten Seite bzw. insbesondere zur Ausbildung und/oder Bereitstellung des Laminatmaterials 1a. Auch hier kann nachfolgend eine Ausrüstung mit dem textilen Ober- bzw. Abdeckmaterial 5 erfolgen.

Gleichermaßen kann erfindungsgemäß auch derart vorgegangen werden, dass sämtliche dem erfindungsgemäßen Verbundmaterial 1 zugrundeliegenden Schichten (d.h. die textile Trägerschicht 2, das schaumstoffbasierte Flächenmaterial 3 mit dem Bindemittel 6, das Gleit- bzw. Schutzmaterial 4 sowie das Ober- bzw. Abdeckmaterial 5) zeitgleich miteinander verbunden bzw. aufeinander aufgebracht werden.

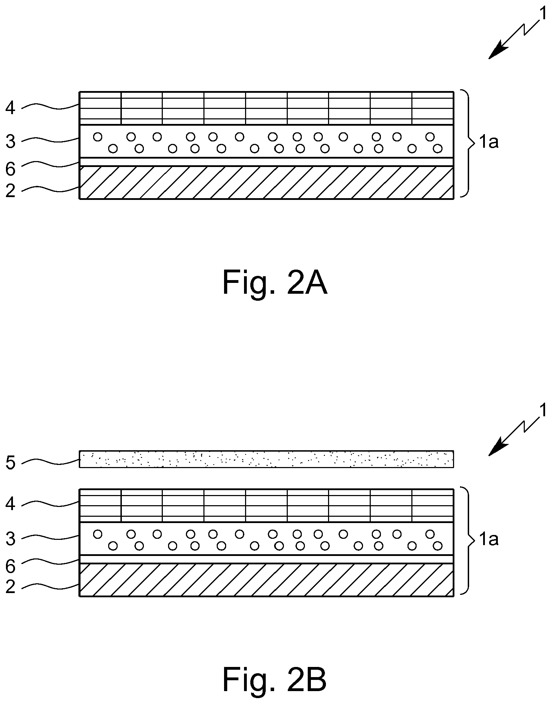

Auf Basis der erfindungsgemäßen Verfahrensführung können so die erfindungsgemäßen textilen Verbundmaterialien 1 erhalten werden, wie sie auch in Fig. 2A, 2B dargestellt sind.

Was das in dem erfindungsgemäßen Verfahren eingesetzte Bindemittel 6, insbesondere Klebstoff, anbelangt, so kann dieses bzw. dieser ein unterhalb der Wärmeschrumpftemperatur der textilen Trägerschicht 2 Klebeverbindungen bzw. Haftkräfte ausbildender Klebstoff sein.

In diesem Zusammenhang kann als Bindemittel 6, insbesondere Klebstoff, ein bei Temperaturen von höchstens 100 °C, insbesondere höchstens 80 °C, vorzugsweise höchstens 60 °C, bevorzugt höchstens 40 °C, Klebeverbindungen und/oder Haftkräfte ausbildender Klebstoff eingesetzt werden.

Durch den zweckgerichteten Einsatz eines Bindemittels 6 bzw. Klebstoffs der vorgenannten Art wird im Rahmen der erfindungsgemäßen Verfahrensführung insbesondere gewährleistet, dass das erfindungsgemäße Verbundmaterial 1 bzw. die textile Trägerschicht 2 während der Verklebung der jeweiligen Schichten zumindest im Wesentlichen nicht schrumpft, so dass vor seiner Weiterverarbeitung zur Herstellung insbesondere von Rückenlehnen bzw. Sitzflächen bzw. -elementen oder dergleichen ein vorzeitiger und unerwünschter Schrumpf des erfindungsgemäßen Verbundmaterials 1 vermieden wird.

Erfindungsgemäß kann als Bindemittel 6, insbesondere Klebstoff, ein insbesondere bei Temperaturen von bis zu 100 °C, insbesondere von bis zu 140 °C, vorzugsweise von bis zu 180 °C, bevorzugt von bis zu 200 °C, besonders bevorzugt von bis zu 240 °C, temperaturstabiles Bindemittel 6, insbesondere Klebstoff, eingesetzt werden. Dabei bezieht sich der Begriff "temperaturstabil" insbesondere auf die Eigenschaft des Bindemittels, wonach bei den in Rede stehenden Temperaturen bereits vorliegende Klebeverbindungen bzw. Haftkräfte zumindest insofern aufrechterhalten werden, als eine Delaminierung bzw. ein Ablösen der Schichten bzw. Materialien des textilen Verbundmaterials 1 verhindert wird, bzw. wonach bereits vorliegende Klebeverbindungen bzw. Haftkräfte bei den angegebenen Temperaturen zumindest im Wesentlichen bestehen bleiben, so dass im Rahmen der erst nach Herstellung des erfindungsgemäßen Verbundmaterials 1 im Rahmen der Weiterverarbeitung zu endfertigen Produkten durchgeführten Wärmeschrumpfung keine Delaminierung bzw. kein Ablösen der jeweiligen Schichten bzw. Materialien erfolgt.

Erfindungsgemäß ist es in diesem Zusammenhang zudem bevorzugt, wenn als Bindemittel 6, insbesondere Klebstoff, ein feuchtigkeitsvernetzender bzw. wärmevernetzender Klebstoff, insbesondere reaktiver Schmelzklebstoff, vorzugsweise auf Polyurethanbasis, eingesetzt wird.

Insbesondere kann als Bindemittel 6, insbesondere Klebstoff, gemäß dem erfindungsgemäßen Verfahren ein Klebstoff auf Basis mindestens eines Polyols, insbesondere Polyesterpolyols, einerseits und eines Isocyanats, insbesondere Diphenylmethandiisocyanats (MDI) und/oder Toluoldiisocyanats (TDI), andererseits eingesetzt werden.

Durch die Verwendung bzw. den Einsatz eines speziellen Bindemittels 6, insbesondere wie zuvor definiert, wird gewährleistet, dass während der bei der Weiterverarbeitung vorgesehenen Wärmeschrumpfung des erfindungsgemäßen Verbundmaterials 1 die ausgebildeten Klebeverbindungen zwischen den jeweiligen Schichten nicht gelöst werden und somit folglich auch unter Wärmeeinfluss keine Delaminierung erfolgt. Erfindungsgemäß wird somit auf Basis der sehr speziellen Verfahrensführung hinsichtlich des Schichtverbundes ein temperaturstabiles Laminat- bzw. Verbundmaterial 1 bereitgestellt, welches ohne Zerstörung bzw. Delaminierung einem nachfolgenden Wärmeschrumpfprozess zugänglich ist.

Insbesondere kann das Bindemittel 6, insbesondere Klebstoff, gemäß dem erfindungsgemäßen Verfahren in einer Menge im Bereich von 5 g/m² bis 200 g/m², insbesondere im Bereich von 10 g/m² bis 150 g/m², vorzugsweise im Bereich von 15 g/m² bis 100 g/m², bevorzugt im Bereich von 20 g/m² bis 80 g/m², eingesetzt werden bzw. auf das schaumstoffbasierte Flächenmaterial 3 bzw. die textile Trägerschicht 2, insbesondere auf das schaumstoffbasierte Flächenmaterial 3, aufgebracht werden. Hierdurch wird eine gute Klebeverbindung gewährleistet.

Dabei ist es im Rahmen der vorliegenden Erfindung insbesondere vorgesehen, dass das Bindemittel 6, insbesondere Klebstoff, kontinuierlich oder diskontinuierlich, insbesondere kontinuierlich, wie insbesondere in Fig. 1A bis 1C schematisch dargestellt, auf das schaumstoffbasierte Flächenmaterial 3 und/oder die textile Trägerschicht 2, insbesondere auf das schaumstoffbasierte Flächenmaterial 3, aufgebracht wird.

Um einen effektiven Klebstoffauftrag zu ermöglichen, kann das Bindemittel 6, insbesondere Klebstoff, verfahrensgemäß vorzugsweise mittels Walzenauftrag, Sprüh- und/oder Düsenauftrag oder Rakelauftrag, insbesondere Walzenauftrag oder Sprüh- und/oder Düsenauftrag, auf das schaumstoffbasierte Flächenmaterial 3 und/oder die textile Trägerschicht 2, insbesondere auf das schaumstoffbasierte Flächenmaterial 3, aufgebracht werden. Insbesondere kommt auch ein Schlitzdüsenauftrag des Bindemittels 6 in Betracht.

Erfindungsgemäß erfolgt der Auftrag des Bindemittels 6 bzw. Klebstoffs insbesondere vor dem Zusammenfügen der zugrundeliegenden Materialien.

Erfindungsgemäß kann es auch vorgesehen sein, dass das Bindemittel 6, insbesondere Klebstoff, diskontinuierlich aufgebracht wird, insbesondere so dass eine diskontinuierliche Verbindung der jeweiligen Schichten erfolgt, beispielsweise auf Basis eines punktförmigen bzw. rasterförmigen Auftrags des Bindemittels 6, insbesondere Klebstoffs, auf die textile Trägerschicht 2 und/oder das schaumstoffbasierte Flächenmaterial 3.

Im Rahmen der vorliegenden Erfindung ist es dabei insbesondere vorgesehen, wie zuvor angeführt, dass die im Rahmen der Herstellung des textilen Verbundmaterials 1' nach der Erfindung resultierenden Haft- bzw. Klebeverbindungen beim nachfolgenden Wärmeschrumpfprozess zum Erhalt des wärmegeschrumpften textilen Verbundmaterials 1' zumindest im Wesentlichen vollständig bestehen bleiben, so dass auch in Bezug auf das resultierende wärmegeschrumpfte textile Verbundmaterial 1' ein entsprechender Verbund bzw. Laminat, wie zuvor beschrieben, vorliegt.

Zudem kann es erfindungsgemäß vorgesehen sein, dass das Gleit- bzw. Schutzmaterial 4 mit dem schaumstoffbasierten Flächenmaterial 3 verbunden, vorzugsweise flächig verbunden, insbesondere verklebt und/oder insbesondere kaschiert, wird. Diesbezüglich kann das Verbinden mittels Kaschieren, insbesondere Flammkaschieren, erfolgen. Die diesbezüglichen Maßnahmen sind dem Fachmann als solche wohlbekannt, so dass es diesbezüglich keiner weiterführenden Ausführungen bedarf. Alternativ kann die Verbindung des Gleit- bzw. Schutzmaterials 4 mit dem schaumstoffbasierten Flächenmaterial 3 auch mittels eines Bindemittels, insbesondere Klebstoffs, vorzugsweise wie zuvor definiert, erfolgen bzw. durchgeführt werden.

Erfindungsgemäß ist es zudem bevorzugt, wenn das textile Ober- und/oder Abdeckmaterial 5 zumindest im Wesentlichen lose bzw. zur Ausbildung eines losen Verbundes auf das Gleit- und/oder Schutzmaterial 4 bzw. das Laminatmaterial 1a aufgebracht wird. Hierdurch wird weiterführend gewährleistet, dass die Sicht- bzw. Nutzungsoberfläche des textilen Verbundmaterials 1 auch bei hoher kraftmäßiger Beanspruchung bzw. Kompression des schaumstoffbasierten Flächenmaterials 3 im Nutzungszustand keine Falten wirft, insbesondere da das textile textile Ober- und/oder Abdeckmaterial 5 sozusagen auf dem textilen Gleit- bzw. Schutzmaterial 4 gleiten kann.

Insbesondere kann es erfindungsgemäß dabei vorgesehen sein, dass das Ober- bzw. Abdeckmaterial 5 abschnittsweise, insbesondere randseitig, mit dem Gleit- bzw. Schutzmaterial 4 und/oder dem Laminatmaterial 1a verbunden, insbesondere vernäht, verschweißt, vertackert, verklemmt bzw. verklebt, insbesondere vernäht, wird. Hierdurch wird insgesamt gewährleistet, dass das textile Ober- bzw. Abdeckmaterial 5 nicht verrutscht und somit ein insgesamt stabiler Verbund ausgebildet wird. Die insbesondere randseitige Verbindung bzw. Befestigung des Ober- bzw-Abdeckmaterials 5 mit dem Gleit- bzw. Schutzmaterial 4 und/oder dem Laminatmaterial 1a kann beispielsweise auch mittels eines Kettel- bzw. Kederrands (Keders) oder dergleichen erfolgen.

In diesem Zusammenhang kann eine randseitige Verbindung des Ober- bzw. Abdeckmaterials 5 insbesondere mit dem Gleit- bzw. Schutzmaterial 4 bzw. dem Laminatmaterial 1a auch über einen insbesondere bei der Bereitstellung von Rückenlehnen bzw. Sitzelementen vorhandene Träger- bzw. (Spann-)Rahmenvorrichtung erfolgen, beispielsweise durch eine Verklemmung der jeweiligen Schichten oder dergleichen.

Gemäß weniger bevorzugten Ausführungsformen ist es aber grundsätzlich auch möglich, dass das textile Ober- bzw. Abdeckmaterial 5 zumindest im Wesentlichen flächig mit dem Gleit- bzw. Schutzmaterial bzw. dem Laminatmaterial 1a verbunden, insbesondere verklebt, wird. Diesbezüglich kann auch ein Kaschieren oder dergleichen erfolgen. Hierzu kann im Allgemeinen das zuvor beschriebene Bindemittel 6 eingesetzt werden.

Was weiterhin die im Rahmen des erfindungsgemäßen Verfahrens eingesetzte Trägerschicht 2 anbelangt, so kann diese in zahlreichen Ausführungsformen vorliegen:
So kann die textile Trägerschicht 2 in Form eines Gewebes; einer Maschenware, insbesondere eines Gewirkes oder Gestrickes; eines Geleges oder eines Textilverbundstoffs, insbesondere Vlies (Nonwoven); eingesetzt bzw. ausgebildet werden.

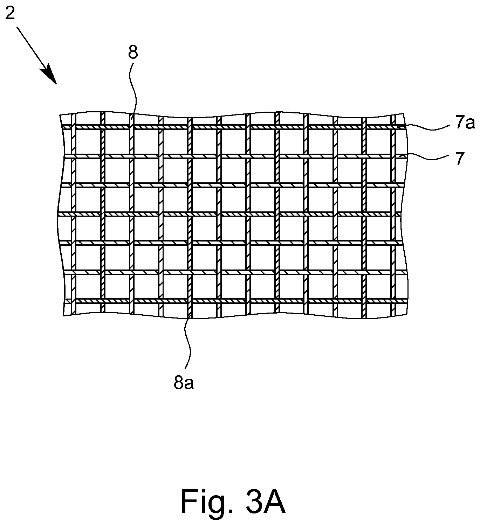

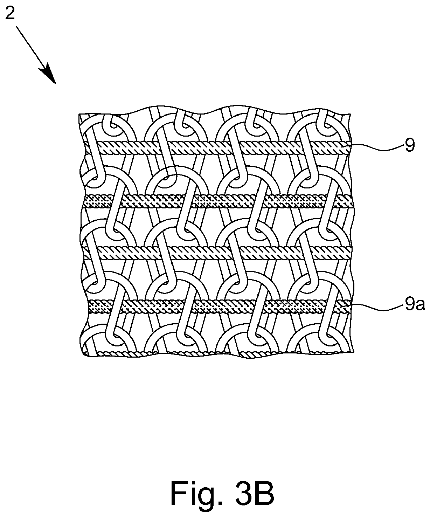

Insbesondere kann die textile Trägerschicht 2 in Form eines Gewebes, Gewirkes oder Gestrickes, bevorzugt in Form eines Gewebes, eingesetzt bzw. ausgebildet werden. In diesem Zusammenhang zeigt Fig. 3A die Ausbildung der textilen Trägerschicht 2 in Form eines Gewebes, während Fig. 3B die erfindungsgemäße Ausführungsform darstellt, wonach die textile Trägerschicht 2 in Form einer Maschenware, insbesondere in Form eines Gewirkes, ausgebildet wird.

Die dem textilen Verbundmaterial 1 nach der Erfindung bzw. die der textilen Trägerschicht 2 zugrundeliegenden Wärmeschrumpfeigenschaften werden erfindungsgemäß insbesondere dadurch gewährleistet, dass die textile Trägerschicht 2 mindestens ein wärmeschrumpfbares Kunststoffgarn aufweist bzw. im Rahmen des erfindungsgemäßen Verfahrens hiermit ausgerüstet wird. Aufgrund der Verwendung eines wärmeschrumpfbaren Kunststoffgarns kann im Hinblick auf die nachfolgende Weiterverarbeitung ein definiertes Schrumpfverhalten eingestellt werden, was zu hervorragenden und reproduzierbaren (Schrumpf-)Eigenschaften des erfindungsgemäßen Verbundmaterials 1 insgesamt führt. Erfindungsgemäß wird zudem insbesondere derart vorgegangen, dass, wie nachfolgend noch angeführt, das wärmeschrumpfbare Kunststoffgarn zusätzlich zu mindestens einer weiteren, nicht wärmeschrumpfbaren Garnkomponente bzw. einem diesbezüglichen Garn in der textilen Trägerschicht 2 eingesetzt wird.

Das in dem erfindungsgemäßen Verfahren vorgesehene wärmeschrumpfbare Kunststoffgarn kann dabei in zahlreichen Ausbildungen in der textilen Trägerschicht 2 eingesetzt werden:
Insbesondere kann in diesem Zusammenhang, wie in Fig. 3A gezeigt, die textile Trägerschicht 2 in Form eines Gewebes eingesetzt bzw. ausgebildet werden, wobei das Gewebe - vorzugsweise in Ergänzung zu bzw. neben nichtschrumpfenden Schussfäden bzw. -garnen 7 und nichtschrumpfenden Kettfäden bzw. -garnen 8 - entsprechende Wärmeschrumpfschussfäden und/oder -garne 7a und/oder Wärmeschrumpfkettfäden und/oder -garne 8a aufweist. Dabei können die Wärmeschrumpfschussfäden und/oder -garne 7a und/oder die Wärmeschrumpfkettfäden und/oder -garne 8a, unabhängig voneinander, mindestens ein wärmeschrumpfbares Kunststoffgarn aufweisen bzw. hieraus bestehen.

Zudem kann es erfindungsgemäß in diesem Zusammenhang vorgesehen sein, wie in Fig. 3B gezeigt, dass die textile Trägerschicht 2 in Form einer Maschenware, insbesondere eines Gewirkes oder Gestrickes, vorzugsweise in Form eines Gewirkes, eingesetzt und/oder ausgebildet wird.

In diesem Zusammenhang kann die Maschenware, insbesondere das Gewirke oder Gestricke, vorzugsweise das Gewirke, eine Grundlegung, insbesondere ausgewählt aus der Gruppe von Franse, Trikot, Tuch, Satin, Samt und Atlas, aufweisen. In diesem Zusammenhang kann die Grundlegung mindestens ein wärmeschrumpfbares Kunststoffgarn aufweisen bzw. hieraus bestehen.

Insbesondere kann die Maschenware, insbesondere das Gewirke oder Gestricke, vorzugsweise das Gewirke, mindestens ein Bindungselement 9, insbesondere ausgewählt aus der Gruppe von Schuss, Teilschuss, Stehfaden und/oder -garn, Henkel und Flottung, aufweisen. Diesbezüglich kann auch auf Fig. 3B verwiesen werden.

Insbesondere kann die Maschenware, insbesondere das Gewirke oder Gestricke, vorzugsweise das Gewirke, wie in Fig. 3B gezeigt, mindestens ein Wärmeschrumpfbindungselement 9a, insbesondere ausgewählt aus der Gruppe von Wärmeschrumpfschuss, Wärmeschrumpfteilschuss, Wärmeschrumpfstehfaden und/oder -garn, Wärmeschrumpfhenkel und Wärmeschrumpfflottung, aufweisen. In diesem Zusammenhang kann das Wärmeschrumpfbindungselement 9a mindestens ein wärmeschrumpfbares Kunststoffgarn aufweisen oder hieraus bestehen.

In entsprechender Weise kann die textile Trägerschicht 2 in Form eines Geleges oder eines Textilverbundstoffs, insbesondere Vlies (Nonwoven), mit den zuvor für Geweben bzw. Maschenwaren angeführten Wärmeschrumpfelementen ausgerüstet werden.

Was das erfindungsgemäß eingesetzte wärmeschrumpfbare Kunststoffgarn anbelangt, so kann dieses einen insbesondere auf Phthalat basierenden Polyester, vorzugsweise Polyethylenterephthalat, Polypropylenterephthalat, Polybutylenterephthalat, vorzugsweise Polyethylenterephthalat, aufweisen bzw. hieraus bestehen.

Insbesondere kann die textile Trägerschicht 2 das wärmeschrumpfbare Kunststoffgarn in einer Menge im Bereich von 1,5 Gew.-% bis 55 Gew.-%, insbesondere im Bereich von 2 Gew.-% bis 40 Gew.-%, vorzugsweise im Bereich von 5 Gew.-% bis 30 Gew.-%, bevorzugt im Bereich von 6 Gew.-% bis 20 Gew.-%, besonders bevorzugt im Bereich von 7 Gew.-% bis 15 Gew.-%, ganz besonders bevorzugt im Bereich von 8 Gew.-% bis 10 Gew.-%, bezogen auf die textile Trägerschicht 2, enthalten.

Gleichermaßen kann das im Rahmen des erfindungsgemäßen Verfahrens eingesetzte wärmeschrumpfbare Kunststoffgarn einen Wärmeschrumpf im Bereich von 2 % bis 75 %, insbesondere im Bereich von 5 % bis 60 %, vorzugsweise im Bereich von 10 % bis 50 %, bevorzugt im Bereich von 15 % bis 40 %, besonders bevorzugt im Bereich von 20 % bis 35 %, und/oder von mehr als 20 %, bezogen auf die Länge im nichtgeschrumpften Zustand und bei einer Temperatur von 140 °C bis 240 °C, insbesondere 160 °C bis 200 °C, vorzugsweise etwa 180 °C, aufweisen. Zudem kann das im Rahmen des erfindungsgemäßen Verfahrens eingesetzte wärmeschrumpfbare Kunststoffgarn einen Wärmeschrumpf im Bereich von 2 % bis 40 %, insbesondere im Bereich von 3 % bis 30 %, vorzugsweise im Bereich von 4 % bis 30 %, bevorzugt im Bereich von 5 % bis 20 %, besonders bevorzugt im Bereich von 6 % bis 15 %, und/oder von mehr als 10 %, bezogen auf die Länge im nichtgeschrumpften Zustand und bei einer Temperatur von 60 °C bis 140 °C, insbesondere 80 °C bis 120 °C, vorzugsweise etwa 100 °C, aufweisen.

Hierdurch resultieren bei der Weiterverarbeitung insgesamt definierte und gezielte steuerbare Schrumpfeigenschaften in Bezug auf die textile Trägerschicht 2 bzw. das erfindungsgemäße textile Verbundmaterial 1 als solches. Zudem wird ein vorzeitiger Wärmeschrumpf bei der Herstellung des Verbundmaterials 1 vermieden.

Im Allgemeinen kann es erfindungsgemäß vorgesehen sein, dass die textile Trägerschicht 2 mindestens ein insbesondere von dem wärmeschrumpfbaren Kunststoffgarn verschiedenes Garn bzw. entsprechende Fasern auf Basis einer Garn- und/oder Faserart, insbesondere Textilgarn und/oder -faser, aufweist. Dabei kann die Garn- und/oder Faserart natürliche Fasern bzw. natürliche Garne, vorzugsweise Wollfasern bzw. -garne oder Baumwollfasern bzw. -garne (CO), bevorzugt Wollfasern bzw. -garne, und/oder chemische Fasern bzw. -garne, vorzugsweise synthetische Fasern bzw. synthetische Garne, insbesondere ausgewählt aus der Gruppe von Polyestern (PES); Polyolefinen, insbesondere Polyethylen (PE) und/oder Polypropylen (PP); Polyvinylchlorid (CLF); Polyvinylidenchlorid (CLF); Acetat (CA); Triacetat (CTA); Polyacryl (PAN), Polyamid (PA), insbesondere aromatischen, vorzugsweise flammfesten Polyamiden; Polyvinylalkohol (PVAL); Polyurethanen; Polyvinylestern; (Meth-)Acrylaten; Polymilchsäuren (PLA); sowie deren Mischungen, vorzugsweise Polyamid (PA), umfassen oder hieraus bestehen.

Was darüber hinaus das im Rahmen des erfindungsgemäßen Verfahren eingesetzte und in den Fig. 1A bis 1C schematisch dargestellte schaumstoffbasierte Flächenmaterial 3 anbelangt, so kann dieses in Form eines insbesondere thermoplastischen Schaumstoffs auf Basis von Polyolefinen oder Polyurethanen, vorzugsweise Polyurethanen, eingesetzt bzw. ausgebildet werden.

Insbesondere kann das schaumstoffbasierte Flächenmaterial 3 in Form eines geschlossenporigen bzw. geschlossenzelligen oder aber in Form eines offenporigen und/oder offenzelligen Schaumstoffs, vorzugsweise in Form eines geschlossenporigen und/oder geschlossenzelligen Schaumstoffs, eingesetzt bzw. ausgebildet werden.

Zudem kann das schaumstoffbasierte Flächenmaterial 3 in Form eines insbesondere geschlossenporigen und/oder geschlossenzelligen Polyurethan-Schaumstoffs eingesetzt und/oder ausgebildet werden.

Zudem sollte das schaumstoffbasierte Flächenmaterial 3 eine Dicke im Bereich von 0,5 mm bis 100 mm, insbesondere im Bereich von 1 mm bis 80 mm, vorzugsweise im Bereich von 2 mm bis 50 mm, bevorzugt im Bereich von 3 mm bis 30 mm, besonders bevorzugt im Bereich von 5 mm bis 20 mm, aufweisen.

Die zuvor beschriebenen Schaumstoffmaterialien weisen insgesamt hervorragende Kompressions- und (Kompressions-)Erholungseigenschaften auf und gewährleisten somit eine hervorragende Polsterfunktion und damit einen hohen Sitzkomfort im Fall der Verwendung des erfindungsgemäßen textilen Verbundmaterials 1 beispielsweise für Rückenlehnen bzw. Sitzelemente von Sitzmöbeln, wie Stühlen oder dergleichen.

Was weiterhin das gleichermaßen in Fig. 1A bis 1C schematisch dargestellte textile Gleit- bzw. Schutzmaterial 4 anbelangt, so ist es erfindungsgemäß bevorzugt, wenn dieses in Form eines Gewebes; einer Maschenware, insbesondere eines Gewirkes oder Gestrickes; eines Geleges oder eines Textilverbundstoffs, insbesondere Vlies (Nonwoven); eingesetzt und/oder ausgebildet wird.

Erfindungsgemäß ist es jedoch von Vorteil, wenn das textile Gleit- und/oder Schutzmaterial 4 in Form einer Maschenware, insbesondere eines Gewirkes oder Gestrickes, bevorzugt in Form eines Gestrickes, besonders bevorzugt in Form eines Rundstrickmaterials, eingesetzt bzw. ausgebildet wird.

Insbesondere ist es erfindungsgemäß bevorzugt, wenn das textile Gleit- bzw. Schutzmaterial 4 in Form eines Rundstrickmaterials eingesetzt bzw. ausgebildet wird. Im Rahmen der vorliegenden Erfindung kann es auch vorgesehen sein, dass das textile Gleit- und/oder Schutzmaterial 4 in Form eines Charmeuse-Materials ausgebildet bzw. eingesetzt wird.

Insbesondere kann das textile Gleit- bzw. Schutzmaterial 4 mindestens ein synthetisches Garn bzw. entsprechende Fasern (Chemiegarn bzw. Chemiefasern) aufweisen oder hieraus bestehen. Insbesondere kann das synthetisches Garn bzw. können die entsprechenden Fasern ausgewählt sein aus der Gruppe von Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacrylnitril (PAN); Polyamiden (PA); Polyvinylalkoholen (PVAL); Polyurethanen; Polyvinylestern; (Meth-)Acrylaten; sowie deren Mischungen; vorzugsweise Polyestern (PES).

Durch die spezielle Ausgestaltung des textilen Gleit- bzw. Schutzmaterials 4 wird zum einen in Bezug auf das darüber liegende bzw. angeordnete textile Ober- bzw. Abdeckmaterial 5 ein definiertes Rutsch- bzw. Gleitverhalten des textilen Ober- bzw. Abdeckmaterials 5 auf dem textilen Gleit- bzw. Schutzmaterial 4 ermöglicht, wobei gegebenenfalls auftretende Gleit- bzw. Knirschgeräusche effektiv verhindert bzw. vermindert werden. Zum anderen resultiert insbesondere für das unterhalb des textilen Gleit- bzw. Schutzmaterials 4 angeordnete schaumstoffbasierte Flächenmaterial 3 eine weiterführende Schutzfunktion, insbesondere eingehergehend mit einer Verhinderung des Loslösens bzw. Abbrechens einzelner Fragmente des schaumstoffbasierten Flächenmaterials 3, wie es andernfalls insbesondere bei langanhaltender bzw. übermäßiger Beanspruchung, einhergehend mit einem starken Reiben des textilen Ober- bzw. Abdeckmaterials 5, hervorgerufen werden kann.

Was das ebenfalls in Fig. 1A bis 1C schematisch dargestellte textile Ober- bzw. Abdeckmaterial 5 anbelangt, so kann dieses in Form eines Leders; Kunstleders; Gewebes; einer Maschenware, insbesondere eines Gewirkes oder Gestrickes; eines Geleges oder eines Textilverbundstoffs, insbesondere Vlies (Nonwoven); eingesetzt und/oder ausgebildet werden. Hierdurch können die Oberflächeneigenschaften des textilen Verbundmaterials 1 individuell eingestellt bzw. vorgegeben werden.

Erfindungsgemäß ist es jedoch bevorzugt, wenn im Rahmen des erfindungsgemäßen Verfahrens das textile Ober- und/oder Abdeckmaterial 5 in Form eines Gewebes, Gewirkes oder Gestrickes eingesetzt bzw. ausgebildet wird. Insbesondere kann das textile Ober- und/oder Abdeckmaterial 5 mindestens ein natürliches Garn bzw. natürliche Faser (Naturgarn bzw. Naturfasern) und/oder mindestens ein synthetisches Garn bzw. Faser (Chemiegarn bzw. Chemiefasern) aufweisen bzw. hieraus bestehen. Hierdurch können die Oberflächeneigenschaften weiterführend modifiziert werden, insbesondere wobei das Garn bzw. die Fasern ausgewählt wird bzw. werden aus der Gruppe von Wollfasern bzw. -garnen, Baumwollfasern bzw. -garnen (CO), Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacrylnitril (PAN); Polyamiden (PA); Polyvinylalkoholen (PVAL); Polyurethanen; Polyvinylestern; (Meth-)-Acrylaten; sowie deren Mischungen.

Für weitergehende Einzelheiten insbesondere zu dem Begriff der Textilfasern - synonym auch als textile Faserstoffe bezeichnet - kann beispielsweise verwiesen werden auf Römpp Chemielexikon, Georg Thieme Verlag Stuttgart/New York, Band 6, 1999, Seiten 4477 bis 4479, Stichwort: "Textilfasern", dessen gesamter Offenbarungsgehalt einschließlich der dort genannten Literaturstellen hiermit durch Bezugnahme eingeschlossen ist. Insbesondere wird im Rahmen der vorliegenden Erfindung der Begriff der Textilfasern als eine Sammelbezeichnung für sämtliche Fasern, die sich textil verarbeiten lassen, verstanden. Gemeinsam ist den Textilfasern eine im Vergleich zu ihrem Querschnitt große Länge sowie ausreichende Festigkeit und Biegsamkeit, wobei sich die Textilfaser nach Herkunft und stofflicher Beschaffenheit in verschiedene Gruppen einteilen lassen. Insbesondere können die im Rahmen der vorliegenden Erfindung im Allgemeinen vorgesehenen Fasern in Form von (Textil-)Fäden eingesetzt werden.

Weiterhin kann erfindungsgemäß derart verfahren werden, dass das textile Ober- und/oder Abdeckmaterial 5 und/oder die textile Trägerschicht 2, unabhängig voneinander, vorzugsweise die textile Trägerschicht 2, insbesondere in mindestens eine Erstreckungsrichtung des textilen Ober- und/oder Abdeckmaterials 5 und/oder der textilen Trägerschicht 2, elastisch und/oder insbesondere reversibel dehnfähig ausgebildet werden. In diesem Zusammenhang kann die jeweilige Elastizität und/oder die insbesondere reversible Dehnfähigkeit, gleichermaßen unabhängig voneinander, 0,5 % bis 30 %, insbesondere 1 % bis 20 %, bevorzugt 1,5 % bis 10 %, bezogen auf die jeweilige Erstreckungsrichtung im nichtgedehnten Zustand, betragen.

Hierzu kann es vorgesehen sein, dass im Rahmen der erfindungsgemäßen Verfahrensführung derart vorgegangen wird, dass das textile Ober- und/oder Abdeckmaterial 5 und/oder die textile Trägerschicht 2, unabhängig voneinander, vorzugsweise die textile Trägerschicht 2, mindestens ein elastisches Garn bzw. elastische Fasern aufweisen bzw. hiermit ausgerüstet werden. Diesbezüglich kann auch auf die nachfolgenden Ausführungen verwiesen werden.

Gemäß einer alternativen Ausführungsform der vorliegenden Erfindung kann es jedoch auch vorgesehen sein, dass insbesondere das textile Ober- und/oder Abdeckmaterial 5 und/oder die textile Trägerschicht 2, bevorzugt das textile Ober- und/oder Abdeckmaterial 5, zumindest im Wesentlichen nicht dehnfähig bzw. zumindest im Wesentlichen nicht elastisch ist bzw. zumindest im Wesentlichen nicht elastisch ausgebildet wird. Dementsprechend kann es somit erfindungsgemäß vorgesehen sein, dass textile Ober- und/oder Abdeckmaterial 5 kein elastisches Garn bzw. keine elastische Fasern aufweist.

Was die Ausbildung des textilen Verbundmaterials 1 nach der Erfindung weiterhin anbelangt, so kann die textile Trägerschicht 2 und/oder das textile Ober- und/oder Abdeckmaterial 5 und/oder das textile Gleit- und/oder Schutzmaterial 4, unabhängig voneinander, derart ausgebildet bzw. derart in dem textilen Verbundmaterial 1 angeordnet werden, dass die textile Trägerschicht 2 und/oder das textile Ober- und/oder Abdeckmaterial 5 und/oder das textile Gleit- und/oder Schutzmaterial 4 einerseits das schaumstoffbasierte Flächenmaterial 3 andererseits zumindest abschnittsweise randseitig überlappen bzw. überragen (d.h. beispielsweise flächenmäßig größer ausgebildet sind und sich somit über den Rand der entsprechenden Schichten erstrecken) und/oder dass die textile Trägerschicht 2 und/oder das textile Ober- und/oder Abdeckmaterial 5 und/oder das textile Gleit- und/oder Schutzmaterial 4 einerseits sich über den Rand des schaumstoffbasierten Flächenmaterials 3 andererseits erstrecken. Hierdurch kann beispielsweise die Fixierung bzw. Befestigung an eine Träger- bzw. Rahmenvorrichtung entsprechend individuell angepasst werden.

Insbesondere kann im Rahmen der vorliegenden Erfindung auch derart vorgegangen werden, dass die textile Trägerschicht 2 und/oder das schaumstoffbasierte Flächenmaterial 3 und/oder das textile Gleit- und/oder Schutzmaterial 4 und/oder das Laminatmaterial 1a einerseits das textile Ober- und/oder Abdeckmaterial 5 andererseits zumindest abschnittsweise randseitig überlappen bzw. überragen bzw. dass die textile Trägerschicht 2 und/oder das schaumstoffbasierte Flächenmaterial 3 und/oder das textile Gleit- und/oder Schutzmaterial 4 einerseits sich über den Rand des textilen Ober- und/oder Abdeckmaterial 5 erstrecken. Hierdurch wird insbesondere dem im Allgemeinen größeren Wärmeschrumpf insbesondere der textilen Trägerschicht 2 Rechnung getragen, so dass im geschrumpften Zustand eine entsprechende Angleichung der Fläche des textilen Ober- und/oder Abdeckmaterial 5 mit denjenigen der weiteren Schichten erfolgt.

Somit kann erfindungsgemäß derart vorgegangen werden, dass das textile Ober- und/oder Abdeckmaterial 5 flächenmäßig kleiner ausgebildet wird als die textile Trägerschicht 2 und/oder das schaumstoffbasierte Flächenmaterial 3 und/oder das textile Gleit- und/oder Schutzmaterial 4 und/oder das Laminatmaterial 1a, insbesondere die textile Trägerschicht 2.

Insbesondere in Ergänzung zu den zuvor angeführten Verbindungen bzw. Verklebungen der jeweiligen Schichten bzw. Materialien kann es im Rahmen des erfindungsgemäßen Verfahrens auch vorgesehen sein, dass das textile Verbundmaterial 1, insbesondere die textile Trägerschicht 2 und/oder das textile Ober- und/oder Abdeckmaterial 5 und/oder das textile Gleit- und/oder Schutzmaterial 4 und gegebenenfalls das schaumstoffbasierte Flächenmaterial 3, randseitig bzw. an ihren jeweiligen Rändern zumindest abschnittsweise verbunden, insbesondere vernäht, verschweißt, vertackert, verklemmt und/oder verklebt, insbesondere vernäht, wird bzw. werden. Hierdurch kann zum einen die Stabilität des Verbundes insgesamt erhöht werden und zum anderen die randseitige Befestigung bzw. Fixierung an einer Träger- bzw. Rahmenvorrichtung verbessert werden.

In diesem Zusammenhang kann es auch vorgesehen sein, dass das textile Verbundmaterial 1 zumindest abschnittsweise randseitig eingefasst wird, insbesondere mittels eines Kettel- bzw. Kederrands (Keders) oder dergleichen.

Im Allgemeinen kann das textile Verbundmaterial 1 zudem zumindest abschnittsweise randseitig mit mindestens einer Aufnahme- bzw. Befestigungseinrichtung, insbesondere zur Aufnahme bzw. Befestigung einer Träger- bzw. Rahmenvorrichtung, ausgerüstet bzw. versehen werden. Dies kann beispielsweise durch Umnähen oder dergleichen insbesondere der textilen Trägerschicht 2, erfolgen.

Im Rahmen des erfindungsgemäßen Verfahrens ist es insbesondere vorgesehen, dass das schaumstoffbasierte Flächenmaterial 3, insbesondere Schaumstoffschicht, das textile Gleit- und/oder Schutzmaterial 4 und/oder das textile Ober- und/oder Abdeckmaterial 5 zumindest im Wesentlichen nicht (wärme-)schrumpfbar ausgebildet werden.

Im Allgemeinen kann das textile Verbundmaterial in Form einer Bahnen- und/oder Rollenware bereitgestellt werden. Hierdurch werden einerseits Transporteigenschaften sowie die nachfolgende Verarbeitung bzw. individuelle Konfektionierung verbessert, insbesondere was ein anwendungsspezifisches Zuschneiden des Verbundmaterials 1 anbelangt.

Weiterer Gegenstand der vorliegenden Erfindung - gemäß einem **zweiten** Aspekt der vorliegenden Erfindung - ist zudem das erfindungsgemäße textile Verbundmaterial 1 mit Wärmeschrumpfeigenschaften, vorzugsweise in Form eines wärmeschrumpfbaren textilen Polster- und/oder Bespannungsmaterials, vorzugsweise für Sitzmöbel, wobei das textile Verbundmaterial 1 durch das zuvor definierte Verfahren nach der Erfindung erhältlich bzw. hergestellt ist.

In diesem Zusammenhang betrifft die vorliegende Erfindung somit auch ein insbesondere in Fig. 2A und 2B dargestelltes textiles Verbundmaterial 1 mit Wärmeschrumpfeigenschaften, vorzugsweise in Form wärmeschrumpfbaren textilen Polster- und/oder Bespannungsmaterials, vorzugsweise für Sitzmöbel, insbesondere wie zuvor definiert, wobei das textile Verbundmaterial 1 aufweist:
- mindestens eine wärmeschrumpfbare textile Trägerschicht 2;
- mindestens ein schaumstoffbasiertes Flächenmaterial 3, insbesondere Schaumstoffschicht, wobei das schaumstoffbasierte Flächenmaterial 3 mittels mindestens eines Bindemittels 6 mit der textilen Trägerschicht 2 verbunden, vorzugsweise flächig verbunden, insbesondere verklebt, ist, wobei die Verbindung, vorzugsweise flächige Verbindung, insbesondere Verklebung, bei einer Temperatur unterhalb der Wärmeschrumpftemperatur der textilen Trägerschicht 2 erfolgt ist; und
- mindestens ein insbesondere flächiges textiles Gleit- und/oder Schutzmaterial 4, wobei das textile Gleit- und/oder Schutzmaterial 4 auf der der textilen Trägerschicht 2 abgewandten Seite des schaumstoffbasierten Flächenmaterials 3 aufgebracht und/oder angeordnet ist.

In diesem Zusammenhang ist es im Rahmen der vorliegenden Erfindung insbesondere vorgesehen, dass das textile Verbundmaterial 1 zudem mindestens ein textiles Ober- und/oder Abdeckmaterial 5 aufweist. Dabei kann das textile Ober- und/oder Abdeckmaterial 5 auf der dem schaumstoffbasierten Flächenmaterial 3 abgewandten Seite des textilen Gleit- und/oder Schutzmaterials 4 aufgebracht und/oder angeordnet sein.

Insbesondere kann es erfindungsgemäß vorgesehen sein, dass die textile Trägerschicht 2, das schaumstoffbasierte Flächenmaterial 3 und/oder das textile Gleit- bzw. Schutzmaterial 4 insbesondere zur Ausbildung und/oder Bereitstellung eines Laminatmaterials 1a miteinander verbunden, vorzugsweise flächig verbunden, insbesondere verklebt, sind.

Erfindungsgemäß kann für das textile Verbundmaterial 1 nach der Erfindung als Bindemittel 6, insbesondere Klebstoff, ein unterhalb der Wärmeschrumpftemperatur der textilen Trägerschicht 2 Klebeverbindungen und/oder Haftkräfte ausbildender Klebstoff eingesetzt sein.

In diesem Zusammenhang kann als Bindemittel 6, insbesondere Klebstoff, ein bei Temperaturen von höchstens 100 °C, insbesondere höchstens 80 °C, vorzugsweise höchstens 60 °C, bevorzugt höchstens 40 °C, Klebeverbindungen und/oder Haftkräfte ausbildender Klebstoff eingesetzt sein.

Erfindungsgemäß kann als Bindemittel 6, insbesondere Klebstoff, ein insbesondere bei Temperaturen von bis zu 100 °C, insbesondere von bis zu 140 °C, vorzugsweise von bis zu 180 °C, bevorzugt von bis zu 200 °C, besonders bevorzugt von bis zu 240 °C, temperaturstabiles Bindemittel 6, insbesondere Klebstoff, eingesetzt sein.

Zudem kann als Bindemittel 6, insbesondere Klebstoff, ein feuchtigkeitsvernetzender und/oder wärmevernetzender Klebstoff, insbesondere reaktiver Schmelzklebstoff, vorzugsweise auf Polyurethanbasis, eingesetzt sein.

Erfindungsgemäß kann als Bindemittel 6, insbesondere Klebstoff, ein Klebstoff auf Basis mindestens eines Polyols, insbesondere Polyesterpolyols, einerseits und eines Isocyanats, insbesondere Diphenylmethandiisocyanats (MDI) und/oder Toluoldiisocyanats (TDI), andererseits eingesetzt sein.

Zudem kann das Bindemittel 6, insbesondere Klebstoff, in einer Menge, insbesondere Auftragsmenge, im Bereich von 5 g/m² bis 200 g/m², insbesondere im Bereich von 10 g/m² bis 150 g/m², vorzugsweise im Bereich von 15 g/m² bis 100 g/m², bevorzugt im Bereich von 20 g/m² bis 80 g/m², eingesetzt sein.

Erfindungsgemäß kann es zudem bei dem erfindungsgemäßen Verbundmaterial 1 vorgesehen sein, dass das Gleit- und/oder Schutzmaterial 4 mit dem schaumstoffbasierten Flächenmaterial 3 verbunden, vorzugsweise flächig verbunden, insbesondere verklebt, ist.

Was das textile Verbundmaterial 1 nach der Erfindung weiterhin anbelangt, so kann weiterhin das textile Ober- bzw. Abdeckmaterial 5 zumindest im Wesentlichen lose bzw. zur Ausbildung eines losen Verbundes auf das Gleit- bzw. Schutzmaterial 4 und/oder das Laminatmaterial 1a aufliegen bzw. aufgebracht sein.

In diesem Zusammenhang kann jedoch im Allgemeinen eine insbesondere randseitige Befestigung des Ober- bzw. Abdeckmaterials 5 mit den weiteren Schichten bzw. dem Laminatmaterial 1a vorgesehen sein:
So kann das textile Ober- und/oder Abdeckmaterial 5 abschnittsweise, insbesondere randseitig, mit dem Gleit- und/oder Schutzmaterial 4 und/oder dem schaumstoffbasierten Flächenmaterial 3 und/oder der textilen Trägerschicht 2 und/oder dem Laminatmaterial 1a verbunden, insbesondere vernäht, verschweißt, vertackert, verklemmt und/oder verklebt, insbesondere vernäht, sein. Beispielsweise kann die insbesondere randseitige Verbindung mittels eines Kettel- und/oder Kederrands oder dergleichen erfolgen. Grundsätzlich ist jedoch eine flächige Verbindung des textilen Ober- und/oder Abdeckmaterials 5 mit dem Gleit- und/oder Schutzmaterial 4 möglich.

Weiterhin kann die textile Trägerschicht 2 des erfindungsgemäßen Verbundmaterials 1 in Form eines Gewebes; einer Maschenware, insbesondere eines Gewirkes oder Gestrickes; eines Geleges oder eines Textilverbundstoffs, insbesondere Vlies (Nonwoven); ausgebildet sein. Hierzu kann exemplarisch auch auf Fig. 3A und 3B verwiesen werden.

Insbesondere kann die textile Trägerschicht 2 in Form eines Gewebes, Gewirkes oder Gestrickes, bevorzugt in Form eines Gewebes, ausgebildet sein. Insbesondere kann die textile Trägerschicht 2, wie in Fig. 3A dargestellt, in Form Gewebes mit Garnsystemen 7, 8 mit einer Vielzahl von Schussfäden und/oder -garnen 7 und einer Vielzahl von Kettfäden und/oder -garnen 8 ausgebildet sein.

Insbesondere kann die textile Trägerschicht 2 mindestens ein wärmeschrumpfbares Kunststoffgarn aufweisen.

In diesem Zusammenhang kann, wie in Fig. 3A dargestellt, die textile Trägerschicht 2 des Verbundmaterials 1 nach der Erfindung in Form eines Gewebes ausgebildet sein, wobei das Gewebe zudem Wärmeschrumpfschussfäden und/oder -garne 7a und/oder Wärmeschrumpfkettfäden und/oder -garne 8a, vorzugsweise Wärmeschrumpfschussfäden und/oder -garne 7a oder Wärmeschrumpfkettfäden 8a, aufweist. In diesem Zusammenhang können die Wärmeschrumpfschussfäden und/oder -garne 7a und/oder die Wärmeschrumpfkettfäden und/oder -garne 8a, unabhängig voneinander, mindestens ein schrumpfbares, insbesondere wärmeschrumpfbares Kunststoffgarn aufweisen oder hieraus bestehen. Hierdurch kann das Schrumpfverhalten weiterführend eingestellt werden, insbesondere auch was die Schrumpfrichtung anbelangt. So kann die textile Trägerschicht 2 in eine Erstreckungsrichtung oder in beide Erstreckungsrichtungen wärmeschrumpfbar ausgebildet sein.

In diesem Zusammenhang kann es erfindungsgemäß insbesondere vorgesehen sein, dass in Schussrichtung der insbesondere als textiles Gewebe ausgebildeten textilen Trägerschicht 2 jeder zweite bis zehnte Schussfaden (Schussgarn) ein Wärmeschrumpfschussfaden bzw. -garn 7a ist bzw. dass in Kettrichtung der als textiles Gewebe ausgebildeten textilen Trägerschicht 2 jeder zweite bis zehnte Kettfaden (Kettgarn) ein Wärmeschrumpfkettfaden bzw. -garn 8a ist.

Insbesondere können die Schussfäden bzw. -garne 7 und/oder die Kettfäden bzw. -garne 8 und/oder die Wärmeschrumpfschussfäden bzw. -garne 7a und/oder Wärmeschrumpfkettfäden bzw. -garne 8a zum jeweils benachbarten und/oder hierzu im Wesentlichen parallel angeordneten Faden bzw. Garn um das 0,15fache bis 2,5fache, insbesondere um das 0,2fache bis 2fache, vorzugsweise um das 0,4fache bis 1,4fache, bevorzugt um das 0,6fache bis 0,9fache, des mittleren Faden- bzw. Garndurchmessers des jeweiligen Schussfadens bzw. -garns 7 und/oder Kettfadens bzw. -garns 8 und/oder Wärmeschrumpfschussfadens bzw. -garns 7a und/oder Wärmeschrumpfkettfadens bzw. -garns 8a, bezogen auf die nichtgeschrumpfte textile Trägerschicht 2, beabstandet sein. Hierdurch ist insbesondere gewährleistet, dass sich die einzelnen Garne beim Schrumpfvorgang nicht übereinanderschieben.

Insbesondere kann die als textiles Gewebe ausgebildete textile Trägerschicht 2 im nichtgeschrumpften Zustand eine Faser- bzw. Garndichte in Schussrichtung und/oder in Kettrichtung, unabhängig voneinander, im Bereich von 1 bis 100 Fäden/cm bzw. Garne/cm, insbesondere im Bereich von 2 bis 50 Fäden/cm bzw. Garne/cm, vorzugsweise im Bereich von 3 bis 30 Fäden/cm bzw. Garne/cm, aufweisen.

Zudem können die Schussfäden bzw. -garne 7 und/oder die Kettfäden bzw. -garne 8, unabhängig voneinander, mindestens ein von dem schrumpfbaren, insbesondere wärmeschrumpfbaren Garn verschiedenes, insbesondere textiles Garn bzw. entsprechende Fasern, insbesondere wie nachfolgend definiert, aufweisen oder hieraus bestehen.

Was die textile Trägerschicht 2 weiterhin anbelangt, so kann diese auch in Form einer Maschenware, insbesondere eines Gewirkes oder Gestrickes, vorzugsweise in Form eines Gewirkes ausgebildet sein. In diesem Zusammenhang kann die Maschenware, insbesondere das Gewirke oder Gestricke, vorzugsweise das Gewirke, eine Grundlegung, insbesondere ausgewählt aus der Gruppe von Franse, Trikot, Tuch, Satin, Samt und Atlas, aufweisen. In diesem Zusammenhang kann die Grundlegung mindestens ein wärmeschrumpfbares Kunststoffgarn aufweisen oder hieraus bestehen. Hierzu kann im Allgemeinen auch auf Fig. 3B verwiesen werden.

Zudem kann die Maschenware, insbesondere das Gewirke oder Gestricke, vorzugsweise das Gewirke, wie in Fig. 3B dargestellt, mindestens ein Bindungselement 9, insbesondere ausgewählt aus der Gruppe von Schuss, Teilschuss, Stehfaden bzw. -garn, Henkel und Flottung, aufweisen. Dabei kann die Maschenware bzw. können die Bindungselemente als solche mindestens ein von dem wärmeschrumpfbaren Garn verschiedenes, insbesondere textiles Garn, bzw. entsprechende Fasern insbesondere wie nachfolgend definiert, aufweisen oder hieraus bestehen.

Zudem kann die Maschenware, insbesondere das Gewirke oder Gestricke, vorzugsweise das Gewirke, wie in Fig. 3B dargestellt, mindestens ein Wärmeschrumpfbindungselement 9a, insbesondere ausgewählt aus der Gruppe von Wärmeschrumpfschuss, Wärmeschrumpfteilschuss, Wärmeschrumpfstehfaden bzw. -garn, Wärmeschrumpfhenkel und Wärmeschrumpfflottung, aufweisen, wobei das Wärmeschrumpfbindungselement wiederum mindestens ein wärmeschrumpfbares Kunststoffgarn aufweisen oder hieraus bestehen kann.

Im Allgemeinen kann es dabei vorgesehen sein, dass jedes zweite bis zehnte Bindungselement als Wärmeschrumpfbindungselement 9a ausgebildet ist und/oder mindestens ein wärmeschrumpfbares Kunststoffgarn aufweist oder hieraus besteht.

Insbesondere können die Bindungselemente bzw. die Wärmeschrumpfbindungselemente 9a zum jeweils benachbarten Bindungselement und/oder Wärmeschrumpfbindungselement 9a um das 0,1fache bis 5fache, insbesondere um das 0,2fache bis 4fache, vorzugsweise um das 0,4fache bis 2fache, bevorzugt um das 0,5fache bis 1fache, des mittleren Durchmessers des jeweiligen Bindungselements und/oder Wärmeschrumpfbindungselements, bezogen auf die nichtgeschrumpfte textile Trägerschicht 2, beabstandet sein.

Erfindungsgemäß kann es in Bezug auf das textile Verbundmaterial 1 nach der Erfindung vorgesehen sein, dass das wärmeschrumpfbare Kunststoffgarn einen insbesondere auf Phthalat basierenden Polyester, vorzugsweise Polyethylenterephthalat, Polypropylenterephthalat, Polybutylenterephthalat, vorzugsweise Polyethylenterephthalat, aufweist oder hieraus besteht.

Insbesondere kann die textile Trägerschicht 2 das wärmeschrumpfbare Kunststoffgarn in einer Menge im Bereich von 1,5 bis 55 Gew.-%, insbesondere im Bereich von 2 bis 40 Gew.-%, vorzugsweise im Bereich von 5 bis 30 Gew.-%, bevorzugt im Bereich von 6 bis 20 Gew.-%, besonders bevorzugt im Bereich von 7 bis 15 Gew.-%, ganz besonders bevorzugt im Bereich von 8 bis 10 Gew.-%, bezogen auf die textile Trägerschicht 2, enthalten.

Erfindungsgemäß kann es gleichermaßen vorgesehen sein, dass das wärmeschrumpfbare Kunststoffgarn einen Schrumpf, insbesondere Wärmeschrumpf, im Bereich von 2 % bis 75 %, insbesondere im Bereich von 5 % bis 60 %, vorzugsweise im Bereich von 10 % bis 50 %, bevorzugt im Bereich von 15 % bis 40 %, besonders bevorzugt im Bereich von 20 % bis 35 %, bzw. von mehr als 20 %, bezogen auf die Länge im nichtgeschrumpften Zustand und bei einer Temperatur von 140 °C bis 240 °C, insbesondere 160 °C bis 200 °C, vorzugsweise etwa 180 °C, aufweist.

Insbesondere kann das wärmeschrumpfbare Kunststoffgarn einen Wärmeschrumpf im Bereich von 2 % bis 40 %, insbesondere im Bereich von 3 % bis 30 %, vorzugsweise im Bereich von 4 % bis 30 %, bevorzugt im Bereich von 5 % bis 20 %, besonders bevorzugt im Bereich von 6 % bis 15 %, bzw. von mehr als 10 %, bezogen auf die Länge im nichtgeschrumpften Zustand und bei einer Temperatur von 60 °C bis 140 °C, insbesondere 80 °C bis 120 °C, vorzugsweise etwa 100 °C, aufweisen.

Im Rahmen der vorliegenden Erfindung kann das wärmeschrumpfbare Kunststoffgarn als Monofilament oder als Multifilament ausgebildet sein bzw. kann das wärmeschrumpfbare Kunststoffgarn als Fasergarn bzw. Stapelfasergarn ausgebildet sein. Dabei kann das wärmeschrumpfbare Stapelfasergarn ein wärmeschrumpfbares Kunststoffgarn und gegebenenfalls mindestens ein weiteres, nichtwärmeschrumpfbares Garn umfassen. Im Allgemeinen kommt erfindungsgemäß auch der Einsatz entsprechender wärmeschrumpfbarer Kunststofffäden in Betracht.

Im Allgemeinen kann das wärmeschrumpfbare Kunststoffgarn im nichtgeschrumpften Zustand einen Durchmesser im Bereich von 0,05 mm bis 1 mm, insbesondere im Bereich von 0,05 mm bis 0,8 mm, vorzugsweise im Bereich von 0,1 mm bis 0,6 mm, bevorzugt im Bereich von 0,15 mm bis 0,4 mm, aufweisen, insbesondere wobei das wärmeschrumpfbare Kunststoffgarn einen Titer im Bereich von 50 dtex bis 3.000 dtex, insbesondere im Bereich von 100 dtex bis 2.500 dtex, vorzugsweise im Bereich von 200 dtex bis 2.250 dtex, bevorzugt im Bereich von 300 dtex bis 2.000 dtex, besonders bevorzugt im Bereich von 300 dtex bis 1.600 dtex, aufweist.

Gleichermaßen kann das wärmeschrumpfbare Kunststoffgarn eine Feinheitsfestigkeit im Bereich von 10 cN/tex bis 120 cN/tex, insbesondere im Bereich von 20 cN/tex bis 100 cN/tex, vorzugsweise im Bereich von 30 cN/tex bis 80 cN/tex, bevorzugt im Bereich von 30 cN/tex bis 60 cN/tex, bei einer Temperatur von 10 °C bis 100 °C, insbesondere 10 °C bis 50 °C, vorzugsweise etwa 20 °C, aufweisen. Die Feinheitsfestigkeit kann insbesondere auf Basis der DIN 53 816 bzw. der DIN 53 834 (Teil 1 bis 3) bestimmt werden.

Schließlich kann das wärmeschrumpfbare Kunststoffgarn eine Bruchdehnung im Bereich von 2 % bis 50 %, insbesondere im Bereich von 5 % bis 40 %, vorzugsweise im Bereich von 10 % bis 30 %, bevorzugt im Bereich von 10 % bis 20 %, bei einer Temperatur von 10 bis 100 °C, insbesondere 10 bis 50 °C, vorzugsweise etwa 20 °C, aufweisen. Das wärmeschrumpfbare Kunststoffgarn kann eine Schrumpfkraft im Bereich von 100 cN bis 1.000 cN, insbesondere im Bereich von 200 cN bis 900 cN, vorzugsweise im Bereich von 300 cN bis 800 cN, bevorzugt im Bereich von 400 cN bis 600 cN, bei einer Temperatur von 140 °C bis 240 °C, insbesondere 160 °C bis 200 °C, vorzugsweise etwa 180 °C, aufweisen. Die Bruchdehnung kann insbesondere auf Basis der ISO 3341:2000-05 bestimmt werden.

Zudem kann das wärmeschrumpfbare Kunststoffgarn eine Schrumpfkraft im Bereich von 0,5 cN/tex bis 10 cN/tex, insbesondere im Bereich von 1 cN/tex bis 5 cN/tex, vorzugsweise im Bereich von 1,5 cN/tex bis 4 cN/tex, bevorzugt im Bereich von 2 cN/tex bis 3,5 cN/tex, bei einer Temperatur von 140 °C bis 240 °C, insbesondere 160 °C bis 200 °C, vorzugsweise etwa 180 °C, aufweisen.

Die Schrumpfkraft kann insbesondere auf Basis der DIN 53 866 (Teil 12), insbesondere bei einer Behandlungsdauer von 20 s bei Behandlung in Luft und einer Vorspannkraft von 1 cN ermittelt werden.

Erfindungsgemäß kann es bei dem Verbundmaterial 1 nach der Erfindung insbesondere vorgesehen sein, dass die wärmeschrumpfbare textile Trägerschicht 2 in mindestens eine Erstreckungsrichtung, insbesondere bezogen auf die Haupterstreckungsebene, wärmeschrumpfbar ausgebildet ist, vorzugsweise in beide Erstreckungsrichtungen des in Rede stehenden Materials. In diesem Zusammenhang kann es beispielsweise vorgesehen sein, dass für den Fall der Ausbildung der textilen Trägerschicht 2 in Form eines Gewebes nur Schussfäden bzw. -garne oder nur Kettfäden bzw. -garne als solche mit dem wärmeschrumpfbaren Kunststoffgarn ausgestattet sind (Schrumpffähigkeit in eine Erstreckungsrichtung) bzw. dass sowohl Schussfäden bzw. -garne als auch Kettfäden bzw. -garne das wärmeschrumpfbare Kunststoffgarn aufweisen (Schrumpffähigkeit in beide Erstreckungsrichtungen).

Durch den Einsatz eines speziellen wärmeschrumpfbaren Kunststoffgarns, wie zuvor definiert, wird eine definierte Schrumpfeigenschaft und darüber hinaus eine hohe Belastbarkeit des erfindungsgemäßen textilen Verbundmaterials 1 erreicht, so dass es auch hohen kraftmäßigen Beanspruchungen (z. B. "Hinsetzen" bei Verwendung als Sitzfläche) standhalten kann. Durch die spezifischen Schrumpfeigenschaften des wärmeschrumpfbaren Kunststoffgarns wird ein Schrumpfen der textilen Trägerschicht 2 des textilen Verbundmaterials 1 insgesamt ermöglicht, so dass auf diese Weise das textile Verbundmaterial 1 auf eine Trägerstruktur, beispielsweise einer Träger- bzw. Rahmenvorrichtung für eine Stuhlrückenlehne oder für eine Sitzfläche, aufgespannt bzw. hieran fixiert werden kann, wobei durch den Schrumpfungsprozess eine faltenfreie Bespannung unter gleichzeitiger Bereitstellung einer hohen Stabilität gewährleistet werden kann.

Erfindungsgemäß einsetzbare wärmeschrumpfbare Kunststoffgarne sind im Allgemeinen kommerziell erhältlich, beispielsweise von der Firma Tejin Ltd., Japan. Diesbezüglich kann beispielsweise das Monofilament Typ 940R erfindungsgemäß eingesetzt werden.

Was die textile Trägerschicht 2 weiterhin anbelangt, so sollte diese mindestens ein insbesondere von dem wärmeschrumpfbaren Kunststoffgarn verschiedenes Garn bzw. einen entsprechender Faden, insbesondere mit einem Titer im Bereich von 50 dtex bis 10.000 dtex, insbesondere im Bereich von 100 dtex bis 5.000 dtex, vorzugsweise im Bereich von 200 dtex bis 3.750 dtex, besonders bevorzugt im Bereich von 300 dtex bis 900 dtex, ganz besonders bevorzugt im Bereich von 400 dtex bis 800 dtex, aufweisen. Hierdurch können die textilen Eigenschaften der Trägerschicht 2 gezielt vorgegeben werden.

In diesem Zusammenhang kann es erfindungsgemäß vorgesehen sein, dass die textile Trägerschicht 2 mindestens ein insbesondere von dem wärmeschrumpfbaren Kunststoffgarn verschiedenes Garn bzw. entsprechende Fasern auf Basis einer Garn- und/oder Faserart, insbesondere Textilgarn und/oder -faser, aufweist. Dabei kann die Garn- und/oder Faserart natürliche Fasern bzw. natürliche Garne, vorzugsweise Wollfasern bzw. -garne oder Baumwollfasern bzw. -garne (CO), bevorzugt Wollfasern bzw. -garne, und/oder chemische Fasern bzw. -garne, vorzugsweise synthetische Fasern bzw. synthetische Garne, insbesondere ausgewählt aus der Gruppe von Polyestern (PES); Polyolefinen, insbesondere Polyethylen (PE) und/oder Polypropylen (PP); Polyvinylchlorid (CLF); Polyvinylidenchlorid (CLF); Acetat (CA); Triacetat (CTA); Polyacryl (PAN), Polyamid (PA), insbesondere aromatischen, vorzugsweise flammfesten Polyamiden; Polyvinylalkohol (PVAL); Polyurethanen; Polyvinylestern; (Meth-)Acrylaten; Polymilchsäuren (PLA); sowie deren Mischungen, vorzugsweise Polyamid (PA), umfassen oder hieraus bestehen.

Insbesondere kann die textile Trägerschicht 2 ein Flächengewicht im Bereich von 10 g/m² bis 1.000 g/m² , insbesondere im Bereich von 50 g/m² bis 750 g/m², bevorzugt im Bereich von 100 g/m² bis 500 g/m², aufweisen.

Was darüber hinaus das schaumstoffbasierte Flächenmaterial 3 des erfindungsgemäßen Verbundmaterials 1 anbelangt, so ist es erfindungsgemäß bevorzugt, wenn dieses in Form eines insbesondere thermoplastischen Schaumstoffs auf Basis von Polyolefinen oder Polyurethanen, vorzugsweise Polyurethanen, ausgebildet ist.

Insbesondere kann das schaumstoffbasierte Flächenmaterial 3 in Form eines geschlossenporigen bzw. geschlossenzelligen oder aber in Form eines offenporigen bzw. offenzelligen Schaumstoffs, vorzugsweise in Form eines geschlossenporigen und/oder geschlossenzelligen Schaumstoffs, ausgebildet sein.

Erfindungsgemäß kann es dabei vorzugsweise vorgesehen sein, dass das schaumstoffbasierte Flächenmaterial 3 in Form eines insbesondere geschlossenporigen und/oder geschlossenzelligen Polyurethan-Schaumstoffs ausgebildet ist.

Im Allgemeinen sollte das schaumstoffbasierte Flächenmaterial 3 eine Dicke im Bereich von 0,5 mm bis 100 mm, insbesondere im Bereich von 1 mm bis 80 mm, vorzugsweise im Bereich von 2 mm bis 50 mm, bevorzugt im Bereich von 3 mm bis 30 mm, besonders bevorzugt im Bereich von 5 mm bis 20 mm, aufweisen.

Darüber hinaus ist es erfindungsgemäß bevorzugt, wenn das schaumstoffbasierte Flächenmaterial 3 eine Rohdichte im Bereich von 1 kg/m³ bis 200 kg/m³, insbesondere im Bereich von 5 kg/m³ bis 150 kg/m³, vorzugsweise im Bereich von 10 kg/m³ bis 100 kg/m³, bevorzugt im Bereich von 15 kg/m³ bis 50 kg/m³, aufweist.

Darüber hinaus sollte das schaumstoffbasierte Flächenmaterial 3 eine Zugfestigkeit in Quer- und/oder Längsrichtung gemäß ISO 1926 im Bereich von 100 kPa bis 1.500 kPa, insbesondere im Bereich von 150 kPa bis 1.300 kPa, vorzugsweise im Bereich von 175 kPa bis 1.100 kPa, aufweisen. In diesem Zusammenhang sollte das schaumstoffbasierte Flächenmaterial 3 eine Zugfestigkeit in Quer- und/oder Längsrichtung gemäß ISO 1926 von mindestens 100 kPa, insbesondere mindestens 150 kPa, vorzugsweise mindestens 175 kPa, aufweisen.

Im Allgemeinen kann das schaumstoffbasierte Flächenmaterial 3 eine Bruchdehnung in Längs- bzw. Querrichtung im Bereich von 50 % bis 350 %, insbesondere im Bereich von 65 % bis 325 %, vorzugsweise im Bereich von 80 % bis 300 %, aufweisen. Die Bruchdehnung kann insbesondere auf Basis der ISO 1926 ermittelt werden.

Was die Stauchhärte gemäß ISO 844 des schaumstoffbasierten Flächenmaterials 3 anbelangt, so sollte diese bei einer Stauchung von 10 % mindestens 1 kPa, insbesondere mindestens 5 kPa, vorzugsweise mindestens 10 kPa, bei einer Stauchung von 25 % mindestens 15 kPa, insbesondere mindestens 20 kPa, vorzugsweise mindestens 25 kPa, bei einer Stauchung von 50 % mindestens 55 kPa, insbesondere mindestens 60 kPa, vorzugsweise mindestens 65 kPa, betragen. Was die Druckverformungsresistenz gemäß ISO 1856/C bei einer Belastung von 22 Stunden und einer Stauchung von 25 % bei 23 °C betrifft, so sollte schaumstoffbasierte Flächenmaterial 3 0,5 Stunden nach Entlastung eine Druckverformungsresistenz von höchstens 20 %, insbesondere höchstens 10 %, vorzugsweise höchstens 5 %, und 24 Stunden nach Entlastung einen Wert von höchstens 10 %, insbesondere höchstens 5 %, vorzugsweise höchstens 2 %, aufweisen. Schließlich sollte schaumstoffbasierte Flächenmaterial 3 einen µ-Wert gemäß ISO 1663 bei 0 % relativer Feuchte bis 85 % relativer Feuchte und 23 °C von 5.000 bis 20.000, insbesondere 5.500 bis 15.000, vorzugsweise 6.000 bis 15.000, aufweisen.

Durch die gezielte Auswahl des schaumstoffbasierten Flächenmaterials 3 resultieren insbesondere spezielle Polstereigenschaften in Bezug auf das textile Verbundmaterial 1, welche durch eine konkrete Auswahl der zuvor angeführten Merkmale individuell eingestellt bzw. im Hinblick auf den konkreten Anwendungs- bzw. Einsatzbereich maßgeschneidert werden können (z. B. Polsterhärte oder dergleichen). Auch diesbezüglich resultiert eine hohe Ergonomie bzw. ein hoher Sitzkomfort insbesondere bei der Verwendung des textilen Verbundmaterials 1 nach der Erfindung insbesondere für Rückenlehnen sowie Sitzelementen für Sitzmöbel oder dergleichen.

Was darüber hinaus das textile Gleit- bzw. Schutzmaterial 4 des erfindungsgemäßen Verbundmaterials 1 anbelangt, so kann es erfindungsgemäß vorgesehen sein, dass dieses in Form eines Gewebes; einer Maschenware, insbesondere eines Gewirkes oder Gestrickes; eines Geleges oder eines Textilverbundstoffs, insbesondere Vlies (Nonwoven); ausgebildet ist. Erfindungsgemäß ist es jedoch bevorzugt, wenn das textile Gleit- und/oder Schutzmaterial 4 in Form einer Maschenware, insbesondere eines Gewirkes oder Gestrickes, bevorzugt in Form eines Gestrickes, besonders bevorzugt in Form eines Rundstrickmaterials, ausgebildet ist.

Insbesondere kann das textile Gleit- und/oder Schutzmaterial 4 somit in Form eines Rundstrickmaterials ausgebildet sein. Erfindungsgemäß kommt auch der Einsatz eines sogenannten Charmeuse-Materials in Betracht.

Insbesondere kann das textile Gleit- und/oder Schutzmaterial 4 mindestens ein synthetisches Garn (Chemiegarn) bzw. entsprechende Fasern (Chemiefasern) aufweisen oder hieraus bestehen, insbesondere wobei das synthetisches Garn (Chemiegarn) bzw. die entsprechenden Fasern ausgewählt wird bzw. werden aus der Gruppe von Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacrylnitril (PAN); Polyamiden (PA); Polyvinylalkoholen (PVAL); Polyurethanen; Polyvinylestern; (Meth-)Acrylaten; sowie deren Mischungen; vorzugsweise Polyestern (PES).

Erfindungsgemäß kann es insbesondere vorgesehen sein, dass das textile Gleit- und/oder Schutzmaterial 4 ein Flächengewicht im Bereich von 10 g/m² bis 500 g/m², insbesondere im Bereich von 20 g/m² bis 400 g/m², bevorzugt im Bereich von 50 g/m² bis 300 g/m², aufweist.

Was darüber hinaus das textile Ober- bzw. Abdeckmaterial 5 des erfindungsgemäßen Verbundmaterials 1 anbelangt, so kann dieses erfindungsgemäß in Form eines Leders; Kunstleders; Gewebes; einer Maschenware, insbesondere eines Gewirkes oder Gestrickes; eines Geleges oder eines Textilverbundstoffs, insbesondere Vlies (Nonwoven); ausgebildet sein.

Insbesondere kann das textile Ober- und/oder Abdeckmaterial 5 in Form eines Gewebes, Gewirkes oder Gestrickes ausgebildet sein.

Erfindungsgemäß kann es dabei vorgesehen sein, dass das textile Ober- und/oder Abdeckmaterial 5 mindestens ein natürliches Garn (Naturgarn) bzw. entsprechende Fasern und/oder mindestens ein synthetisches Garn (Chemiegarn) bzw. entsprechende Fasern aufweist oder hieraus besteht, insbesondere wobei das Garn bzw. die entsprechenden Fasern ausgewählt wird bzw. werden aus der Gruppe von Wollfasern bzw. -garnen, Baumwollfasern bzw. -garnen (CO), Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacrylnitril (PAN); Polyamiden (PA); Polyvinylalkoholen (PVAL); Polyurethanen; Polyvinylestern; (Meth-)Acrylaten; sowie deren Mischungen.

Im Allgemeinen kann das textile Ober- und/oder Abdeckmaterial 5 ein Flächengewicht im Bereich von 15 g/m² bis 1.000 g/m², insbesondere im Bereich von 30 g/m² bis 800 g/m² , bevorzugt im Bereich von 60 g/m² bis 400 g/m², aufweisen.

Was das textile Ober- bzw. Abdeckmaterial 5 bzw. die textile Trägerschicht 2, unabhängig voneinander, vorzugsweise die textile Trägerschicht 2, weiterhin anbelangt, so können diese insbesondere in mindestens eine Erstreckungsrichtung des textilen Ober- und/oder Abdeckmaterials 5 und/oder der textilen Trägerschicht 2, vorzugsweise die textile Trägerschicht 2, elastisch und/oder insbesondere reversibel dehnfähig ausgebildet sein. In diesem Zusammenhang kann die Elastizität bzw. die insbesondere reversible Dehnfähigkeit 0,5 % bis 30 %, insbesondere 1 % bis 20 %, bevorzugt 1,5 % bis 10 %, bezogen auf die jeweilige Erstreckungsrichtung im nichtgedehnten Zustand, betragen.

Hierdurch wird zum einen eine gute Anpassung des textilen Ober- bzw. Abdeckmaterials 5 in Bezug auf die darunterliegenden Schichten, einhergehend mit einer Verringerung der Faltenbildung, gewährleistet. Zudem wird durch die definierte Elastizität bzw. reversible Dehnfähigkeit gewährleistet, dass das textile Verbundmaterial 1 nach der Erfindung insgesamt nach einer kraftmäßigen Beanspruchung in seine Ausgangsposition zurückgeführt wird, so dass ein dauerhaftes Ausbeulen des Materials verhindert wird.

Die zuvor angeführte Elastizität bzw. insbesondere reversible Dehnfähigkeit kann dabei durch den Einsatz von elastischen Garnen bereitgestellt werden:
So kann es erfindungsgemäß vorgesehen sein, dass das textile Ober- und/oder Abdeckmaterial 5 und/oder die textile Trägerschicht 2, unabhängig voneinander, vorzugsweise die textile Trägerschicht 2, das mindestens ein elastisches Garn (bzw. einen elastischen Faden) aufweisen.

In diesem Zusammenhang kann der Elastomerfaden bzw. das Elastomergarn mit mindestens einem Faden bzw. Garn, insbesondere mit zwei Fäden bzw. Garnen haftend verzwirnt sein.

Erfindungsgemäß kann es vorgesehen sein, dass das elastische Garn ein Elastomergarn, insbesondere Gummigarn, insbesondere mit einem Titer von 1 bis 10.000 dtex, insbesondere 1 bis 5.000 dtex, vorzugsweise 5 bis 4.000 dtex, besonders bevorzugt 10 bis 3.500 dtex, ganz besonders bevorzugt 20 bis 2.500 dtex, aufweist oder hieraus besteht. Dabei kann das Elastomergarn mit mindestens einem Faden und/oder Garn, insbesondere mit zwei Fäden und/oder Garnen, haftend verzwirnt sein.

Erfindungsgemäß kann es vorgesehen sein, dass das textile Ober- und/oder Abdeckmaterial 5 und/oder die textile Trägerschicht 2, unabhängig voneinander, vorzugsweise die textile Trägerschicht 2, das elastische Garn in einer Menge im Bereich von 1 Gew-% bis 20 Gew-%, vorzugsweise im Bereich von 2 Gew-% bis 15 Gew-%, bevorzugt im Bereich von 3 Gew-% bis 8 Gew-%, bezogen auf das textile Ober- und/oder Abdeckmaterial 5 und/oder die textile Trägerschicht 2, aufweisen.

Beispielsweise kann es sich bei dem elastischen Garn um Elastomer- oder Gummigarne handeln. Im Allgemeinen können diesbezüglich Elastomer- oder Gummifäden, -filamente oder dergleichen eingesetzt werden. Daher ist es erfindungsgemäß bevorzugt, wenn das textile Ober- bzw. Abdeckmaterial 5 und/oder die textile Trägerschicht 2, unabhängig voneinander, vorzugsweise die textile Trägerschicht 2, einen Elastomeren- und/oder Gummianteil (z. B. Gummi, Kautschuk, elastomere Polymere etc.), vorzugsweise in Form von Elastomer- oder Gummigarnen, aufweist. Im Allgemeinen können auch entsprechende Fäden eingesetzt werden. Als elastisches Garn bzw. als elastischer Faden kann insbesondere ein Garn bzw. Faden auf Basis mindestens eines thermoplastischen Elastomers (TPE) eingesetzt werden. Derartige TPE-Garne bzw. Fäden weisen im Allgemeinen neben ihren elastischen Eigenschaften auch insbesondere geringfügige (Wärme-)Schrumpfeigenschaften auf, so dass sich diese Materialien besonders für die textile Trägerschicht 2 eignen.

Im Allgemeinen kann das elastische Garn in Bezug auf das textile Ober- bzw. Abdeckmaterial 5 bzw. die textile Trägerschicht 2 beispielsweise in Form von Kett- und/oder Schussfäden bzw. -garnen eingearbeitet sein, insbesondere sofern die in Rede stehenden Materialien in Form eines Gewebes ausgebildet sind. Zudem kann das elastische Garn in Form von Bindungselementen, wie Schuss, Teilschuss, Stehfaden bzw. -garn, Henkel bzw. Flottung, vorliegen, insbesondere sofern es sich bei dem in Rede stehenden Material um eine Maschenware, insbesondere ein Gewirke oder Gestricke, handelt.

Im Allgemeinen kann erfindungsgemäß derart vorgegangen werden, dass das textile Ober- bzw. Abdeckmaterial 5 und/oder die textile Trägerschicht 2, unabhängig voneinander, vorzugsweise die textile Trägerschicht 2, in nur eine Erstreckungsrichtung elastisch bzw. reversibel dehnfähig ausgebildet werden (beispielsweise durch den Einsatz des elastischen Garns nur in Form von Schussfäden bzw. -garnen oder aber nur in Form von Kettfäden bzw. -garnen im Fall der Ausbildung der Materialien in Form eines Gewebes). In diesem Zusammenhang kann es in Bezug auf die wärmeschrumpfbare textile Trägerschicht 2 beispielsweise vorgesehen sein, dass nur diejenige Erstreckungsrichtung des Materials elastisch bzw. reversibel dehnfähig ausgebildet wird, welche nicht über das wärmeschrumpfbare Kunststoffgarn verfügt bzw. welche nicht wärmeschrumpfbar ausgebildet ist (beispielsweise Ausbildung nur von Schussfäden bzw. -garnen mit dem elastischen Garn und Ausbildung nur von Kettfäden bzw. -garnen mit dem wärmeschrumpfbaren Garn im Fall der Ausbildung des Materials als Gewebe). Gleichermaßen kann es vorgesehen sein, dass die textile Trägerschicht in beide Erstreckungsrichtungen elastisch bzw. reversibel dehnfähig ausgebildet ist.

In diesem Zusammenhang kann es grundsätzlich auch vorgesehen sein, dass auch die textile Gleit- bzw. Schutzschicht 4 insbesondere in mindestens eine Erstreckungsrichtung, insbesondere reversibel dehnfähig ausgebildet wird. Hierzu kann auf obige Ausführungen zu der textilen Trägerschicht 2 bzw. dem Ober- bzw. Abdeckmaterial 5 verwiesen werden sowie zu dem hierzu eingesetzten elastischen Garn verwiesen werden, welche für die Gleit- bzw. Schutzschicht 4 gleichermaßen gelten.

Gemäß einer alternativen Ausführungsform kann es erfindungsgemäß vorgesehen sein, dass das textile Ober- und/oder Abdeckmaterial 5 und/oder die textile Trägerschicht 2, bevorzugt das textile Ober- und/oder Abdeckmaterial 5, zumindest im Wesentlichen nicht dehnfähig bzw. zumindest im Wesentlichen nicht elastisch ist bzw. ausgebildet ist.

Erfindungsgemäß kann es bei dem erfindungsgemäßen textilen Verbundmaterial 1 insbesondere vorgesehen sein, dass die textile Trägerschicht 2 und/oder das textile Ober- bzw. Abdeckmaterial 5 und/oder das textile Gleit- und/oder Schutzmaterial 4, unabhängig voneinander, derart ausgebildet bzw. derart in dem textilen Verbundmaterial 1 angeordnet sind, dass die textile Trägerschicht 2 und/oder das textile Ober- und/oder Abdeckmaterial 5 und/oder das textile Gleit- und/oder Schutzmaterial 4 einerseits das schaumstoffbasierte Flächenmaterial 3 andererseits zumindest abschnittsweise randseitig überlappen bzw. überragen und/oder dass die textile Trägerschicht 2 und/oder das textile Ober- und/oder Abdeckmaterial 5 und/oder das textile Gleit- und/oder Schutzmaterial 4 einerseits sich über den Rand des schaumstoffbasierten Flächenmaterials 3 erstrecken.

Erfindungsgemäß kann es bei dem erfindungsgemäßen textilen Verbundmaterial 1 auch vorgesehen sein, dass das textile Ober- und/oder Abdeckmaterial 5 flächenmäßig kleiner ausgebildet ist als die textile Trägerschicht 2 und/oder das schaumstoffbasierte Flächenmaterial 3 und/oder das textile Gleit- und/oder Schutzmaterial 4 und/oder das Laminatmaterial 1a.

Insbesondere kann bzw. können die textile Trägerschicht 2 und/oder das schaumstoffbasierte Flächenmaterial 3 und/oder das textile Gleit- und/oder Schutzmaterial 4 und/oder das Laminatmaterial 1a einerseits das textile Ober- und/oder Abdeckmaterial 5 andererseits zumindest abschnittsweise randseitig überlappen bzw. überragen. Insbesondere kann die textile Trägerschicht 2 und/oder das schaumstoffbasierte Flächenmaterial 3 und/oder das textile Gleit- und/oder Schutzmaterial 4 einerseits sich über den Rand des textilen Ober- und/oder Abdeckmaterial 5 erstrecken.

Gleichermaßen kann es erfindungsgemäß vorgesehen sein, dass das textile Verbundmaterial 1, insbesondere die textile Trägerschicht 2 und/oder das textile Ober- und/oder Abdeckmaterial 5 und/oder das textile Gleit- und/oder Schutzmaterial 4 und gegebenenfalls das schaumstoffbasierte Flächenmaterial 3, randseitig und/oder an ihren jeweiligen Rändern zumindest abschnittsweise verbunden, insbesondere vernäht, verschweißt, vertackert, verklemmt und/oder verklebt, insbesondere vernäht, ist bzw. sind.

Insbesondere kann das textile Verbundmaterial 1 zumindest abschnittsweise randseitig eingefasst werden, insbesondere mittels eines Kettel- oder Kederrands oder dergleichen.

Erfindungsgemäß kann es zudem vorgesehen sein, dass das textile Verbundmaterial 1 zumindest abschnittsweise randseitig mit mindestens einer Aufnahme- und/oder Befestigungseinrichtung, insbesondere zur Aufnahme und/oder Befestigung eines Träger- und/oder Rahmenelements, beispielsweise für eine Rückenlehne oder ein Sitzelement im Fall von Sitzmöbeln, ausgerüstet ist.

Was das erfindungsgemäße textile Verbundmaterial 1 weiterhin anbelangt, so ist es erfindungsgemäß insbesondere vorgesehen, dass das schaumstoffbasierte Flächenmaterial 3, insbesondere Schaumstoffschicht, das textile Gleit- und/oder Schutzmaterial 4 und/oder das textile Ober- und/oder Abdeckmaterial 5, unabhängig voneinander zumindest im Wesentlichen nicht (wärme-)schrumpfbar ausgebildet sind, so dass der Schrumpf des Verbundmaterials 1 maßgeblich durch die textile Trägerschicht 2 hervorgerufen wird.

Erfindungsgemäß kann es weiterhin vorgesehen sein, dass textile Verbundmaterial 1, insbesondere die textile Trägerschicht 2, wärmegeschrumpft ist, und zwar insbesondere nach entsprechender Aufbringung bzw. Fixierung an einer diesbezüglichen Träger- und/oder Rahmenvorrichtung. Diesbezüglich kann der Wärmeschrumpf bei Temperaturen im Bereich von 60 °C bis 200 °C, insbesondere im Bereich von 80 °C bis 150 °C, vorzugsweise im Bereich von 90 °C bis 140 °C, bevorzugt im Bereich von 105 °C bis 125 °C, durchgeführt sein. Hierdurch kann eine insbesondere faltenfreie und unter (Eigen-)Spannung stehende Aufspannung bzw. Bespannung insbesondere der Träger- bzw. Rahmenvorrichtung, beispielsweise zur Verwendung als Rückenlehne bzw. Sitzelement, realisiert werden.

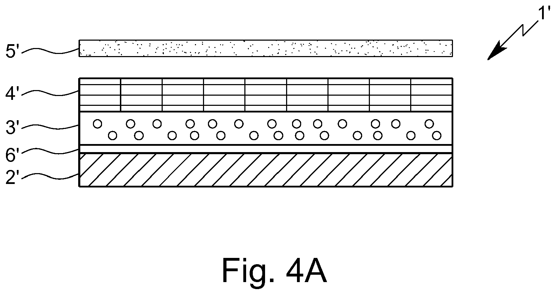

Darüber hinaus betrifft die vorliegende Erfindung - gemäß einem **dritten** Aspekt der vorliegenden Erfindung demnach auch ein wärmegeschrumpftes textiles Verbundmaterial 1', vorzugsweise in Form eines wärmegeschrumpften textilen Polster- und/oder Bespannungsmaterials, vorzugsweise für Sitzmöbel, wie es beispielhaft in Fig. 4A gezeigt ist, wobei das wärmegeschrumpfte textile Verbundmaterial 1' aufweist:
- mindestens eine wärmegeschrumpfte textile Trägerschicht 2';
- mindestens ein schaumstoffbasiertes Flächenmaterial 3', insbesondere Schaumstoffschicht, wobei das schaumstoffbasierte Flächenmaterial 3' mittels mindestens eines Bindemittels 6' mit der textilen Trägerschicht 2' verbunden, vorzugsweise flächig verbunden, insbesondere verklebt, ist, wobei die Verbindung, vorzugsweise flächige Verbindung, insbesondere Verklebung, bei einer Temperatur unterhalb der Wärmeschrumpftemperatur der wärmegeschrumpften textilen Trägerschicht 2' erfolgt ist; und
- mindestens ein insbesondere flächiges textiles Gleit- und/oder Schutzmaterial 4', wobei das textile Gleit- und/oder Schutzmaterial 4' auf der der wärmegeschrumpften textilen Trägerschicht 2' abgewandten Seite des schaumstoffbasierten Flächenmaterials 3' aufgebracht und/oder angeordnet ist.

Beispielsweise kann das wärmegeschrumpfte textile Verbundmaterial 1' aus dem zuvor beschriebenen nicht geschrumpften bzw. wärmeschrumpfbaren textilen Verbundmaterial 1 nach der Erfindung hergestellt sein bzw. erhalten werden. Diesbezüglich kann eine Schrumpf- bzw. Wärmebehandlung an dem textilen Verbundmaterial 1 zum Erhalt des wärmegeschrumpften textilen Verbundmaterials 1' durchgeführt worden sein. Die zugrundeliegende Wärmebehandlung wird hinsichtlich der Schrumpfbedingungen in Bezug auf Temperatur und Zeitdauer insbesondere derart ausgewählt, dass der gewünschte Schrumpf des textilen Verbundmaterials 1' erhalten wird. Der Fachmann ist jederzeit in der Lage, die entsprechenden Schrumpfbedingungen, beispielsweise in Bezug auf Schrumpftemperatur und Schrumpfdauer, im Hinblick auf den gewünschten bzw. einzustellenden Schrumpf- bzw. die erfindungsgemäß eingesetzten Materialien auszuwählen und abzustimmen. In diesem Zusammenhang kann das wärmegeschrumpfte textile Verbundmaterial 1' beispielsweise bei Temperaturen im Bereich von 60 °C bis 200 °C, insbesondere im Bereich von 80 °C bis 150 °C, vorzugsweise im Bereich von 90 °C bis 140 °C, bevorzugt im Bereich von 100 °C bis 130 °C, wärmegeschrumpft worden sein.

Diesbezüglich bezieht sich der Schrumpf insbesondere auf die textile Trägerschicht 2' des wärmegeschrumpften textilen Verbundmaterials 1'.

Was das wärmegeschrumpfte textile Verbundmaterial in diesem Zusammenhang anbelangt, so kann das wärmegeschrumpfte textile Verbundmaterial 1' mindestens ein textiles Ober- und/oder Abdeckmaterial 5' aufweisen. In diesem Zusammenhang kann das textile Ober- und/oder Abdeckmaterial 5' auf der dem schaumstoffbasierten Flächenmaterial 3' abgewandten Seite des textilen Gleit- und/oder Schutzmaterials 4' aufgebracht und/oder angeordnet sein.

Insbesondere kann die wärmegeschrumpfte textile Trägerschicht in Form eines Gewebes; einer Maschenware, insbesondere eines Gewirkes oder Gestrickes; eines Geleges oder eines Textilverbundstoffs, insbesondere Vlies (Nonwoven); ausgebildet sein.

Erfindungsgemäß ist es jedoch bevorzugt, wenn die wärmegeschrumpfte textile Trägerschicht 2' in Form eines Gewebes, Gewirkes oder Gestrickes, bevorzugt in Form eines Gewebes, ausgebildet ist.

Insbesondere kann die wärmegeschrumpfte textile Trägerschicht 2' mindestens ein wärmegeschrumpftes Kunststoffgarn aufweisen. Diesbezüglich kann auf die obigen Ausführungen gemäß den weiteren erfindungsgemäßen Aspekten zu dem wärmeschrumpfbaren Kunststoffgarn verwiesen werden.

Weiterhin kann es erfindungsgemäß vorgesehen sein, dass die wärmegeschrumpfte textile Trägerschicht 2' in Form eines Gewebes ausgebildet ist, wobei das Gewebe zudem wärmegeschrumpfte Wärmeschrumpfschussfäden bzw. -garne und/oder wärmegeschrumpfte Wärmeschrumpfkettfäden bzw. -garne, vorzugsweise wärmegeschrumpfte Wärmeschrumpfschussfäden bzw. -garne oder wärmegeschrumpfte Wärmeschrumpfkettfäden bzw. -garne, aufweist. Dabei können die Wärmeschrumpfschussfäden bzw. -garne und/oder die Wärmeschrumpfkettfäden bzw. -garne, unabhängig voneinander, mindestens ein wärmegeschrumpftes Kunststoffgarn aufweisen oder hieraus bestehen.

Insbesondere kann die wärmegeschrumpfte textile Trägerschicht 2' in Form einer Maschenware, insbesondere eines Gewirkes oder Gestrickes, vorzugsweise in Form eines Gewirkes, ausgebildet sein.

In diesem Zusammenhang kann die Maschenware, insbesondere das Gewirke oder Gestricke, vorzugsweise das Gewirke, eine Grundlegung, insbesondere ausgewählt aus der Gruppe von Franse, Trikot, Tuch, Satin, Samt und Atlas, aufweisen. Dabei kann die Grundlegung mindestens ein wärmegeschrumpftes Kunststoffgarn aufweisen oder hieraus bestehen.

Insbesondere kann die Maschenware, insbesondere das Gewirke oder Gestricke, vorzugsweise das Gewirke, mindestens ein Bindungselement, insbesondere ausgewählt aus der Gruppe von Schuss, Teilschuss, Stehfaden bzw. -garn, Henkel und Flottung, aufweisen.

Vorzugsweise kann die Maschenware, insbesondere das Gewirke oder Gestricke, vorzugsweise das Gewirke, zudem mindestens ein wärmegeschrumpftes Wärmeschrumpfbindungselement, insbesondere ausgewählt aus der Gruppe von Wärmeschrumpfschuss, Wärmeschrumpfteilschuss, Wärmeschrumpfstehfaden bzw. -garn, Wärmeschrumpfhenkel und Wärmeschrumpfflottung, aufweisen, wobei das wärmegeschrumpfte Wärmeschrumpfbindungselement mindestens ein wärmegeschrumpftes Kunststoffgarn aufweist oder hieraus besteht.

Für weitere Ausführungen auch zu den weiteren Bestandteilen bzw. Materialien des wärmegeschrumpften textilen Verbundmaterials 1' nach der Erfindung, insbesondere zu der textilen Trägerschicht 2' dem schaumstoffbasierten Flächenmaterial 3', dem eingesetzten Bindemittel 6', dem flächigen textilen Gleit- bzw. Schutzmaterial 4' sowie dem textilen Ober- bzw. Abdeckmaterial 5' kann auf obige Ausführungen zu dem wärmeschrumpfbaren textilen Verbundmaterial 1 nach der Erfindung sowie zu dem erfindungsgemäßen Verfahren mit den entsprechenden Ausführungen zu den korrespondierenden Schichten bzw. Materialien 2, 3, 4, 5 und 6 verwiesen werden, welche entsprechend gelten.

Was das wärmegeschrumpfte textile Verbundmaterial 1' nach der Erfindung weiterhin anbelangt, so kann es insbesondere vorgesehen sein, dass das wärmegeschrumpfte textile Verbundmaterial 1', vorzugsweise die wärmegeschrumpfte textile Trägerschicht 2', um 1 % bis 50 %, insbesondere 2 % bis 40 %, vorzugsweise 3 % bis 30 %, bevorzugt 4 % bis 20 %, besonders bevorzugt 5 % bis 15 %, ganz besonders bevorzugt 5 % bis 10 %, bezogen auf die jeweilige Erstreckungsrichtung und/oder bezogen auf die Länge und/oder Breite im nichtgeschrumpften Zustand (und somit insbesondere des textilen Verbundmaterials 1 und/oder der textilen Trägerschicht 2), geschrumpft ist.

Hinsichtlich des wärmegeschrumpften textilen Verbundmaterials 1' nach der Erfindung kann insbesondere auch eine Verdichtung insbesondere der wärmegeschrumpften textilen Trägerschicht 2' vorliegen (insbesondere durch Verdickung des wärmegeschrumpften Kunststoffgarns sowie Verringerung des Garnabstands). In diesem Zusammenhang können beispielsweise in Bezug auf die Ausbildung der textilen Trägerschicht 2' in Form eines geschrumpften Gewebes die jeweiligen Schussfäden bzw. -garne bzw. Kettfäden bzw. -garne zum jeweils benachbarten Faden bzw. Garn einen im Vergleich zu dem nichtgeschrumpften Zustand verringerten Abstand aufweisen.

Das Bindemittel 6', insbesondere Klebstoff, ist ein insbesondere bei Temperaturen von bis zu 100 °C, insbesondere von bis zu 140 °C, vorzugsweise von bis zu 180 °C, bevorzugt von bis zu 200 °C, besonders bevorzugt von bis zu 240 °C, temperaturstabiles Bindemittel, insbesondere Klebstoff. Hierdurch wird eine Delaminierung während des vorangehenden Wärmeschrumpfens verhindert.

Erfindungsgemäß kann die wärmegeschrumpfte textile Trägerschicht 2', insbesondere in Form eines Gewebes, einen Schiebewiderstand, insbesondere Nahtschiebewiderstand, insbesondere jeweils bezogen auf die Kettrichtung oder Schussrichtung und gemäß DIN 53868, von mindestens 60 N, insbesondere mindestens 110 N, vorzugsweise mindestens 160 N, bevorzugt mindestens 210 N, besonders bevorzugt mindestens 310 N, aufweisen.

Insbesondere kann die wärmegeschrumpfte textile Trägerschicht 2', insbesondere in Form eines Gewebes, eine Zugfestigkeit, vorzugsweise jeweils bezogen auf die Kettrichtung und/oder Schussrichtung und gemäß EN ISO 13934-1, von mindestens 310 N, insbesondere mindestens 410 N, vorzugsweise mindestens 610 N, bevorzugt mindestens 810 N, aufweisen.

Zudem kann die wärmegeschrumpfte textile Trägerschicht 2', insbesondere in Form eines Gewebes, eine Weiterreißfestigkeit, insbesondere bezogen auf die Schussrichtung und gemäß EN ISO 13937-3, von mindestens 355 N, insbesondere mindestens 45 N, vorzugsweise mindestens 65 N, bevorzugt mindestens 85 N, aufweisen.

Hierdurch können im Einsatz- bzw. Anwendungsfall hohe kraftmäßige Belastungen realisiert werden, beispielsweise sofern das wärmegeschrumpfte textile Verbundmaterial 1' zur Verwendung in einer Rückenlehne bzw. einem Sitzteil bzw. Sitzelement eingesetzt wird.

Insgesamt weist somit auch das wärmegeschrumpfte textile Verbundmaterial 1' hervorragende Eigenschaften auf, so dass es sich insbesondere auch für Anwendungen eignet, bei denen hohe kraftmäßige Belastungen bzw. Beanspruchungen auftreten, beispielsweise in der Möbelindustrie im Bereich von Sitzmöbeln oder dergleichen.

Ein weiterer Gegenstand der vorliegenden Erfindung - gemäß einem **vierten** Aspekt der vorliegenden Erfindung - ist die Verwendung des textilen Verbundmaterials 1 mit Wärmeschrumpfeigenschaften, wie zuvor definiert, zur Erzeugung bzw. Herstellung des zuvor definierten wärmegeschrumpften textilen Verbundmaterials 1' nach der Erfindung.

In diesem Zusammenhang kann zum Erhalt des wärmegeschrumpften textilen Verbundmaterials 1' nach der Erfindung das nichtgeschrumpfte textile Verbundmaterial 1 nach der Erfindung unter den bereits beschriebenen Wärmeschrumpfbedingungen, vorzugsweise nach Aufbringung (Aufspannen) bzw. Befestigung an bzw. auf eine Träger- bzw. Rahmenvorrichtung, wärmegeschrumpft werden.

Ein weiterer Gegenstand der vorliegenden Erfindung - gemäß einem **fünften** Aspekt der vorliegenden Erfindung - ist zudem das erfindungsgemäße Verfahren zur Herstellung des wärmegeschrumpften textilen Verbundmaterials 1' nach der Erfindung, wie zuvor definiert, wobei ein erfindungsgemäßes textiles Verbundmaterial 1, wie zuvor definiert, mit Wärmeschrumpfeigenschaften mittels Wärmebehandlung geschrumpft wird. Hinsichtlich weiterführender Ausführungen zu der durchzuführenden Wärmebehandlung kann auf obige Ausführungen verwiesen werden, welche entsprechend gelten.

Weiterhin betrifft die vorliegende Erfindung - gemäß einem **sechsten** Aspekt der vorliegenden Erfindung - die Verwendung des textilen Verbundmaterials 1 nach der Erfindung mit Wärmeschrumpfeigenschaften, wie zuvor definiert, bzw. des erfindungsgemäßen wärmegeschrumpften textilen Verbundmaterials 1', wie zuvor definiert, im Bereich der Möbelindustrie, Automobilindustrie und dergleichen.

Im Allgemeinen kann das erfindungsgemäße textile Verbundmaterial 1 bzw. 1' zu Zwecken einer Innengestaltung auch als Interieur bzw. als Interieurbestandteile sowie Zwecken einer Außengestaltung gewissermaßen als Exterieur bzw. Exterieurbestandteile eingesetzt werden. Beispielsweise eignet sich das erfindungsgemäße textile Verbundmaterial 1 bzw. 1' zur Herstellung bzw. Verwendung als Bespannung bzw. Polsterung von Träger- bzw. Rahmenvorrichtungen bzw. -konstruktionen, wie Trägerrahmen von insbesondere Sitzmöbeln oder dergleichen.

In diesem Zusammenhang betrifft die vorliegende Erfindung - gemäß einem **siebten** Aspekt der vorliegenden Erfindung - auch die Verwendung des erfindungsgemäßen textilen Verbundmaterials 1 mit Wärmeschrumpfeigenschaften, wie zuvor definiert, bzw. des erfindungsgemäßen wärmegeschrumpften textilen Verbundmaterials 1', wie zuvor definiert, zur Herstellung von Möbelelementen, insbesondere Sitzmöbelelementen, vorzugsweise Rückenlehnen und/oder Sitzteilen, dekorativen Elementen, Hohlraumkanälen, Automobilzubehör und dergleichen.

In diesem Zusammenhang ist erfindungsgemäß der Begriff "Sitzmöbel" sehr breit zu verstehen: So umfasst der Begriff "Sitzmöbel" insbesondere Sitzvorrichtungen bzw. Sitzelemente sämtlicher Art, wie beispielsweise Stühle, Liegestühle, Liegen, Sessel, Sofas, Bänke, Couchgarnituren, Hocker und dergleichen, wobei das Sitzmöbel insbesondere der Gestalt sein kann, dass es das erfindungsgemäße textile Verbundmaterial 1 bzw. 1' insbesondere in Form einer Bespannung mit Polstereigenschaften aufweist.

In diesem Zusammenhang besteht ein Konzept der vorliegenden Erfindung insbesondere darin, dass zunächst das wärmeschrumpfbare textile Verbundmaterial 1 nach der Erfindung im nicht geschrumpften Zustand an bzw. auf eine Träger- bzw. Rahmenkonstruktion fixiert bzw. aufgebracht bzw. aufgespannt wird, wobei der Träger insbesondere an den Randbereichen des textilen Verbundmaterials nach der Erfindung angeordnet wird, wobei das textile Verbundmaterial nach der Erfindung an dessen Rändern an der Träger- bzw. Rahmenvorrichtung befestigt bzw. fixiert werden kann. Bei der in Rede stehenden Träger- bzw. Rahmenvorrichtung kann es sich insbesondere um einen Rahmen oder dergleichen handeln, wie er insbesondere für Sitzmöbel zur Ausbildung einer (Rücken-)Lehne und/oder einer Sitzfläche verwendet wird. In diesem Zusammenhang kann es erfindungsgemäß vorgesehen sein, dass der Träger bzw. Rahmen derart ausgebildet ist, dass das erfindungsgemäße textile Verbundmaterial an sämtlichen Rändern an dem Träger fixiert wird. Gleichermaßen liegt es aber auch im Rahmen der vorliegenden Erfindung, wenn beispielsweise nur die sich jeweils gegenüberliegenden Ränder des erfindungsgemäßen textilen Verbundmaterials an der Träger- bzw. Rahmenvorrichtung befestigt werden. Durch den erfindungsgemäß vorgesehenen Wärmeschrumpf wird das erfindungsgemäße textile Verbundmaterial sozusagen auf die bzw. an der Träger- bzw. Rahmenvorrichtung aufgespannt, wobei durch die resultierenden Schrumpfkräfte etwaige Falten, Ausbeulungen oder dergleichen sozusagen glattgezogen werden.

Wiederum weiterer Gegenstand der vorliegenden Erfindung gemäß einem **achten** Aspekt der vorliegenden Erfindung - ist zudem das erfindungsgemäße Verfahren zur Herstellung von Möbelelementen, insbesondere Sitzmöbelelementen, vorzugsweise Rückenlehnen und/oder Sitzelementen, dekorativen Elementen, Hohlraumkanälen, Automobilzubehör und dergleichen, wobei ein textiles Verbundmaterial 1 mit Wärmeschrumpfeigenschaften, wie zuvor definiert, auf eine Träger- bzw. Rahmenvorrichtung aufgebracht bzw. fixiert und/oder insbesondere randseitig befestigt wird und nachfolgend das textile Verbundmaterial 1 zum Erhalt des wärmege-schrumpften textilen Verbundmaterials 1', wie zuvor definiert, wärmegeschrumpft wird. In diesem Zusammenhang resultiert insbesondere eine zumindest im wesentlichen faltenfreie und vorzugsweise unter (Eigen-)Spannung stehende und/oder reversibel dehnfähige Bespannung der Trägerstruktur mit dem wärmegeschrumpften textilen Verbundmaterial 1'.

Schließlich betrifft die vorliegende Erfindung - gemäß einem **neunten** Aspekt der vorliegenden Erfindung - auch Möbelelemente, insbesondere Sitzmöbelelemente, vorzugsweise Rückenlehnen und/oder Sitzteile bzw. Sitzelemente, dekorative Elemente, Hohlraumkanäle, Automobilzubehör und dergleichen, welche mindestens ein textiles Verbundmaterial 1 nach der Erfindung mit Wärmeschrumpfeigenschaften, wie zuvor definiert, bzw. mindestens ein wärmegeschrumpftes textiles Verbundmaterial 1' nach der Erfindung, wie zuvor definiert, aufweisen. Erfindungsgemäß wird somit insgesamt ein leistungsfähiges und flexibel anpassbares Konzept im Rahmen eines wärmeschrumpfbaren textilen Verbundmaterials bereitgestellt, welches sich aufgrund seiner Variabilität und Flexibilität für zahlreiche Anwendungen eignet, wie zuvor beschrieben.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

### Bezugszeichenliste:

- 1: textiles Verbundmaterial mit Wärmeschrumpfeigenschaften
- 1': wärmegeschrumpften textiles Verbundmaterial
- 1a: Laminatmaterial
- 2: wärmeschrumpfbare textile Trägerschicht
- 2': wärmegeschrumpfte textile Trägerschicht
- 3: schaumstoffbasiertes Flächenmaterial
- 3': schaumstoffbasiertes Flächenmaterial des wärmegeschrumpften textilen Verbundmaterials
- 4: textiles Gleit- und/oder Schutzmaterial
- 4': textiles Gleit- und/oder Schutzmaterial des wärmegeschrumpften textilen Verbundmaterials
- 5: textiles Ober- und/oder Abdeckmaterial
- 5': textiles Ober- und/oder Abdeckmaterial des wärmegeschrumpften textilen Verbundmaterials
- 6: Bindemittel
- 6': Bindemittel des wärmegeschrumpften textilen Verbundmaterials
- 7: Schussfaden bzw. -garn der textilen Trägerschicht
- 7a: Wärmeschrumpfschussfaden bzw. -garn der textilen Trägerschicht
- 8: Kettfaden bzw. -garn der textilen Trägerschicht
- 8a: Wärmeschrumpfkettfaden bzw. -garn der textilen Trägerschicht
- 9: Bindungselement der textilen Trägerschicht
- 9a: Wärmeschrumpfbindungselement der textilen Trägerschicht

## Patentansprüche

1. Verfahren zur Herstellung eines textilen Verbundmaterials (1) mit Wärmeschrumpfeigenschaften, vorzugsweise in Form eines wärmeschrumpfbaren textilen Polster- und/oder Bespannungsmaterials, vorzugsweise für Sitzmöbel,
wobei eine wärmeschrumpfbare textile Trägerschicht (2) mit mindestens einem schaumstoffbasierten Flächenmaterial (3), insbesondere Schaumstoffschicht, unter Verwendung mindestens eines Bindemittels (6), insbesondere Klebstoffs, bei einer Temperatur unterhalb der Wärmeschrumpftemperatur der textilen Trägerschicht (2) verbunden, vorzugsweise flächig verbunden, insbesondere verklebt, wird und
wobei das schaumstoffbasierte Flächenmaterial (3) auf der der textilen Trägerschicht (2) abgewandten Seite mit mindestens einem insbesondere flächigen textilen Gleit- und/oder Schutzmaterial (4) versehen wird.

2. Verfahren nach Anspruch 1,
wobei auf das Gleit- und/oder Schutzmaterial (4) mindestens ein textiles Ober- und/oder Abdeckmaterial (5) aufgebracht wird, insbesondere auf der dem schaumstoffbasierten Flächenmaterial (3) abgewandten Seite des textilen Gleit- und/oder Schutzmaterials (4), und/oder
wobei zunächst die textile Trägerschicht (2), das schaumstoffbasierte Flächenmaterial (3) und das textile Gleit- und/oder Schutzmaterial (4) insbesondere zur Ausbildung und/oder Bereitstellung eines Laminatmaterials (1a) miteinander verbunden, vorzugsweise flächig verbunden, insbesondere verklebt, werden, gegebenenfalls gefolgt von einer Ausrüstung und/oder Beaufschlagung mit dem textilen Ober- und/oder Abdeckmaterial (5), insbesondere zum Erhalt des Verbundmaterials (1), und/oder wobei zunächst das textile Gleit- und/oder Schutzmaterial (4) und das textile Ober- und/oder Abdeckmaterial (5) miteinander verbunden, insbesondere verklebt und/oder kaschiert, werden, und anschließend das mit dem Ober- und/oder Abdeckmaterial (5) versehene Gleit- und/oder Schutzmaterial (4), insbesondere auf der dem Ober- und/oder Abdeckmaterial (5) abgewandten Seite, mit dem schaumstoffbasierten Flächenmaterial (3) verbunden, vorzugsweise flächig verbunden, insbesondere verklebt und/oder kaschiert, wird.

3. Verfahren nach Anspruch 1 oder 2,
wobei zunächst das schaumstoffbasierte Flächenmaterial (3) und das textile Gleit- und/oder Schutzmaterial (4) miteinander verbunden, vorzugsweise flächig verbunden, insbesondere verklebt und/oder kaschiert, werden und anschließend das mit dem Gleit- und/oder Schutzmaterial (4) versehene schaumstoffbasierte Flächenmaterial (3) mit dem textilen Trägermaterial (2) verbunden, vorzugsweise flächig verbunden, insbesondere verklebt, wird, insbesondere auf der dem Gleit- und/oder Schutzmaterial (4) abgewandten Seite und/oder insbesondere zur Ausbildung und/oder Bereitstellung des Laminatmaterials (1a), oder
wobei zunächst das textile Trägermaterial (2) und das schaumstoffbasierte Flächenmaterial (3) miteinander verbunden, vorzugsweise flächig verbunden, insbesondere verklebt, werden und anschließend das mit dem textilen Trägermaterial (2) versehene schaumstoffbasierte Flächenmaterial (3) mit dem Gleit- und/oder Schutzmaterial (4) verbunden, vorzugsweise flächig verbunden, insbesondere verklebt und/oder insbesondere kaschiert, wird, insbesondere auf der dem textilen Trägermaterial (2) abgewandten Seite und/oder insbesondere zur Ausbildung und/oder Bereitstellung des Laminatmaterials (1a).

4. Verfahren nach einem der vorangehenden Ansprüche,
wobei als Bindemittel (6), insbesondere Klebstoff, ein unterhalb der Wärmeschrumpftemperatur der textilen Trägerschicht (2) Klebeverbindungen und/oder Haftkräfte ausbildender Klebstoff eingesetzt wird und/oder
wobei als Bindemittel (6), insbesondere Klebstoff, ein bei Temperaturen von höchstens 100 °C, insbesondere höchstens 80 °C, vorzugsweise höchstens 60 °C, bevorzugt höchstens 40 °C, Klebeverbindungen und/oder Haftkräfte ausbildender Klebstoff eingesetzt wird und/oder
wobei das Bindemittel (6), insbesondere Klebstoff, in einer Menge, insbesondere Auftragsmenge, im Bereich von 5 g/m² bis 200 g/m², insbesondere im Bereich von 10 g/m² bis 150 g/m², vorzugsweise im Bereich von 15 g/m² bis 100 g/m², bevorzugt im Bereich von 20 g/m² bis 80 g/m², eingesetzt wird und/oder auf das schaumstoffbasierte Flächenmaterial (3) und/oder die textile Trägerschicht (2), insbesondere auf das schaumstoffbasierte Flächenmaterial (3), aufgebracht wird und/oder wobei das Bindemittel (6), insbesondere Klebstoff, kontinuierlich oder diskontinuierlich, insbesondere kontinuierlich, auf das schaumstoffbasierte Flächenmaterial (3) und/oder die textile Trägerschicht (2), insbesondere auf das schaumstoffbasierte Flächenmaterial (3), aufgebracht wird und/oder
wobei das Gleit- und/oder Schutzmaterial (4) mit dem schaumstoffbasierten Flächenmaterial (3) verbunden, vorzugsweise flächig verbunden, insbesondere verklebt, wird, bevorzugt mittels Kaschieren, insbesondere Flammkaschieren, und/oder
wobei das textile Ober- und/oder Abdeckmaterial (5) zumindest im Wesentlichen lose und/oder zur Ausbildung eines losen Verbunds auf das Gleit- und/oder Schutzmaterial (4) und/oder das Laminatmaterial (1a) aufgebracht wird und/oder
wobei das textile Ober- und/oder Abdeckmaterial (5) abschnittsweise, insbesondere randseitig, mit dem Gleit- und/oder Schutzmaterial (4) und/oder dem Laminatmaterial (1a) verbunden, insbesondere vernäht, verschweißt, vertackert, verklemmt und/oder verklebt, insbesondere vernäht, wird, insbesondere wobei die Verbindung mittels eines Kettel- und/oder Kederrands oder dergleichen erfolgt.

5. Verfahren nach einem der vorangehenden Ansprüche,
wobei die textile Trägerschicht (2) in Form eines Gewebes; einer Maschenware, insbesondere eines Gewirkes oder Gestrickes; eines Geleges oder eines Textilverbundstoffs, insbesondere Vlies; eingesetzt und/oder ausgebildet wird und/oder wobei die textile Trägerschicht (2) mindestens ein wärmeschrumpfbares Kunststoffgarn aufweist und/oder
wobei das wärmeschrumpfbare Kunststoffgarn einen insbesondere auf Phthalat basierenden Polyester, vorzugsweise Polyethylenterephthalat, Polypropylenterephthalat, Polybutylenterephthalat, vorzugsweise Polyethylenterephthalat, aufweist oder hieraus besteht und/oder
wobei die textile Trägerschicht (2) das wärmeschrumpfbare Kunststoffgarn in einer Menge im Bereich von 1,5 Gew.-% bis 55 Gew.-%, insbesondere im Bereich von 2 Gew.-% bis 40 Gew.-%, vorzugsweise im Bereich von 5 Gew.-% bis 30 Gew.-%, bevorzugt im Bereich von 6 Gew.-% bis 20 Gew.-%, besonders bevorzugt im Bereich von 7 Gew.-% bis 15 Gew.-%, ganz besonders bevorzugt im Bereich von 8 Gew.-% bis 10 Gew.-%, bezogen auf die textile Trägerschicht (2), enthält und/oder wobei das wärmeschrumpfbare Kunststoffgarn einen Wärmeschrumpf im Bereich von 2 % bis 75 %, insbesondere im Bereich von 5 % bis 60 %, vorzugsweise im Bereich von 10 % bis 50 %, bevorzugt im Bereich von 15 % bis 40 %, besonders bevorzugt im Bereich von 20 % bis 35 %, und/oder von mehr als 20 %, bezogen auf die Länge im nichtgeschrumpften Zustand und bei einer Temperatur von 140 °C bis 240 °C, insbesondere 160 °C bis 200 °C, vorzugsweise etwa 180 °C, aufweist und/oder wobei das wärmeschrumpfbare Kunststoffgarn einen Wärmeschrumpf im Bereich von 2 % bis 40 %, insbesondere im Bereich von 3 % bis 30 %, vorzugsweise im Bereich von 4 % bis 30 %, bevorzugt im Bereich von 5 % bis 20 %, besonders bevorzugt im Bereich von 6 % bis 15 %, und/oder von mehr als 10 %, bezogen auf die Länge im nichtgeschrumpften Zustand und bei einer Temperatur von 60 °C bis 140 °C, insbesondere 80 °C bis 120 °C, vorzugsweise etwa 100 °C, aufweist und/oder
wobei das schaumstoffbasierte Flächenmaterial (3) in Form eines insbesondere thermoplastischen Schaumstoffs auf Basis von Polyolefinen oder Poly-urethanen, vorzugsweise Polyurethanen, eingesetzt und/oder ausgebildet wird und/oder
wobei das textile Gleit- und/oder Schutzmaterial (4) in Form eines Gewebes; einer Maschenware, insbesondere eines Gewirkes oder Gestrickes; eines Geleges oder eines Textilverbundstoffs, insbesondere Vlies; eingesetzt und/oder ausgebildet wird und/oder
wobei das textile Ober- und/oder Abdeckmaterial (5) in Form eines Leders; Kunstleders; Gewebes; einer Maschenware, insbesondere eines Gewirkes oder Gestrickes; eines Geleges oder eines Textilverbundstoffs, insbesondere Vlies; eingesetzt und/oder ausgebildet wird und/oder
wobei das schaumstoffbasierte Flächenmaterial (3), insbesondere Schaumstoffschicht, das textile Gleit- und/oder Schutzmaterial (4) und/oder das textile Ober- und/oder Abdeckmaterial (5) zumindest im Wesentlichen nicht wärmeschrumpfbar ausgebildet werden.

6. Textiles Verbundmaterial (1) mit Wärmeschrumpfeigenschaften, vorzugsweise in Form eines wärmeschrumpfbaren textilen Polster- und/oder Bespannungsmaterials, vorzugsweise für Sitzmöbel, hergestellt durch ein Verfahren nach einem der vorangehenden Ansprüche.

7. Textiles Verbundmaterial (1) mit Wärmeschrumpfeigenschaften, vorzugsweise in Form eines wärmeschrumpfbaren textilen Polster- und/oder Bespannungsmaterials, vorzugsweise für Sitzmöbel, insbesondere nach Anspruch 6,
wobei das textile Verbundmaterial (1) aufweist:
- mindestens eine wärmeschrumpfbare textile Trägerschicht (2);
- mindestens ein schaumstoffbasiertes Flächenmaterial (3), insbesondere Schaumstoffschicht, wobei das schaumstoffbasierte Flächenmaterial (3) mittels mindestens eines Bindemittels (6) mit der textilen Trägerschicht (2) verbunden, vorzugsweise flächig verbunden, insbesondere verklebt, ist, wobei die Verbindung, vorzugsweise flächige Verbindung, insbesondere Verklebung, bei einer Temperatur unterhalb der Wärmeschrumpftemperatur der textilen Trägerschicht (2) erfolgt ist; und
- mindestens ein insbesondere flächiges textiles Gleit- und/oder Schutzmaterial (4), wobei das textile Gleit- und/oder Schutzmaterial (4) auf der der textilen Trägerschicht (2) abgewandten Seite des schaumstoffbasierten Flächenmaterials (3) aufgebracht und/oder angeordnet ist.

8. Textiles Verbundmaterial nach Anspruch 7,
wobei das textile Verbundmaterial (1) mindestens ein textiles Ober- und/oder Abdeckmaterial (5) aufweist, insbesondere wobei das textile Ober- und/oder Abdeckmaterial (5) auf der dem schaumstoffbasierten Flächenmaterial (3) abgewandten Seite des textilen Gleit- und/oder Schutzmaterials (4) aufgebracht und/oder angeordnet ist, und/oder
wobei die textile Trägerschicht (2), das schaumstoffbasierte Flächenmaterial (3) und/oder das textile Gleit- und/oder Schutzmaterial (4) insbesondere zur Ausbildung und/oder Bereitstellung eines Laminatmaterials (1a) miteinander verbunden, vorzugsweise flächig verbunden, insbesondere verklebt, sind und/oder
wobei als Bindemittel (6), insbesondere Klebstoff, ein unterhalb der Wärmeschrumpftemperatur der textilen Trägerschicht (2) Klebeverbindungen und/oder Haftkräfte ausbildender Klebstoff eingesetzt ist und/oder
wobei als Bindemittel (6), insbesondere Klebstoff, ein bei Temperaturen von höchstens 100 °C, insbesondere höchstens 80 °C, vorzugsweise höchstens 60 °C, bevorzugt höchstens 40 °C, Klebeverbindungen und/oder Haftkräfte ausbildender Klebstoff eingesetzt ist und/oder
wobei die textile Trägerschicht (2) in Form eines Gewebes; einer Maschenware, insbesondere eines Gewirkes oder Gestrickes; eines Geleges oder eines Textilverbundstoffs, insbesondere Vlies; ausgebildet ist und/oder
wobei die textile Trägerschicht (2) mindestens ein wärmeschrumpfbares Kunststoffgarn aufweist und/oder
wobei das wärmeschrumpfbare Kunststoffgarn einen insbesondere auf Phthalat basierenden Polyester, vorzugsweise Polyethylenterephthalat, Polypropylenterephthalat, Polybutylenterephthalat, vorzugsweise Polyethylenterephthalat, aufweist oder hieraus besteht und/oder
wobei die textile Trägerschicht (2) das wärmeschrumpfbare Kunststoffgarn in einer Menge im Bereich von 1,5 bis 55 Gew.-%, insbesondere im Bereich von 2 Gew.-% bis 40 Gew.-%, vorzugsweise im Bereich von 5 Gew.-% bis 30 Gew.-%, bevorzugt im Bereich von 6 Gew.-% bis 20 Gew.-%, besonders bevorzugt im Bereich von 7 Gew.-% bis 15 Gew.-%, ganz besonders bevorzugt im Bereich von 8 Gew.-% bis 10 Gew.-%, bezogen auf die textile Trägerschicht (2), enthält und/oder
wobei das schaumstoffbasierte Flächenmaterial (3) in Form eines insbesondere thermoplastischen Schaumstoffs auf Basis von Polyolefinen oder Poly-urethanen, vorzugsweise Polyurethanen, ausgebildet ist und/oder
wobei das textile Gleit- und/oder Schutzmaterial (4) in Form eines Gewebes; einer Maschenware, insbesondere eines Gewirkes oder Gestrickes; eines Geleges oder eines Textilverbundstoffs, insbesondere Vlies; ausgebildet ist und/oder
wobei das textile Ober- und/oder Abdeckmaterial (5) in Form eines Leders; Kunstleders; Gewebes; einer Maschenware, insbesondere eines Gewirkes oder Gestrickes; eines Geleges oder eines Textilverbundstoffs, insbesondere Vlies; ausgebildet ist und/oder wobei das schaumstoffbasierte Flächenmaterial (3), insbesondere Schaumstoffschicht,
das textile Gleit- und/oder Schutzmaterial (4) und/oder das textile Ober- und/oder Abdeckmaterial (5), unabhängig voneinander zumindest im Wesentlichen nicht wärmeschrumpfbar ausgebildet sind.

9. Wärmegeschrumpftes textiles Verbundmaterial (1'), vorzugsweise in Form eines wärmegeschrumpften textilen Polster- und/oder Bespannungsmaterials, vorzugsweise für Sitzmöbel,
wobei das wärmegeschrumpfte textile Verbundmaterial (1') aufweist:
- mindestens eine wärmegeschrumpfte textile Trägerschicht (2');
- mindestens ein schaumstoffbasiertes Flächenmaterial (3'), insbesondere Schaumstoffschicht, wobei das schaumstoffbasierte Flächenmaterial (3') mittels mindestens eines Bindemittels (6') mit der textilen Trägerschicht (2') verbunden, vorzugsweise flächig verbunden, insbesondere verklebt, ist, wobei die Verbindung, vorzugsweise flächige Verbindung, insbesondere Verklebung, bei einer Temperatur unterhalb der Wärmeschrumpftemperatur der wärmegeschrumpften textilen Trägerschicht (2') erfolgt ist; und
- mindestens ein insbesondere flächiges textiles Gleit- und/oder Schutzmaterial (4'), wobei das textile Gleit- und/oder Schutzmaterial (4') auf der der wärmegeschrumpften textilen Trägerschicht (2') abgewandten Seite des schaumstoffbasierten Flächenmaterials (3') aufgebracht und/oder angeordnet ist.

10. Wärmegeschrumpftes textiles Verbundmaterial nach Anspruch 9,
wobei das wärmegeschrumpfte textile Verbundmaterial (1') erhältlich ist durch Wärmeschrumpfen eines wärmeschrumpfbaren textilen Verbundmaterials 1, wie in einem der Ansprüche 6 bis 8 definiert, und/oder
wobei das wärmegeschrumpfte textile Verbundmaterial (1') mindestens ein textiles Ober- und/oder Abdeckmaterial (5') aufweist, insbesondere wobei das textile Ober- und/oder Abdeckmaterial (5') auf der dem schaumstoffbasierten Flächenmaterial (3') abgewandten Seite des textilen Gleit- und/oder Schutzmaterials (4') aufgebracht und/oder angeordnet ist und/oder
wobei das wärmegeschrumpfte textile Verbundmaterial (1'), vorzugsweise die wärmegeschrumpfte textile Trägerschicht (2'), um 1 % bis 50 %, insbesondere 2 % bis 40 %, vorzugsweise 3 % bis 30 %, bevorzugt 4 % bis 20 %, besonders bevorzugt 5 % bis 15 %, ganz besonders bevorzugt 5 % bis 10 %, bezogen auf die jeweilige Erstreckungsrichtung und/oder bezogen auf die Länge und/oder Breite im nichtgeschrumpften Zustand insbesondere des textilen Verbundmaterial (1) und/oder der textilen Trägerschicht (2), geschrumpft ist.

11. Verwendung eines textilen Verbundmaterials (1) mit Wärmeschrumpfeigenschaften nach einem der Ansprüche 6 bis 8 zur Erzeugung eines wärmegeschrumpften textilen Verbundmaterials (1') nach Anspruch 9 oder 10.

12. Verfahren zur Herstellung eines wärmegeschrumpften textilen Verbundmaterials (1') nach Anspruch 9 oder 10, wobei ein textiles Verbundmaterial (1) mit Wärmeschrumpfeigenschaften nach einem der Ansprüche 6 bis 8 mittels Wärmebehandlung geschrumpft wird.

13. Verwendung eines textilen Verbundmaterials (1) mit Wärmeschrumpfeigenschaften nach einem der Ansprüche 6 bis 8 und/oder eines wärmegeschrumpften textilen Verbundmaterials (1') nach Anspruch 9 oder 10
im Bereich der Möbelindustrie, Automobilindustrie und dergleichen, insbesondere als Polster- und/oder Bespannungsmaterial für Sitzmöbel, vorzugsweise für Rückenlehnen und/oder Sitzelemente, und/oder
zur Herstellung von Möbelelementen, insbesondere Sitzmöbelelementen, vorzugsweise Rückenlehnen und/oder Sitzteilen, dekorativen Elementen, Hohlraumkanälen, Automobilzubehör und dergleichen.

14. Verfahren zur Herstellung von Möbelelementen, insbesondere Sitzmöbelelementen, vorzugsweise Rückenlehnen und/oder Sitzelementen, dekorativen Elementen, Hohlraumkanälen, Automobilzubehör und dergleichen, wobei ein textiles Verbundmaterial (1) mit Wärmeschrumpfeigenschaften nach einem der Ansprüche 6 bis 8 auf eine Träger- und/oder Rahmenvorrichtung aufgebracht und/oder insbesondere randseitig befestigt wird und nachfolgend das textile Verbundmaterial (1) zum Erhalt eines wärmegeschrumpften textilen Verbundmaterials (1'), wie in Anspruch 9 oder 10 definiert, wärmegeschrumpft wird, insbesondere so dass eine zumindest im wesentlichen faltenfreie und vorzugsweise unter Spannung stehende und/oder reversibel dehnfähige Bespannung der Trägerstruktur mit dem wärmegeschrumpften textilen Verbundmaterial (1') resultiert.

15. Möbelelemente, insbesondere Sitzmöbelelemente, vorzugsweise Rückenlehnen und/oder Sitzteile, dekorative Elemente, Hohlraumkanäle, Automobilzubehör und dergleichen, aufweisend mindestens ein textiles Verbundmaterial (1) mit Wärmeschrumpfeigenschaften nach einem der Ansprüche 6 bis 8 und/oder aufweisend mindestens ein wärmegeschrumpftes textiles Verbundmaterial (1') nach Anspruch 9 oder 10.

## Claims

1. A method for producing a textile composite material (1) having heat-shrink properties, preferably in the form of a heat-shrinkable textile upholstery and/or covering material, preferably for seating furniture,
wherein a heat-shrinkable textile carrier layer (2) having at least one foam-based planar material (3), in particular foam layer, using at least one binder (6), in particular adhesive, is connected, preferably connected in a planar manner, in particular adhesively bonded, at a temperature below the heat shrink temperature of the textile support layer (2), and
wherein the foam-based planar material (3) on the side facing away from the textile carrier layer (2) is provided with at least one in particular planar textile sliding and/or protective material (4).

2. The method according to claim 1,
wherein at least one textile upper and/or cover material (5) is applied to the sliding and/or protective material (4), in particular on the side of the textile sliding and/or protective material (4) facing away from the foam-based planar material (3), and/or
wherein first the textile carrier layer (2), the foam-based planar material (3) and the textile sliding and/or protective material (4) are connected, preferably connected in a planar manner, in particular adhesively bonded, to one another, in particular to form and/or provide a laminate material (1a), optionally followed by the textile upper and/or cover material (5) being fitted and/or applied, in particular to obtain the composite material (1), and/or
wherein first the textile sliding and/or protective material (4) and the textile upper and/or cover material (5) are connected, in particular adhesively bonded and/or laminated, to one another and then the sliding and/or protective material (4) provided with the upper and/or cover material (5), in particular on the side facing away from the upper and/or cover material (5), is connected, preferably connected in a planar manner, in particular adhesively bonded and/or laminated, to the foam-based planar material (3).

3. The method according to claim 1 or 2,
wherein first the foam-based planar material (3) and the textile sliding and/or protective material (4) are connected, preferably connected in a planar manner, in particular adhesively bonded and/or laminated, to one another and then the foam-based planar material (3) provided with the sliding and/or protective material (4) is connected, preferably connected in a planar manner, in particular adhesively bonded, to the textile carrier material (2), in particular on the side facing away from the sliding and/or protective material (4) and/or in particular to form and/or provide the laminate material (1a), or
wherein first the textile carrier material (2) and the foam-based planar material (3) are connected, preferably connected in a planar manner, in particular adhesively bonded, to one another and then the foam-based planar material (3) provided with the textile carrier material (2) is connected, preferably connected in a planar manner, in particular adhesively bonded and/or in particular laminated, to the sliding and/or protective material (4), in particular on the side facing away from the textile carrier material (2) and/or in particular for forming and/or providing the laminate material (1a).

4. The method according to one of the preceding claims,
wherein as the binder (6), in particular adhesive, an adhesive which forms adhesive bonds and/or adhesive forces below the heat shrink temperature of the textile carrier layer (2) is used and/or
wherein as the binder (6), in particular adhesive, an adhesive which forms adhesive bonds and/or adhesive forces at temperatures of at most 100 °C, in particular at most 80 °C, preferably at most 60 °C, advantageously at most 40 °C is used and/or
wherein the binder (6), in particular adhesive, is used in a quantity, in particular application amount, in the range of from 5 g/m² to 200 g/m², in particular in the range of from 10 g/m² to 150 g/m², preferably in the range of from 15 g/m² to 100 g/m², more preferably in the range of from 20 g/m² to 80 g/m² and/or is applied to the foam-based planar material (3) and/or the textile carrier layer (2), in particular to the foam-based planar material (3) and/or
wherein the binder (6), in particular adhesive, is applied continuously and discontinuously, in particular continuously, to the foam-based planar material (3) and/or the textile carrier layer (2), in particular to the foam-based planar material (3), and/or
wherein the sliding and/or protective material (4) is connected, preferably connected in a planar manner, in particular adhesively bonded, more preferably by means of laminating, in particular flame-bonding, to the foam-based planar material (3), and/or
wherein the textile upper and/or cover material (5) is applied, at least substantially loosely and/or to form a loose composite, to the sliding and/or protective material (4) and/or the laminate material (1a), and/or
wherein the textile upper and/or cover material (5) is connected, in particular sewn, welded, tacked, clamped and/or adhesively bonded, in particular sewn, in sections, in particular at the edge, to the sliding and/or protective material (4) and/or to the laminate material (1a), in particular wherein the connection takes place by means of a merrowed and/or beaded edge or the like.

5. The method according to one of the preceding claims,
wherein the textile carrier layer (2) is used and/or designed in the form of a woven fabric; a knitted fabric, in particular a weft-knitted fabric or warp-knitted fabric; a laid fabric or a composite fabric, in particular non-woven fabric; and/or
wherein the textile carrier layer (2) comprises at least one heat-shrinkable plastic yarn and/or
wherein the heat-shrinkable plastic yarn comprises or consists of an in particular phthalate-based polyester, preferably polyethylene terephthalate, polypropylene terephthalate, polybutylene terephthalate, preferably polyethylene terephthalate, and/or
wherein the textile carrier layer (2) contains the heat-shrinkable plastic yarn in a quantity in the range of from 1.5 wt% to 55 wt%, in particular in the range of from 2 wt% to 40 wt%, preferably in the range of from 5 wt% to 30 wt%, more preferably in the range of from 6 wt% to 20 wt%, particularly preferably in the range of from 7 wt% to 15 wt%, very particularly preferably in the range of from 8 wt% to 10 wt%, in relation to the textile carrier layer (2), and/or
wherein the heat-shrinkable plastic yarn has a heat shrinkage in the range of from 2 % to 75 %, in particular in the range of from 5 % to 60 %, preferably in the range of from 10 % to 50 %, more preferably in the range of from 15 % to 40 %, particularly preferably in the range of from 20 % to 35 %, and/or of more than 20 %, in relation to the length in the non-shrunk state and at a temperature of from 140 °C to 240 °C, in particular 160 °C to 200 °C, preferably about 180 °C, and/or
wherein the heat-shrinkable plastic yarn has a heat shrinkage in the range of from 2 % to 40 %, in particular in the range of from 3 % to 30 %, preferably in the range of from 4 % to 30 %, more preferably in the range of from 5 % to 20 %, particularly preferably in the range of from 6 % to 15 %, and/or of more than 10 %, in relation to the length in the non-shrunk state and at a temperature of 60 °C to 140 °C, in particular 80 °C to 120 °C, preferably about 100 °C, and/or
wherein the foam-based planar material (3) is used and/or designed in the form of an in particular thermoplastic foam based on polyolefins or polyurethanes, preferably polyurethanes, and/or
wherein the textile sliding and/or protective material (4) is used and/or designed in the form of a woven fabric; a knitted fabric, in particular weft-knitted fabric or warp-knitted fabric; a laid fabric or a composite fabric, in particular non-woven fabric; and/or
wherein the textile upper and/or cover material (5) is used and/or designed in the form of a leather; artificial leather; woven fabric; a knitted fabric, in particular a weft-knitted fabric or warp-knitted fabric; a laid fabric or a composite fabric, in particular non-woven fabric; and/or
wherein the foam-based planar material (3), in particular foam layer, the textile sliding and/or protective material (4) and/or the textile upper and/or cover material (5) are designed to be at least substantially not heat-shrinkable.

6. A textile composite material (1) having heat-shrinkable properties, preferably in the form of a heat-shrinkable textile upholstery and/or covering material, preferably for seating furniture, produced by a method according to any one of the preceding claims.

7. The textile composite material (1) having heat-shrink properties, preferably in the form of a heat-shrinkable textile upholstery and/or covering material, preferably for seating furniture, in particular according to claim 6,
wherein the textile composite material (1) comprises:
- at least one heat-shrinkable textile carrier layer (2);
- at least one foam-based planar material (3), in particular foam layer, wherein the foam-based planar material (3) is connected, preferably connected in a planar manner, in particular adhesively bonded, by means of at least one binder (6) to the textile carrier layer (2), wherein the connection, preferably planar connection, in particular adhesion, is carried out at a temperature below the heat shrink temperature of the textile carrier layer (2); and
- at least one in particular planar textile sliding and/or protective material (4), wherein the textile sliding and/or protective material (4) is applied and/or arranged on the side of the foam-based planar material (3) facing away from the textile carrier layer (2).

8. The textile composite material according to claim 7,
wherein the textile composite material (1) has at least one textile upper and/or cover material (5), in particular wherein the textile upper and/or cover material (5) is applied and/or arranged on the side of the textile sliding and/or protective material (4) facing away from the foam-based planar material (3), and/or
wherein the textile carrier layer (2), the foam-based planar material (3) and/or the textile sliding and/or protective material (4), are connected to one another, preferably connected in a planar manner, in particular adhesively bonded, in particular to form and/or provide a laminate material (1a), and/or
wherein as the binder (6), in particular adhesive, an adhesive which forms adhesive bonds and/or adhesive forces below the heat shrink temperature of the textile carrier layer (2) is used, and/or
wherein as the binder (6), in particular adhesive, an adhesive which forms adhesive bonds and/or adhesive forces at temperatures of at most 100 °C, in particular at most 80 °C, preferably at most 60 °C, more preferably at most 40 °C is used and/or
wherein the textile carrier layer (2) is designed in the form of a woven fabric; a knitted fabric, in particular a weft-knitted fabric or warp-knitted fabric; a laid fabric or a composite fabric, in particular non-woven fabric; and/or
wherein the textile carrier layer (2) comprises at least one heat-shrinkable plastic yarn and/or
wherein the heat-shrinkable plastic yarn comprises or consists of an in particular phthalate-based polyester, preferably polyethylene terephthalate, polypropylene terephthalate, polybutylene terephthalate, preferably polyethylene terephthalate, and/or
wherein the textile carrier layer (2) contains the heat-shrinkable plastic yarn in a quantity in the range of from 1.5 to 55 wt%, in particular in the range of from 2 wt% to 40 wt%, preferably in the range of from 5 wt% to 30 wt%, more preferably in the range of from 6 wt% to 20 wt%, particularly preferably in the range of from 7 wt% to 15 wt%, very particularly preferably in the range of from 8 wt% to 10 wt%, in relation to the textile carrier layer (2), and/or
wherein the foam-based planar material (3) is designed in the form of an in particular thermoplastic foam based on polyolefins or polyurethanes, preferably polyurethanes, and/or
wherein the textile sliding and/or protective material (4) is designed in the form of a woven fabric; a knitted fabric, in particular a weft-knitted fabric or warp-knitted fabric; a laid fabric or a composite fabric, in particular non-woven fabric; and/or
wherein the textile upper and/or cover material (5) is designed in the form of a leather; artificial leather; woven fabric; of a knitted fabric, in particular a weft-knitted fabric or warp-knitted fabric; a laid fabric or a composite fabric, in particular non-woven fabric; and/or
wherein the foam-based planar material (3), in particular foam layer, the textile sliding and/or protective material (4) and/or the textile upper and/or cover material (5) are designed to be at least substantially not heat-shrinkable independently of each other.

9. A heat-shrunk textile composite material (1'), preferably in the form of a heat-shrunk textile upholstery and/or covering material, preferably for seating furniture,
wherein the heat-shrunk textile composite material (1') comprises:
- at least one heat-shrunk textile carrier layer (2');
- at least one foam-based planar material (3'), in particular foam layer, wherein the foam-based planar material (3') is connected, preferably connected in a planar manner, in particular adhesively bonded, by means of at least one binder (6') to the textile carrier layer (2'), wherein the connection, preferably planar connection, in particular adhesion, is carried out at a temperature below the heat shrink temperature of the heat-shrunk textile carrier layer (2'); and
- at least one in particular planar textile sliding and/or protective material (4'), wherein the textile sliding and/or protective material (4') is applied and/or arranged on the side of the foam-based planar material (3') facing away from the heat-shrunk textile carrier layer (2').

10. The heat-shrunk textile composite material according to claim 9,
wherein the heat-shrunk textile composite material (1') is obtainable by heat-shrinking a heat-shrinkable textile composite material 1, as defined in any one of claims 6 to 8, and/or
wherein the heat-shrunk textile composite material (1') has at least one textile upper and/or cover material (5'), in particular wherein the textile upper and/or cover material (5') is applied and/or arranged on the side of the textile sliding and/or protective material (4') facing away from the foam-based planar material (3'), and/or
wherein the heat-shrunk textile composite material (1'), preferably the heat-shrunk textile carrier layer (2'), is shrunk by 1 % to 50 %, in particular 2 % to 40 %, preferably 3 % to 30 %, more preferably 4 % to 20 %, particularly preferably 5 % to 15 %, very particularly preferably 5 % to 10 %, in relation to the extension direction and/or in relation to the length and/or width in the non-shrunk state, in particular of the textile composite material (1) and/or of the textile carrier layer (2).

11. Use of a textile composite material (1) having heat-shrink properties according to any one of claims 6 to 8 for producing a heat-shrunk textile composite material (1') according to claim 9 or 10.

12. A method for producing a heat-shrunk textile composite material (1') according to claim 9 or 10, wherein a textile composite material (1) having heat-shrink properties according to any one of claims 6 to 8 is shrunk by means of heat treatment.

13. The use of a textile composite material (1) having heat-shrink properties according to any one of claims 6 to 8 and/or of a heat-shrunk textile composite material (1') according to claim 9 or 10
in the field of furniture industry, automotive industry and the like, in particular as upholstery and/or covering material for seating furniture, preferably for backrests and/or seat elements, and/or
for producing furniture elements, in particular seating furniture elements, preferably backrests and/or seat parts, decorative elements, cavity channels, automotive accessories and the like.

14. A method for producing furniture elements, in particular seating furniture elements, preferably backrests and/or seat elements, decorative elements, cavity channels, automotive accessories and the like, wherein a textile composite material (1) having heat-shrink properties according to any one of claims 6 to 8 is applied and/or fastened in particular at the edge to a carrier and/or frame device and then the textile composite material (1) is heat-shrunk to obtain a heat-shrunk textile composite material (1'), as defined in claim 9 or 10, in particular so that an at least substantially crease-free and preferably tensioned and/or reversibly stretchable covering of the carrier structure with the heat-shrunk textile composite material (1') results.

15. Furniture elements, in particular seating furniture elements, preferably backrests and/or seat parts, decorative elements, cavity channels, automotive accessories and the like, comprising at least one textile composite material (1) having heat-shrinkable properties according to one of claims 6 to 8 and/or comprising at least one heat-shrunk textile composite material (1') according to claim 9 or 10.

## Revendications

1. Procédé de fabrication d'un matériau composite textile (1) ayant des propriétés thermorétractables, de préférence sous la forme d'un matériau de rembourrage et/ou de recouvrement textile thermorétractable, de préférence pour des meubles d'assise,
dans lequel une couche de support textile thermorétractable (2) est reliée, de préférence reliée à plat, notamment collée, à au moins un matériau en feuille à base de mousse (3), en particulier une couche de mousse, en utilisant au moins un liant (6), en particulier un adhésif, à une température inférieure à la température de rétraction thermique de la couche de support textile (2) et
dans lequel le matériau en feuille à base de mousse (3) est pourvu sur la face opposée à la couche de support textile (2) d'au moins un matériau de glissement et/ou de protection textile (4) notamment plat.

2. Procédé selon la revendication 1,
dans lequel au moins un matériau de dessus et/ou de couverture textile (5) est appliqué sur le matériau de glissement et/ou de protection (4), en particulier sur la face du matériau de glissement et/ou de protection textile (4) opposée au matériau en feuille à base de mousse (3) et/ou
dans lequel d'abord la couche de support textile (2), le matériau en feuille à base de mousse (3) et le matériau de glissement et/ou de protection textile (4) sont reliés, de préférence reliés à plat, en particulier collés les uns aux autres, en particulier pour former et/ou fournir un matériau stratifié (1a), éventuellement suivi d'un équipement et/ou d'une association avec le matériau de dessus et/ou de couverture textile (5), en particulier pour obtenir le matériau composite (1) et/ou
dans lequel d'abord le matériau de glissement et/ou de protection textile (4) et le matériau de dessus et/ou de couverture textile (5) sont liés l'un à l'autre, en particulier collés et/ou laminés, puis le matériau de glissement et/ou de protection (4) pourvu du matériau de dessus et/ou de couverture (5), est relié, de préférence relié à plat, en particulier collé et/ou laminé, avec le matériau en feuille à base de mousse (3) en particulier sur la face opposée au matériau de dessus et/ou de couverture (5).

3. Procédé selon la revendication 1 ou 2,
dans lequel, d'abord, le matériau en feuille à base de mousse (3) et le matériau de glissement et/ou de protection textile (4) sont reliés l'un à l'autre, de préférence reliés à plat, en particulier collés et/ou laminés, puis le matériau en feuille à base de mousse (3) pourvu du matériau de glissement et/ou de protection (4) est relié, de préférence relié à plat, en particulier collé avec le matériau de support textile (2), en particulier sur la face opposée au matériau de glissement et/ou de protection (4) et/ou en particulier pour la formation et/ou la fourniture du matériau stratifié (1a) ou
dans lequel, d'abord, le matériau de support textile (2) et le matériau en feuille à base de mousse (3) sont reliés l'un à l'autre, de préférence reliés à plat, en particulier collés, puis le matériau en feuille à base de mousse (3) pourvu du matériau de support textile (2) est relié, de préférence relié à plat, en particulier collé et/ou en particulier laminé avec le matériau de glissement et/ou de protection (4), en particulier sur la face opposée au matériau de support textile (2) et/ou en particulier pour la formation et/ou la fourniture du matériau stratifié (1a).

4. Procédé selon l'une quelconque des revendications précédentes,
dans lequel, en tant que liant (6), en particulier adhésif, on utilise un adhésif formant des liaisons adhésives et/ou des forces adhésives en dessous de la température de rétraction thermique de la couche de support textile (2) et/ou
dans lequel, en tant que liant (6), en particulier adhésif, on utilise un adhésif formant des liaison adhésives et/ou des forces adhésives à des températures d'au plus 100 °C, en particulier d'au plus 80 °C, de préférence d'au plus 60 °C, préférablement d'au plus 40 °C et/ou
dans lequel le liant (6), en particulier adhésif, est utilisé en une quantité, notamment en une quantité appliquée, comprise dans la plage allant de 5 g/m² à 200 g/m², en particulier comprise dans la plage allant de 10 g/m² à 150 g/m², de préférence dans la plage allant de 15 g/m² à 100 g/m², préférablement dans la plage de 20 g/m² à 80 g/m² et/ou est appliqué sur le matériau en feuille à base de mousse (3) et/ou la couche de support textile (2), en particulier sur le matériau en feuille à base de mousse (3) et/ou
dans lequel le liant (6), en particulier adhésif, est appliqué de manière continue ou discontinue, en particulier continue, sur le matériau en feuille à base de mousse (3) et/ou la couche de support textile (2), en particulier sur le matériau en feuille à base de mousse (3) et/ou
dans lequel le matériau de glissement et/ou de protection (4) est relié, de préférence relié à plat, en particulier collé avec le matériau en feuille à base de mousse (3), de préférence par lamination, en particulier par contrecollage à la flamme et/ou
dans lequel le matériau de dessus et/ou de couverture textile (5) est appliqué au moins sensiblement de manière lâche et/ou pour la formation d'un composite lâche sur le matériau de glissement et/ou de protection (4) et/ou le matériau stratifié (1a) et/ou
dans lequel le matériau de dessus et/ou de couverture textile (5) est relié, en particulier cousu, soudé, agrafé, serré et/ou collé, en particulier cousu, par sections, en particulier côté bord, avec le matériau de glissement et/ou de protection (4) et/ou le matériau stratifié (1a), en particulier dans lequel la liaison est réalisée au moyen d'un bord à bourrelet et/ou de lien ou analogue.

5. Procédé selon l'une quelconque des revendications précédentes,
dans lequel la couche de support textile (2) est utilisée et/ou conçue sous la forme d'un tissu ; un tricot, en particulier un tissu tricoté ou en maille ; un tissu tissé ou un composite textile, en particulier un non tissé ; et/ou
dans lequel la couche de support textile (2) présente au moins un fil de matière plastique thermorétractable et/ou
dans lequel le fil de matière plastique thermorétractable comprend ou est constitué d'un polyester notamment à base de phtalate, de préférence un téréphtalate de polyéthylène, un téréphtalate de polypropylène, un téréphtalate de polybutylène, de préférence un téréphtalate de polyéthylène et/ou
dans lequel la couche de support textile (2) contient le fil de matière plastique thermorétractable en une quantité dans la plage de 1,5 % en poids à 55 % en poids, en particulier dans la plage de 2 % en poids à 40 % en poids, de préférence dans la plage de 5 % en poids à 30 % en poids, préférablement dans la plage de 6 % en poids à 20 % en poids, de manière particulièrement préférée dans la plage de 7 % en poids à 15 % en poids, le plus préférablement dans la plage de 8 % à 10 % en poids par rapport à la couche de support textile (2) et/ou
dans lequel le fil de matière plastique thermorétractable présente un retrait thermique compris dans la plage de 2 % à 75 %, en particulier dans la plage de 5 % à 60 %, de préférence dans la plage de 10 % à 50 %, préférablement dans la plage de 15 % à 40 %, de manière particulièrement préférable dans la plage de 20 % à 35 % et/ou de plus de 20 %, par rapport à la longueur à l'état non rétracté et à une température de 140 °C à 240 °C, en particulier de 160 °C à 200 °C, de préférence d'environ 180 °C et/ou
dans lequel le fil de matière plastique thermorétractable présente un retrait thermique compris dans la plage de 2 % à 40 %, en particulier dans la plage de 3 % à 30 %, de préférence dans la plage de 4 % à 30 %, préférablement dans la plage de 5 % à 20 %, de manière particulièrement préférable dans la plage de 6 % à 15 % et/ou de plus de 10 %, par rapport à la longueur à l'état non rétracté et à une température de 60 °C à 140 °C, en particulier de 80 °C à 120 °C, de préférence d'environ 100 °C et/ou
dans lequel le matériau en feuille à base de mousse (3) est utilisé ou conçu sous la forme d'une mousse en particulier thermoplastique à base de polyoléfines ou de polyuréthanes, de préférence de polyuréthanes et/ou
dans lequel le matériau de glissement et/ou de protection textile (4) est utilisé et/ou conçu sous la forme d'un tissu ; d'un tricot, en particulier d'un tissu tricoté ou en maille ; un tissu tissé ou un composite textile, en particulier un non tissé ; et/ou
dans lequel le matériau de dessus et/ou de couverture textile (5) est utilisé et/ou conçu sous la forme d'un cuir ; un similicuir ; un tissu ; un tricot, en particulier un tissu tricoté ou en maille ; un tissu tissé ou un composite textile, en particulier un non tissé ; et/ou
dans lequel le matériau en feuille à base de mousse (3), en particulier la couche de mousse, le matériau de glissement et/ou de protection textile (4) et/ou le matériau de dessus et/ou de couverture textile (5) sont conçus pour être au moins sensiblement non thermorétractables.

6. Matériau composite textile (1) ayant des propriétés thermorétractables, de préférence sous la forme d'un matériau de rembourrage et/ou de recouvrement textile thermorétractable, de préférence pour un meuble d'assise, produit par un procédé selon l'une quelconque des revendications précédentes.

7. Matériau composite textile (1) ayant des propriétés thermorétractables, de préférence sous la forme d'un matériau de rembourrage et/ou de recouvrement textile thermorétractable, de préférence pour un meuble d'assise, en particulier selon la revendication 6,
dans lequel le matériau composite textile (1) comprend :
- au moins une couche de support textile thermorétractable (2) ;
- au moins un matériau en feuille à base de mousse (3), en particulier une couche de mousse, dans lequel le matériau en feuille à base de mousse (3) est relié, de préférence relié à plat, en particulier collé, au moyen d'au moins un liant (6) avec la couche de support textile (2), dans lequel la liaison, de préférence une liaison à plat, en particulier le collage, est effectuée à une température inférieure à la température de rétraction thermique de la couche de support textile (2) ; et
- au moins un matériau de glissement et/ou de protection textile (4) en particulier plat, dans lequel le matériau de glissement et/ou de protection textile (4) est appliqué et/ou disposé sur la face du matériau en feuille à base de mousse (3) opposée à la couche de support textile (2).

8. Matériau composite textile selon la revendication 7,
dans lequel le matériau composite textile (1) présente au moins un matériau de dessus et/ou de couverture textile (5), en particulier dans lequel le matériau de dessus et/ou de couverture textile (5) est appliqué et/ou disposé sur la face du matériau de glissement et/ou de protection textile (4) opposée au matériau en feuille à base de mousse (3) et/ou
dans lequel la couche de support textile (2), le matériau en feuille à base de mousse (3) et/ou le matériau de glissement et/ou de protection textile (4) sont reliés l'un à l'autre, de préférence reliés à plat, en particulier collés, notamment pour former et/ou fournir un matériau stratifié (1a) et/ou
dans lequel, en tant que liant (6), en particulier adhésif, on utilise un adhésif formant des liaisons adhésives et/ou des forces adhésives en dessous de la température de rétraction thermique de la couche de support textile (2) et/ou
dans lequel, en tant que liant (6), en particulier adhésif, on utilise un adhésif formant des liaison adhésives et/ou des forces adhésives à des températures d'au plus 100 °C, en particulier d'au plus 80 °C, de préférence d'au plus 60 °C, préférablement d'au plus 40 °C et/ou
dans lequel la couche de support textile (2) est conçue sous la forme d'un tissu ; un tricot, en particulier un tissu tricoté ou en maille ; un tissu tissé ou un composite textile, en particulier un non tissé ; et/ou
dans lequel la couche de support textile (2) présente au moins un fil de matière plastique thermorétractable et/ou
dans lequel le fil de matière plastique thermorétractable comprend ou est constitué d'un polyester notamment à base de phtalate, de préférence un téréphtalate de polyéthylène, un téréphtalate de polypropylène, un téréphtalate de polybutylène, de préférence un téréphtalate de polyéthylène et/ou
dans lequel la couche de support textile (2) contient le fil de matière plastique thermorétractable en une quantité dans la plage de 1,5 à 55 % en poids, en particulier dans la plage de 2 % en poids à 40 % en poids, de préférence dans la plage de 5 % en poids à 30 % en poids, préférablement dans la plage de 6 % en poids à 20 % en poids, de manière particulièrement préférée dans la plage de 7 % en poids à 15 % en poids, le plus préférablement dans la plage de 8 % à 10 % en poids par rapport à la couche de support textile (2) et/ou
dans lequel le matériau en feuille à base de mousse (3) est conçu sous la forme d'une mousse en particulier thermoplastique à base de polyoléfines ou de polyuréthanes, de préférence de polyuréthanes et/ou
dans lequel le matériau de glissement et/ou de protection textile (4) est conçu sous la forme d'un tissu ; un tricot, en particulier un tissu tricoté ou en maille ; un tissu tissé ou un composite textile, en particulier un non tissé ; et/ou
dans lequel le matériau de dessus et/ou de couverture textile (5) est conçu sous la forme d'un cuir ; un similicuir ; un tissu ; un tricot, en particulier un tissu tricoté ou en maille ; un tissu tissé ou un composite textile, en particulier un non tissé ; et/ou
dans lequel le matériau en feuille à base de mousse (3), en particulier la couche de mousse, le matériau de glissement et/ou de protection textile (4) et/ou le matériau de dessus et/ou de couverture textile (5) sont conçus, indépendamment les uns des autres, pour être au moins sensiblement non thermorétractables.

9. Matériau composite textile thermorétractable (1'), de préférence sous la forme d'un matériau de rembourrage et/ou de recouvrement textile thermorétracté, de préférence pour des meubles d'assise,
dans lequel le matériau composite textile thermorétracté (1') comprend :
- au moins une couche de support textile thermorétracté (2') ;
- au moins un matériau en feuille à base de mousse (3'), en particulier une couche de mousse, dans lequel le matériau en feuille à base de mousse (3') est relié, de préférence relié à plat, en particulier collé, au moyen d'au moins un liant (6') avec la couche de support textile (2'), dans lequel la liaison, de préférence une liaison à plat, en particulier le collage, est effectuée à une température inférieure à la température de rétraction thermique de la couche de support textile thermorétracté (2') ; et
- au moins un matériau de glissement et/ou de protection textile (4'), en particulier plat, dans lequel le matériau de glissement et/ou de protection textile (4') est appliqué et/ou disposé sur la face du matériau en feuille à base de mousse (3') opposée à la couche de support textile thermorétracté (2').

10. Matériau composite textile thermorétracté selon la revendication 9,
dans lequel le matériau composite textile thermorétracté (1') peut être obtenu par rétraction thermique d'un matériau composite textile thermorétractable 1 tel que défini dans l'une quelconque des revendications 6 à 8 et/ou
dans lequel le matériau composite textile thermorétracté (1') présente au moins un matériau de dessus et/ou de couverture textile (5') en particulier dans lequel le matériau de dessus et/ou de couverture textile (5') est appliqué et/ou disposé sur la face du matériau de glissement et/ou de protection textile (4') opposée au matériau en feuille à base de mousse (3') et/ou
dans lequel le matériau composite textile thermorétracté (1'), de préférence la couche de support textile thermorétracté (2'), est rétracté de 1 % à 50 %, en particulier de 2 % à 40 %, de préférence de 3 % à 30 %, préférablement de 4 % à 20 %, de manière particulièrement préférée de 5 % à 15 %, de manière tout particulièrement préférée de 5 % à 10 %, par rapport au sens d'extension respectif et/ou par rapport à la longueur et/ou à la largeur à l'état non rétracté, en particulier du matériau composite textile (1) et/ou de la couche de support textile (2).

11. Utilisation d'un matériau composite textile (1) ayant des propriétés thermorétractables selon l'une quelconque des revendications 6 à 8 pour la fabrication d'un matériau composite textile thermorétracté (1') selon la revendication 9 ou 10.

12. Procédé de production d'un matériau composite textile thermorétracté (1') selon la revendication 9 ou 10, dans lequel un matériau composite textile (1) ayant des propriétés thermorétractables selon l'une quelconque des revendications 6 à 8 est rétracté par traitement thermique.

13. Utilisation d'un matériau composite textile (1) ayant des propriétés thermorétractables selon l'une quelconque des revendications 6 à 8 et/ou d'un matériau composite textile thermorétracté (1') selon la revendication 9 ou 10
dans les domaines de l'industrie du meuble, de l'industrie automobile et analogues, en particulier en tant que matériau de rembourrage et/ou de recouvrement pour des meubles d'assise, de préférence pour les dossiers et/ou les éléments de siège et/ou
pour la fabrication d'éléments de mobilier, en particulier d'éléments de meubles d'assise, de préférence de dossiers et/ou de pièces de siège, d'éléments de décoration, de canaux creux, d'accessoires automobiles et analogues.

14. Procédé de fabrication d'éléments de mobilier, en particulier d'éléments de meubles d'assise, de préférence de dossiers et/ou d'éléments de siège, d'éléments de décoration, de canaux creux, d'accessoires automobiles et analogues, dans lequel un matériau composite textile (1) ayant des propriétés thermorétractables selon l'une quelconque des revendications 6 à 8 est appliqué et/ou en particulier fixé sur le bord sur un dispositif de support et/ou de cadre et ensuite le matériau composite textile (1) est thermorétracté pour obtenir un matériau composite textile thermorétracté (1'), tel que défini dans les revendications 9 ou 10, en particulier de sorte qu'il en résulte un recouvrement au moins sensiblement sans plis et de préférence placé sous tension et/ou étirable de manière réversible de la structure de support avec le matériau composite textile thermorétracté (1').

15. Éléments de mobilier, en particulier éléments de meubles d'assise, de préférence dossiers et/ou pièces de siège, éléments de décoration, canaux creux, accessoires automobiles et analogues, comprenant au moins un matériau composite textile (1) ayant des propriétés thermorétractables selon l'une quelconque des revendications 6 à 8 et/ou comprenant au moins un matériau composite textile thermorétracté (1') selon la revendication 9 ou 10.
